Europäisches Patentamt

European Patent Office

Office européen des brevets

(19)

(11) **EP 1 427 216 A1**

## (12) EUROPEAN PATENT APPLICATION
published in accordance with Art. 158(3) EPC

(43) Date of publication:
**09.06.2004 Bulletin 2004/24**

(21) Application number: **03733318.4**

(22) Date of filing: **09.06.2003**

(51) Int Cl.7: **H04N 7/32**, H03M 7/36

(86) International application number:
**PCT/JP2003/007242**

(87) International publication number:
**WO 2004/006586 (15.01.2004 Gazette 2004/03)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **02.07.2002 JP 2002193027**

(71) Applicant: **MATSUSHITA ELECTRIC INDUSTRIAL CO., LTD.**
**Kadoma-shi, Osaka 571-8501 (JP)**

(72) Inventors:
• **HAGAI, Makoto**
  **Moriguchi-shi, Osaka 570-0051 (JP)**

• **KADONO, Shinya**
  **Nishinomiya-shi, Hyogo 663-8113 (JP)**
• **KONDO, Satoshi**
  **Yawata-shi, Kyoto 614-8361 (JP)**
• **ABE, Kiyofumi**
  **Kadoma-shi, Osaka 571-0074 (JP)**

(74) Representative: **Eisenführ, Speiser & Partner**
**Patentanwälte Rechtsanwälte**
**Postfach 10 60 78**
**28060 Bremen (DE)**

### (54) IMAGE ENCODING METHOD AND IMAGE DECODING METHOD

(57)   The picture coding method comprises: a second reference picture selection step of selecting, as a second reference picture, any one of coded pictures located after the current picture to be coded in display order (S100); a predictive image generation step of specifying a block in the first reference picture and a block in the second reference picture, and generating a predictive image from said two blocks through pixel interpolation (S102 and S104); a coding step of coding a difference between the predictive image and an image of a current block to be coded (S106 and S108); and an output step of outputting specification information for specifying the second reference picture, together with a result of the coding performed in the coding step.

FIG. 12

**EP 1 427 216 A1**

## Description

## Technical Field

The present invention relates to a picture coding method for coding a picture signal and a picture decoding method for decoding the coded picture signal.

## Background Art

With the development of multimedia applications, it has become common to handle information of all sorts of media such as video, audio and text in an integrated manner.

Against this backdrop, it becomes possible to handle media integrally by digitizing all types of media.

However, since an enormous amount of data is contained in digitized pictures, a technique for compressing picture information is absolutely required to accumulate or transmit such pictures. At the same time, it is also important to standardize compression techniques for the interoperability of compressed picture data. The standard specifications on picture compression techniques include H.261 and H.263 standards recommended by ITU-T (International Telecommunication Union-Telecommunication Standardization Sector) and MPEG (Moving Picture Experts Group)-1, MPEG-2, and MPEG-4 of ISO. Currently, ITU is in an effort of standardizing H.264 as the latest picture coding standard, which is called H.26L as a draft under standardization.

Inter-picture prediction utilizing motion compensation is a technique commonly used in moving picture coding methods such as MPEG-1,-2, and -4 and H.263. In motion compensation according to these moving picture coding methods, a picture in an input picture signal is divided into rectangular areas (hereinafter referred to as "blocks") of a predetermined size, and predictive pixels are generated on a block-by-block basis from a motion vector indicating motion between pictures.

In order to introduce inter-picture prediction using motion compensation, a description is given of the following items (1)~(6):

    (1) Concept of B picture;
    (2) Interpolative prediction;
    (3) Picture number and reference index;
    (4) Direct mode;
    (5) Conventional picture coding apparatus; and
    (6) Conventional picture decoding sprats.

(1) Concept of B picture

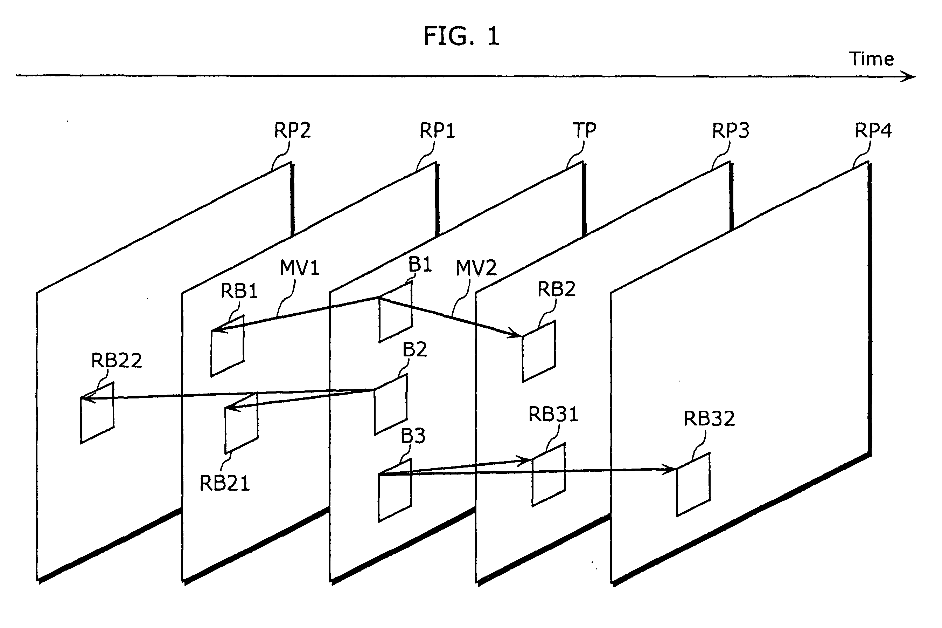

Referring to FIG. 1, a description is given of B pictures (bi-predictive pictures) according to H.26L.

FIG. 1 is a conceptual diagram showing B pictures.

A picture TP is the current B picture to be coded, whereas each of pictures RP1, RP2, RP3, and RP4 is an already coded picture. A block B1 is a block on which inter-picture prediction has been performed with reference to a block RB1 and a block RB2. A block B2 is a block on which inter-picture prediction has been performed with reference to a block RB21 and a block RB22. And a block B3 is a block on which inter-picture prediction has been performed with reference to a block RB31 and a block RB32.

As described above, the current picture TP, which is a B picture, includes blocks which shall be inter-picture predicted with reference to respective blocks included in other two pictures.

(2) Interpolative prediction

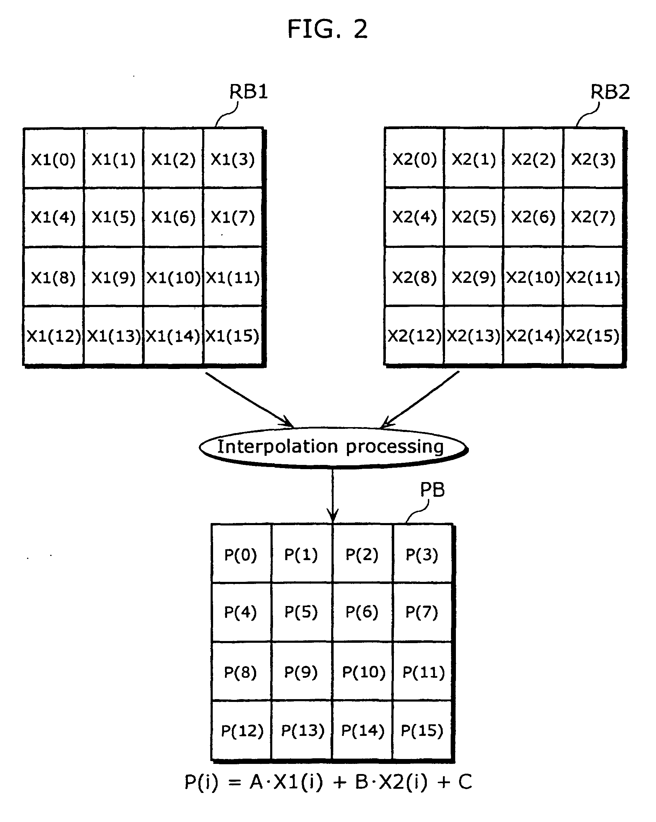

Referring to FIG. 2, a description is given of interpolative prediction.

FIG. 2 is a diagram explaining interpolative prediction.

A block RB1 and a block RB2 are two reference blocks to be used for interpolative prediction, and a block PB indicates a predictive block obtained by interpolation. Here, a description is given, on the assumption that each block is sized $4 \times 4$ pixels.

$X1(i)$ indicates a pixel value in the reference block RB1, $X2(i)$ indicates a pixel value in the reference block RB2, and $P(i)$ indicates a pixel value in the predictive block PB. The pixel value $P(i)$ can be obtained using a linear prediction equation such as below:

$$P(i)=A \cdot X1(i)+B \cdot X2(i)+C$$

Here, A, B, and C are linear prediction coefficients. The use of linear prediction coefficients depends on the case; only an average value (when A=1/2, B=1/2, and C=0) is used as linear predictive coefficients in the case of MPEG-1 and -2 (more strictly, a value to be obtained by rounding, to the closest integer value, the value obtained by dividing $X1(i)+X2(i)$ to half), whereas in another case, other values are explicitly set as linear prediction coefficients. When other values are set as linear prediction coefficients, such values are carried from a picture coding apparatus to a picture decoding apparatus in a coded picture signal.

Blocks on which inter-picture prediction is performed through pixel interpolation from plural reference pictures are referred to as "interpolation predictive blocks". A B picture is a picture capable of including interpolation predictive blocks inside.

According to picture coding methods such as MPEG-1 and MPEG-2, an interpolation predictive block included in a B picture means an interpolation predictive block which is predicted from the reference picture RP1 located before the current picture TP in display order and the reference picture RP3 located after the current picture TP in display order, as the block B1 shown in FIG. 1.

In contrast, a recently proposed new B picture can further include an interpolation predictive block that refers to, as reference pictures, two pictures both of which are located either before or after the current picture, as blocks B2 and B3 shown in FIG. 1.

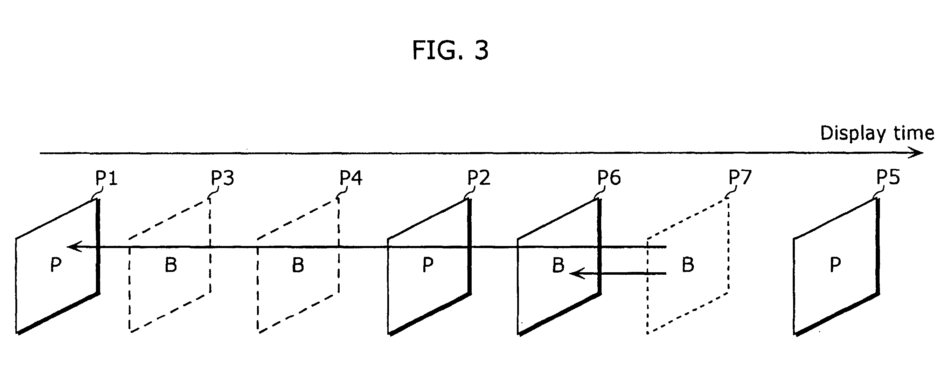

FIG. 3 is a diagram explaining an example case where two reference pictures of an interpolation predictive block are located, in display order, before the current picture to be coded that includes the interpolation predictive block.

A picture P7 is the current picture to be coded. Each picture is coded in order of pictures P1, P2, P3, P4, P5, P6, and P7. This means that the pictures P1, P2, P5, and P6 are coded before the current picture P7, and then stored into the multi-frame buffer (memory).

An interpolation predictive block included in the current picture P7 is coded with reference to pixels in the picture P1 and the picture P6.

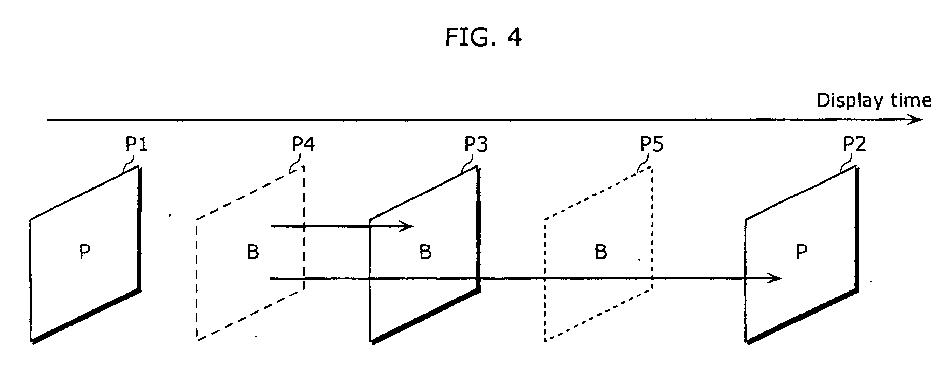

FIG. 4 is a diagram explaining an example case where two reference pictures of an interpolation predictive block are located, in display order, after the current picture to be coded that includes the interpolation predictive block.

A picture P4 is the current picture to be coded. Each picture is coded in order of pictures P1, P2, P3, P4, and P5. This means that the pictures P1, P2, and P3 are coded before the current picture P4, and then stored into the multi-frame buffer.

An interpolation predictive block included in the current picture P4 is coded with reference to pixels in the picture P2 and the picture P3.

Note that a picture that can include blocks on which inter-picture prediction shall be performed from a single reference picture is referred to as a P picture, whereas a picture composed only of intra-picture predictive blocks on which inter-picture prediction shall not be performed is referred to as an I picture.

In H.26L, blocks in a B picture are coded using the maximum of two reference pictures. Here, in order to distinguish such two reference pictures, one of the reference pictures is referred to as a first reference picture and the other a second reference picture. Moreover, motion vectors to be determined based on the first reference picture and the second reference picture are respectively referred to as a first motion vector and a second motion vector.

As for the current block B1 in FIG. 1, for example, the picture RP1 is a first reference picture, the picture RP3 is a second reference picture, the motion vector MV1 is a first motion vector, and the motion vector MV 2 is a second motion vector. Furthermore, prediction that is made based only on a first reference picture is referred to as a first reference picture prediction, whereas prediction that is made based only on a second reference picture is referred to as second reference picture prediction.

Note that there is no need to make a distinction between first and second reference pictures and motion vectors for a block on which inter-picture prediction shall be made using one reference picture. However, for explanation purposes, the reference picture and motion vector of a block on which inter-picture prediction is performed using one reference picture are referred to respectively as a first reference picture and a first motion vector.

(3) Picture number and reference index

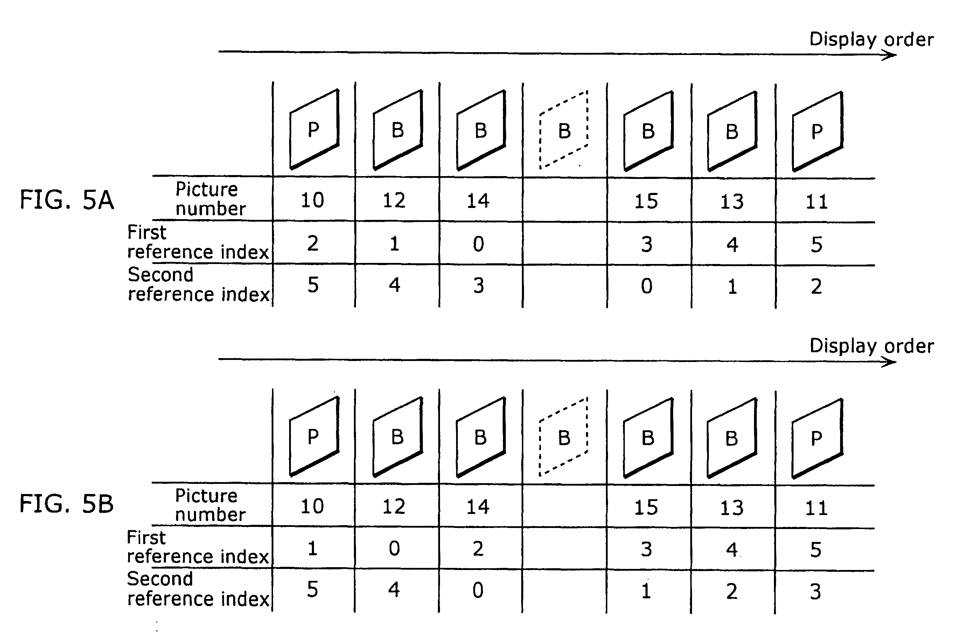

FIGS. 5A and 5B are diagrams explaining picture numbers and reference indices.

Picture numbers and reference indices are information used to uniquely identify reference pictures stored in the multi-frame buffer. In H.26L, a value which increments by one every time a picture is accumulated as a reference picture in the memory is assigned to such reference picture as its picture number.

Meanwhile, reference indices are used to specify reference pictures to be used for inter-picture prediction of the current picture to be coded.

Reference indices are made up of first reference indices for specifying a first reference picture and second reference indices for specifying a second reference picture.

Referring to FIG. 5A, a description is given below of a method of assigning first reference indices and second reference indices.

First, as first reference indices, values starting from 0 are assigned, in order of proximity to the current picture, to reference pictures with earlier display times than the current picture. After values starting from 0 are assigned to all the reference pictures with earlier display times than the current picture, the subsequent values are assigned, in order of proximity to the current picture, to reference pictures with later display times than the current picture.

Then, as second reference indices, values starting from 0 are assigned, in order of proximity to the current picture, to reference pictures with later display times than the current picture. After values starting from 0 are assigned to all the reference pictures with later display times than the current picture, the subsequent values are assigned, in order of proximity to the current picture, to reference pictures with earlier display times than the current picture.

For example, as shown in FIG. 5A, when 0 is indicated as a first reference index, the first reference picture shall be a B picture with the picture number "14", whereas when 1 is indicated as a second reference index, the second reference picture shall be a B picture with the picture number "13".

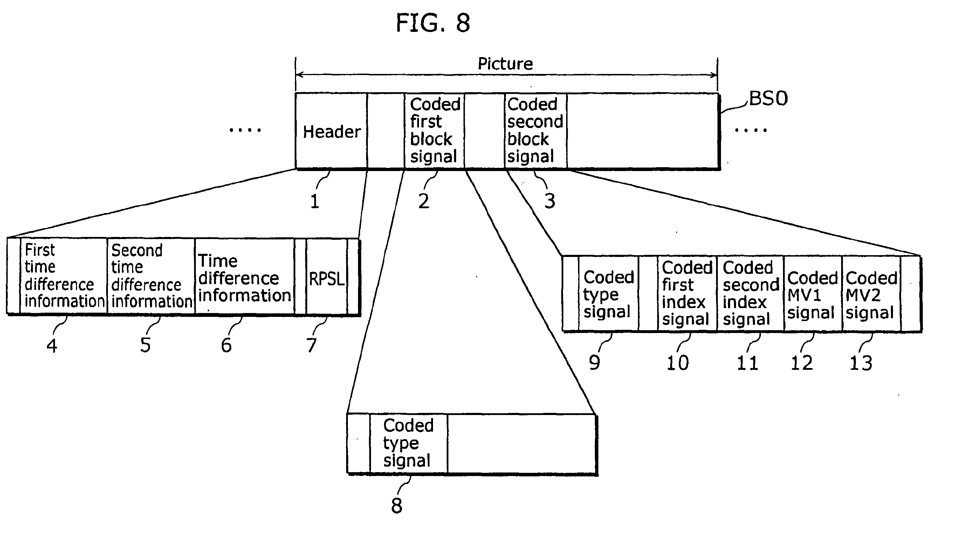

In H.26L, it is possible to arbitrarily change the assignment of first reference indices and second reference indices to reference pictures by explicitly indicating such change by use of a buffer control signal (RPSL 7 within a header 1 shown in FIG. 8) included in coded picture signal. This change in the assignment of indices makes it possible for an arbitrary reference picture inside the multi frame buffer to serve as a reference picture with the second reference index value of 0, and as shown in FIG. 5B, for example, different values are assigned as first reference indices and second reference indices for the respective picture numbers.

Note that reference indices included in a block are represented as variable length code words, where a shorter code is assigned to a smaller value.

(4) Direct mode

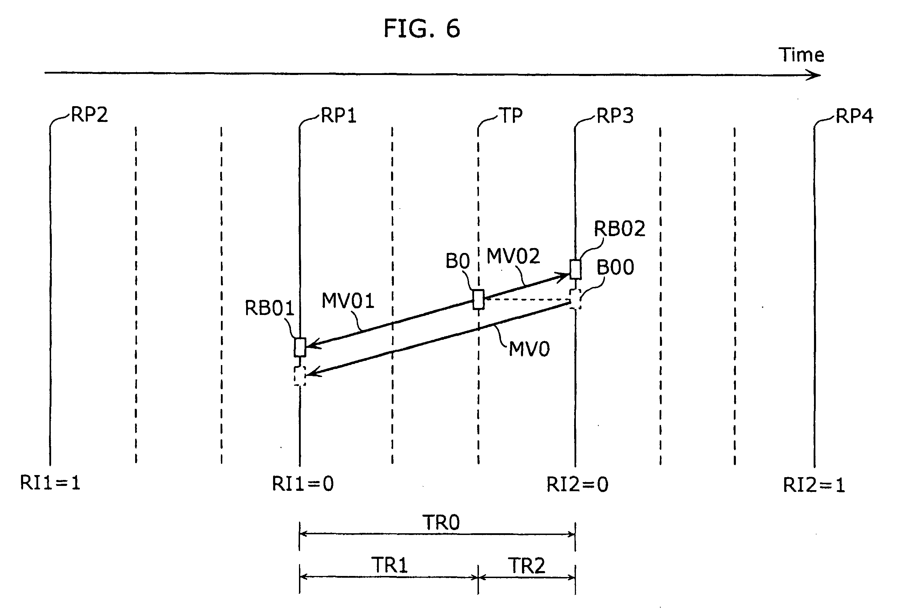

FIG. 6 is a diagram explaining direct mode employed by a conventional picture coding apparatus.

Here, direct mode is a mode for performing inter-picture prediction through pixel interpolation after determining reference pictures and motion vectors of the current block to be coded, using a method described below, based on motion vectors used at the time of coding such reference pictures and based on pictures which were referred to at the time of coding such reference pictures.

A picture TP is a B picture to be coded, whereas pictures RP1, RP2, RP3, and RP4 are decoded pictures stored in the multi frame buffer for use as reference pictures. Meanwhile, respective pictures indicated by dotted lines in FIG. 6 are non-reference pictures which shall not be stored in the multi frame buffer.

Here, the first reference index RI1 of the picture RP1 is 0, the first reference index RI1 of the picture RP2 is 1, the second reference index RI2 of the picture RP3 is 0, and the second reference index RI2 of the picture RP4 is 1.

A block B0 is a block to be coded in direct mode, and a block B00 is a block in the picture RP3 which is co-located with the current block B0. Meanwhile, a block RB01 is a reference block included in the picture RP1, and a block RB02 is a reference block included in the reference picture RP3. A motion vector MV0, which is a first motion vector to be used when coding the block B00, refers to the picture RP1. Such motion vector MV0 shall be referred to as a scaling vector.

The following equations are used to determine a first motion vector MV01 and a second motion vector MV02 which are used for predicting the current block B0 to be coded:

$$MV01 = TR1 \times MVO/TRO$$

$$MV02 = -TR2 \times MVO/TRO$$

In the above equations, the coefficients TR1, TR2 and TR0 are values used to determine motion vectors for direct mode, and an example of such values is the difference in display times between pictures. In FIG. 6, TR1=2, TR2=1, and TR0=3.

Assuming that an object that includes the current block moves in a constant manner within the display, the first motion vector MV01 and the second motion vector MV02 are determined by internally dividing the motion vector MV0 by (i) the difference in display times between the current picture TP and the first reference picture RP1 and (ii) the difference in display times between the current picture TP and the second reference picture RP2.

Note that not only the difference in display times but also the difference in the picture numbers as well as the number of pictures between pictures may also be used to determine the first motion vector MV01 and the second motion vector MV02.

A set of the above coefficients TR1, TR2, and TR0 shall be referred to as a direct mode scaling coefficient SP.

In MPEG-4, since there is only one following reference picture at maximum in direct mode, a picture to be used as a second reference picture is uniquely determined. In H.26L, however, since more than one picture can serve as a second reference picture, the picture with the second reference index RI2 of 0 shall be used as the second reference picture in direct mode.

Moreover, in direct mode, a direct mode scaling coefficient SP transmitted for each picture is commonly used by all the blocks included in each picture. Alternatively, scaling shall be performed in proportion to the difference in display times by use of display time information of each picture.

When FIG. 6 is to correspond to FIG. 5A, the picture TP in FIG. 6 corresponds to a B picture located in the center (represented by the doted lines) in FIG. 5A, the picture RP3 in FIG. 6 corresponds to a B picture with the picture number "15" in FIG. 5A, the picture RP4 in FIG. 6 corresponds to a B picture with the picture number "13" in FIG. 5A, the picture RP1 in FIG. 6 corresponds to a B picture with the picture number "14" in FIG. 5A, and the picture RP2 in FIG. 6 corresponds to a B picture with the picture number "12" in FIG. 5A. Since non-reference pictures represented by doted liens such as the picture TP, shall not be referred to by other pictures, they shall not be stored in the multi frame buffer. Therefore, non-reference pictures are not be assigned reference indices used for referring to such pictures, as the pictures shown in FIG. 5A are.

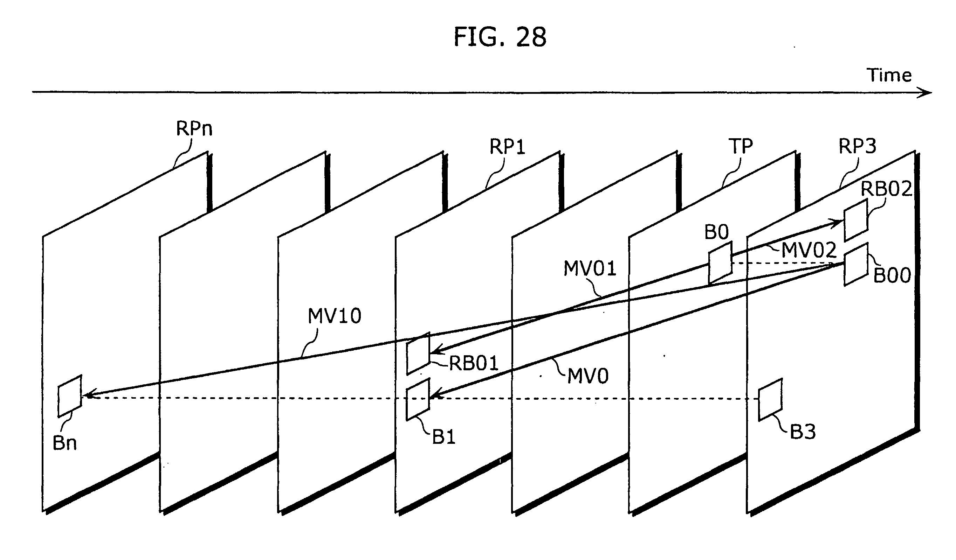

Note that in FIG. 6, the first motion vector MV0 is schematically illustrated as a vector that goes beyond space and time extending from the reference picture RP3 to the reference picture RP1. However, referring to FIG. 28, an actually stored first motion vector MV0 indicates the amount of a locational change from the block B00 to the block B3. Therefore, the first motion vector MV0 shown in FIG. 6 can be determined from a vector extending from the block B00 to the block B3 as well as from the temporal distance between RP1 and RP3.

In this specification, suppose that the motion vector MV0 shown in FIG. 6 is actually stored for explanation purposes.

(5) Conventional picture coding apparatus

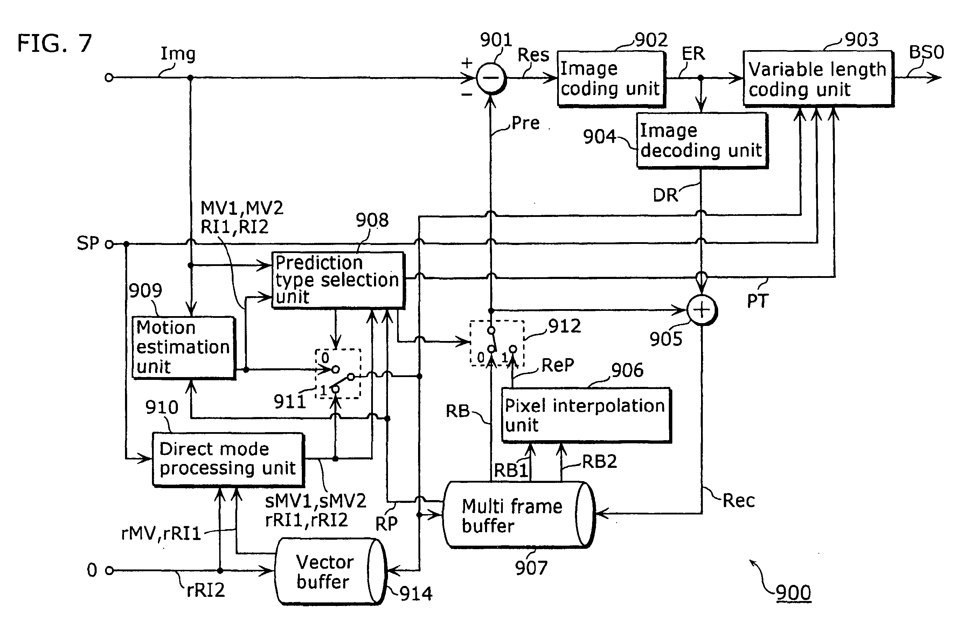

Referring now to FIG. 7, a description is given of a conventional picture coding apparatus.

FIG. 7 is a block diagram showing the configuration of a conventional picture coding apparatus. The following gives a description of such picture coding apparatus.

A picture coding apparatus 900 receives a picture signal Img which is divided into blocks, and performs processing on such signal on a block-by-block basis.

A subtracter 901 subtracts each of predictive image signals Pre from the picture signal Img, and outputs residual signals Res.

An image coding unit 902 obtains the residual signals Res so as to perform image coding processing such as DCT conversion and quantization on each of such residual signals Res, and outputs coded residual signals ER that include the quantized DCT coefficients and the like.

An image decoding unit 904 obtains the coded residual signals ER so as to perform image decoding processing such as inverse quantization and inverse DCT conversion on each of such signals, and outputs decoded residual signals DR.

An adder 905 adds each of the decoded residual signals DR and each of the predictive image signals Pre, and outputs reconstructed image signals Rec.

Reconstructed image signals Rec with the possibility to be referred to for inter-picture prediction of subsequent pictures, will be stored into a multi frame buffer 907. Since the multi frame buffer 907 has a limited amount of memory, picture data in the multi frame buffer 907 which will not be used for later inter-picture prediction shall be removed from the multi frame buffer 907.

A motion estimation unit 909 obtains a reference picture RP stored in the multi frame buffer 907 so as to perform motion estimation on it, selects an optimum prediction type on a block-by-block basis from among the following prediction types: intra picture prediction, first reference picture prediction, second reference picture prediction, and interpolative prediction using a predetermined method (a prediction type to be selected depends on a picture type). Then, the motion estimation unit 909 outputs a first motion vector MV1, a second motion vector MV2, a first reference index RI1, and a second reference index RI2 of the current block to be coded.

An example method of selecting a prediction type employed by the motion estimation unit 909 is to select a prediction type that generates the smallest prediction error among all the prediction types. When intra picture prediction is selected as a prediction type, no motion vectors and reference indices are outputted. When first reference picture prediction is selected, only a first reference index and a first motion vector are outputted. When second reference picture prediction is selected, only a second reference index and a second motion vector are outputted. And when interpolative prediction is selected, a first reference index, a second reference index, a first motion vector, and a second motion vector are outputted.

As described above, in H.26L, a reference picture with the second reference index rRI2 of 0 is selected as a second reference picture for direct mode. Accordingly, the second reference index rRI2 with the value 0 is inputted to a vector buffer 914 and a direct mode processing unit 910.

Stored in the vector buffer 914 are scaling vectors rMV and the picture number of a picture referred to by each of such scaling vectors rMV. Since a reference picture including a block that has been coded using a scaling vector rMV is a reference picture indicated by a second reference index rRI2, the vector buffer 914 receives the second reference index rRI2 with the value 0, and outputs the scaling vector rMV and the first reference index rRI1 that indicates a picture referred to by the scaling vector rMV.

The direct mode processing unit 910 receives a direct mode scaling coefficient SP, a scaling vector rMV, a first reference index rRI1, and a second reference index rRI2, and outputs a first motion vector sMV1, a second motion vector sMV2, a first reference index rRI1, and a second reference index rRI2 for direct mode through the above-described direct mode processing.

A prediction type selection unit 908 receives ( i ) the picture signal Img, ( ii ) the reference pictures RP, ( iii ) the reference indices rRI1 and rRI2 and the motion vectors sMV1 and sMV2 which indicate the locations of reference blocks for "direct mode", and ( iv ) the reference indices RI1 and RI2 and the motion vectors MV1 and MV2 which indicate the locations of reference blocks used for prediction in "non-direct mode". Then, the prediction type selection unit 908 determines whether to use direct mode or not for block prediction, and outputs, to a variable length coding unit 903, type information PT indicating the determined prediction type.

Here, the prediction type selection unit 908 selects a prediction type by selecting, for example, a smaller prediction error between prediction errors of input pixels at the time of "direct mode" and "non-direct mode".

Thus, direct mode is further included as a prediction type to be selected by the motion estimation unit 909, in addition to intra picture prediction, first reference picture prediction, second reference picture prediction, and interpolative prediction other than in direct mode.

Accordingly, when the selected prediction type indicates direct mode, a switch 911 switches to the "1" side, and the reference indices rRI1 and rRI2 as well as the motion vectors sMV1 and sMV2 are used as the reference indices RI1 and RI2 as well as the motion vectors MV1 and MV2.

Meanwhile, when the prediction type indicates other than direct mode, the switch 911 switches to the "0" side.

At the time of direct mode, the first motion vector sMV1 used for coding a block in an already coded picture is used as a scaling vector. Moreover, a picture referred to by such first motion vector sMV1 is used as one of the two reference pictures in direct mode. Therefore, among the coded first reference indices RI1 and first motion vectors MV1, first reference indices RI1 and first motion vectors MV1 with the possibility to be used in direct mode for subsequent pictures of the coded picture are stored into the vector buffer 914.

After a prediction type is determined, a first reference index RI1 and a first motion vector MV1 are inputted to the multi frame buffer 907, and a reference block RB1 corresponding to such inputted first reference index RI1 and first motion vector MV1 is outputted from the multi frame buffer 907 to a pixel interpolation unit 906. When a prediction type requires two reference blocks, a reference block RB2 corresponding to a second reference index RI2 and a second motion vector MV2 is outputted from the multi frame buffer 907 to the pixel interpolation unit 906.

When interpolative prediction is selected, the pixel interpolation unit 906 interpolates pixel values in positions in the two reference blocks RB1 and RB2 corresponding to each other, and outputs an interpolated block ReP.

When the selected prediction type indicates interpolative prediction, a switch 912 switches to the "1" side, and uses the interpolated block ReP as a predictive image signal Pre.

When first reference picture prediction is selected, the multi frame buffer 907 outputs a reference block RB corresponding to the first reference index RI1 and the first motion vector MV1. When second reference picture prediction is selected, the multi frame buffer 907 outputs a reference block RB corresponding to the second reference index RI1 and the second motion vector MV1. Note that when intra picture prediction is selected, the multi frame buffer 907 outputs a block RB that is made up of pixels generated as a result of intra picture prediction.

Meanwhile, when other than interpolative prediction is indicated as a prediction type, the switch switches to the "0" side, and uses a reference block RB as a predictive image signal Pre.

The variable length coding unit 903 performs variable length coding on the coded residual signal ER, the reference indices RI1 and RI2, the motion vectors MV1 and MV2, the direct mode scaling coefficient SP, and the type information PT, and incorporates the resultant into a bit stream BS0 so as to output it.

FIG. 8 is a conceptual diagram showing the format of the bit stream BS0.

FIG. 8 shows the format of a part in the bit stream BS0 where information equivalent to one picture is included.

Such part includes the header 1, a coded first block signal 2 of a block which was coded in direct mode, and a coded second block signal 3 of a block which was coded using interpolative prediction other than in direct mode.

The coded second block signal 3 includes: a coded type signal 9 obtained by coding type information PT; a coded first index signal 10 and a coded second index signal 11 obtained by coding reference indices RI1 and RI2; and a coded MV1 signal 12 and a coded MV2 signal 13 obtained by coding motion vectors MV1 and MV2. In the coded second block signal 3, the coded first index signal 10 and the coded second index signal 11 as well as the coded MV1 signal 12 and coded MV2 signal 13 are included in the bit stream BS0 in the order shown in FIG. 8.

Determination on whether to use a reference index RI1 or RI2 is made according to the coded type signal 9, and a first reference picture and a second reference picture are determined by the data positions in the bit stream BS0 of the coded first index signal 10 and the coded second index signal 11.

Meanwhile, the coded first block signal 2, which indicates that a block has been coded in direct mode, includes the coded type signal 8 obtained by coding the type information PT, but does not include information indicating reference indices and motion vectors.

The header 1 includes: first time difference information 4, second time difference information 5, and time difference information 6 obtained by coding the coefficients TR1, TR2, and TR0 shown in FIG. 6; and RPSL 7 that indicates a change in the assignment of first reference indices or second reference indices to reference pictures. Note, however, that when display time information of each picture is used for scaling a motion vector in direct mode, such information is not described in the header, and only display time information is described in the header.

(6) Conventional picture decoding apparatus

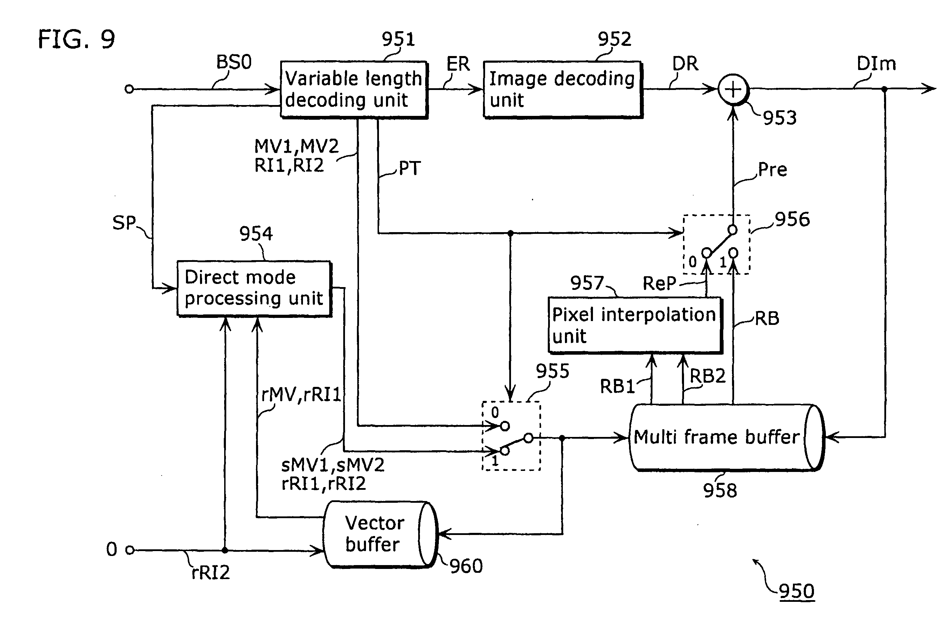

FIG. 9 is a block diagram showing the configuration of a conventional picture decoding apparatus.

Here, a multi frame buffer 958, a pixel interpolation unit 957, a vector buffer 960, and a direct mode processing unit 954 equipped to a picture decoding apparatus 950 respectively have the same functions as those of the multi frame buffer 907, the pixel interpolation unit 906, the vector buffer 914, and the direct mode processing unit 910 of the picture coding apparatus 900 shown in FIG. 7. A detailed description of them, therefore, is omitted. Moreover, the same signals in FIG. 9 as those shown in FIG. 7 are assigned the same numbers, and no description is given of them.

The variable length decoding unit 951 receives the bit stream BS0 so as to perform variable length decoding on it, and outputs the coded residual signals ER, the motion vectors MV1 and MV2, the reference indices RI1 and RI2, the direct mode scaling coefficients SP (or the display time information of each picture), and the type information PT. The image decoding unit 952 receives the coded residual signals ER, performs inverse quantization and inverse DCT conversion on each of such residual signals ER, and outputs decoded residual signals DR. The adder 953 adds each of the decoded residual signals DR and each of the predictive image signals Pre, and outputs decoded picture signals DIm to outside the picture decoding apparatus 950. The multi frame buffer 958 stores some of the decoded picture signals DIm necessary for inter-picture prediction.

The vector buffer 960 holds a scaling vector rMV and information used for identifying a picture refereed to by such scaling vector rMV (the first reference index rRI1). Moreover, the vector buffer 960 receives the second reference index rRI2 with the value 0, and outputs the scaling vector rMV and the first reference index rRI1.

The direct mode processing unit 954 performs the same processing as that of the direct mode processing unit 910 shown in FIG. 7.

When the prediction type is other than direct mode, the switch 955 switches to the "0" side. Then, the multi frame buffer 958 obtains the reference indices RI1, and RI2 as well as the motion vectors MV1 and MV2.

When the prediction type indicates direct mode, the switch 955 switches to the "1" side. Then, the multi frame buffer 958 obtains the reference indices rRI1 and rRI2, as well as the motion vectors sMV1 and sMV2 as the reference indices RI1 and RI2 as well as the motion vectors MV1 and MV2.

When the selected prediction type indicates interpolative prediction, the multi frame buffer 958 outputs a reference block RB1 corresponding to the first reference index RI1 and the first motion vector MV1 as well as a reference block RB2 corresponding to the second reference index RI2 and the second motion vector MV2. Subsequently, the pixel interpolation unit 957 interpolates pixel values corresponding to the respective two reference blocks RB1 and RB2, and outputs an interpolated block ReP.

When first reference picture prediction is selected, the multi frame buffer 958 outputs a reference block RB corresponding to the first reference index RI1 and the first motion vector MV1. When second reference picture prediction is selected, the multi frame buffer 958 outputs a reference block RB corresponding to the second reference index RI2 and the second motion vector MV2. Note that when intra picture prediction is selected, the multi frame buffer 958 outputs a block RB that is made up of pixels generated as a result of intra picture prediction.

Meanwhile, when interpolative prediction is indicated as a prediction type, the switch 956 switches to the "0" side, and the interpolated block ReP is used as a predictive image signal Pre.

Meanwhile, when other than interpolative prediction is indicated as a prediction type, the switch 956 switches to the "1" side, and a reference block RB is used as a predictive image signal Pre.

Amongst the decoded first reference indices RI1 and first motion vectors MV1, first reference indices RI1 and first motion vectors MV1 with the possibility to be used in direct mode for subsequent pictures of a decoded picture are stored into the vector buffer 960.

The picture decoding apparatus 950 with the above configuration decodes the bit stream BS0 through the above-described processing, and outputs the resultant as decoded picture signals DIm.

Here, in the above-described conventional picture coding apparatus 900 and picture decoding apparatus 950, a B picture is coded with reference to ( i ) two forward pictures, ( ii ) two backward pictures, or ( iii ) one forward picture and one backward picture. Regarding general video, however, a higher coding efficiency can be achieved by referring to one forward picture and one backward picture rather than referring to two forward pictures or two backward pictures, since highly accurate interpolative prediction is possible in the former case.

However, in the above-described conventional picture coding apparatus 900 and picture decoding apparatus 950, since the value 0 of a second reference index rRI2 is assigned to an arbitrary reference picture in the multi frame buffers 907 and 908 as described with reference to FIG. 5B. Therefore, in direct mode, a B picture is coded with reference to two forward pictures or two backward pictures in many cases, which causes a problem that coding efficiency in coding of B pictures is lowered.

Also, as shown in FIG. 6, in direct mode, the current picture TP is coded by use of the first reference picture RP1 and the second reference picture RP3 as well as the scaling vectors MV0 (the first motion vectors MV0). Here, the second reference picture is a picture whose second reference index RI2 value is 0, and the first reference picture is a picture which is referred to by the first motion vector MV0 of the block B00 in the second reference picture.

Therefore, in order to realize direct mode, the picture coding apparatus 900 is required to hold the first motion vectors MV0 used for coding the second reference picture RP3 as well as information used to identify the picture RP1 referred to by each of such motion vectors MV0.

By the same token, the picture decoding apparatus 950 is also required to hold the first motion vectors MV0 of a decoded picture as well as information used to identify the picture RP1 referred to by each of such motion vectors MV0.

In H.263, a motion vector can be switched to another one on a $4 \times 4$ block basis at the minimum and a reference picture can be switched to another one on an $8 \times 8$ block basis at the minimum. Therefore, in the case of a QCIF-sized image ($176 \times 144$ blocks), the

memory is required to be capable of holding information for identifying 1584 motion vectors and 396 reference pictures per reference picture.

Moreover, in H.26L, since a change can be freely made in the assignment of reference indices to reference pictures, any reference picture in the multi frame buffer can be a reference picture corresponding to the second reference index RI2=0. This requires the picture coding apparatus 900 and the picture decoding apparatus 950 to hold the first motion vectors of all reference pictures stored in the multi frame buffers 907 and 958 as well as information used to identify pictures referred to by such first motion vectors.

Since the amount of memory required to store such first motion vectors and picture identification information is proportional to the number of reference pictures, the vector buffers 914 and 960 that hold such information are required to have vast storage capacity. In other words, since an enormous amount of information is to be stored in the vector buffers 914 and 960, load is inevitably placed on the inputting/outputting of such information. As a result, coding processing becomes complicated, leading to a decrease in coding efficiency.

It is an object of the preset invention to provide a picture coding method and a picture decoding method capable of offering an improved coding efficiency.

**Disclosure of Invention**

In order to achieve the above object, the picture coding method according to the present invention is a picture coding method for coding a current picture to be coded on a block-by-block basis with reference to already coded pictures, comprising: a second reference picture selection step of selecting, as a second reference picture, any one of coded pictures located after the current picture in display order; a first reference picture specification step of specifying, as a first reference picture, any one of coded pictures based on a motion vector used for coding a predetermined block in the second reference picture; a predictive image generation step of specifying a block in the first reference picture and a block in the second reference picture based on the motion vector, and generating a predictive image from said two blocks through pixel interpolation; a coding step of coding a difference between the predictive image and an image of a current block to be coded; and an output step of outputting specification information for specifying the second reference picture, together with a result of the coding performed in the coding step.

Here, in the output step, the specification information that includes a second reference index indicating the second reference picture may be outputted. Moreover, in the output step, information indicating a method for changing second reference indices may be outputted as the specification information, said second reference indices being assigned to the respective coded pictures in order to identify said coded pictures.

Accordingly, when remapping occurs, since a coded picture located after the current picture in display order is selected as the second reference picture, it becomes possible to prevent two coded pictures located before the current picture in display order from being referred to as in the conventional cases, and therefore to improve the probability that two coded pictures located before and after the current picture in display order are refereed to. This consequently improves coding efficiency. Furthermore, since the specification information is outputted, it is possible to correctly decode a result of the coding executed in the coding step, by selecting the same picture as the second reference picture selected at the time of coding, based on such specification information.

Also, the picture coding method according to the present invention is a picture coding method for coding a current picture to be coded on a block-by-block basis with reference to already coded pictures, comprising: a second reference picture selection step of selecting, as a second reference picture, a coded picture from among coded pictures that are located after the current picture in display order, said coded picture being assigned a smallest second reference index of all second reference indices assigned to the respective coded pictures in order to identify said coded pictures; a first reference picture specification step of specifying, as a first reference picture, any one of coded pictures based on a motion vector used for coding a predetermined block in the second reference picture; a predictive image generation step of specifying a block in the first reference picture and a block in the second reference picture based on the motion vector, and generating a predictive image from said two blocks through pixel interpolation; and a coding step of coding a difference between the predictive image and an image of a current block to be coded.

Here, in the second reference picture selection step, the coded picture with the smallest second reference index may be specified according to assignment information indicating how the second reference indices are assigned, and said specified coded picture may be selected as the second reference picture.

Accordingly, when remapping occurs, since a coded picture located after the current picture in display order is selected as the second reference picture, it becomes possible to prevent two coded pictures located before the current picture in display order from being referred to as in the conventional cases, and therefore to improve the probability that two coded pictures located before and after the current picture in display order are refereed to. This consequently improves coding efficiency. Furthermore, since the picture with the smallest reference index is selected as the second reference picture, it is possible to correctly decode a result of the coding performed in the coding step, by uniquely selecting the same picture as the second reference picture selected at the time of coding.

Here, the picture coding method according to the present invention is a picture coding method for coding a current picture to be coded on a block-by-block basis with reference to already coded pictures, comprising: an assignment step of assigning, to respective coded pictures, second reference indices for identifying said coded pictures in a manner in which a second reference index indicating 0 is assigned to any one of coded pictures located after the current picture in display order; a re-assignment step, in which it is possible to re-assign the second reference indices in a manner different from the manner used in the assignment step, of assigning the second reference index indicating 0 only to any one of the coded pictures located after the current picture in display order, when re-assigning the second reference indices; a second reference picture selection step of selecting, as a second reference picture, the coded picture assigned the second reference index indicating 0 from among the coded pictures located after the current picture in display order; a first reference picture specification step of specifying, as a first reference picture, any one of the coded pictures based on a motion vector used for coding a predetermined block in the second reference picture; a predictive image generation step of specifying a block in the first reference picture and a block in the second reference picture based on the motion vector, and generating a predictive image from said two blocks through pixel interpolation; and a coding step of coding a difference between the predictive image and an image of a current block to be coded.

Here, in the re-assignment step, it may be prohibited to change the second reference index of the coded picture which is assigned the second reference index indicating 0 in the assignment step.

Accordingly, in the assignment step and the re-assignment step, since the second reference index indicating 0 is assigned to a coded picture that is located after the current picture to be coded in display order, a coded picture that is located after the current picture to be coded in display order is selected as the second reference picture. As a result, when remapping occurs, since a coded picture located after the current picture in display order is selected as the second reference picture, it becomes possible to prevent two coded pictures located before the current picture in display order from being refereed to as in the conventional cases, and therefore to improve the probability that two coded pictures located before and after the current picture in display order are refereed to. This consequently improves coding efficiency.

Furthermore, the picture coding method according to the present invention is a picture coding method for coding a current picture to be coded on a block-by-block basis with reference to already coded pictures, comprising: an assignment step of assigning, to respective coded pictures, first reference indices for identifying said coded pictures; a re-assignment step of re-assigning the first reference indices to predetermined coded pictures or slices in a manner different from the manner used in the assignment step; a first reference picture selection step of selecting, as a first reference picture, a coded picture assigned a first reference index indicating a predetermined value, from among coded pictures located before the current picture in display order; a predictive image generation step of generating a predictive image through pixel interpolation based on a predetermined block in the first reference picture; and a coding step of coding a difference between the predictive image and an image of a current block to be coded, wherein in the re-assignment step, the first reference index indicating said predetermined value is assigned preferentially to the coded picture which is referred to for a long period of time.

Accordingly, when a scene change occurs, since remapping is performed in a manner in which the first reference index indicating 0 is preferentially assigned to a coded picture in a memory that stores coded pictures to be referred to for a long period of time, and the coded picture with such first reference index of 0 is selected as the first reference picture, it is possible to improve the probability that a coded picture similar to the current picture to be coded is referred to. This consequently improves coding efficiency.

Moreover, the picture coding method according to the present invention is a picture coding method for coding a current picture to be coded on a block-by-block basis with reference to already coded pictures, comprising: an assignment step of assigning, to respective coded pictures, second reference indices for identifying said coded pictures; a second reference picture selection step of selecting, as a second reference picture, a coded picture which is assigned a second reference index indicating 0, from among coded pictures located after the current picture in display order; a first reference picture specification step of specifying, as a first reference picture, any one of the coded pictures based on a motion vector used for coding a predetermined block in the second reference picture; a predictive image generation step of specifying a block in the first reference picture and a block in the second reference picture based on the motion vector, and generating a predictive image from said two blocks through pixel interpolation; and a coding step of coding a difference between the predictive image and an image of a current block to be coded, wherein in the assignment step, the second reference index indicating 0 is prohibited from being assigned to a coded picture that has been located before the current picture in display order.

Accordingly, since the second reference index indicating 0 is prohibited from being assigned to a coded picture that has been located before the current picture to be coded in display order, such coded picture that has been located after the current picture in display order shall never be selected as the second reference picture. As a result, it becomes possible to omit the processing for unnecessarily storing motion vectors used for coding the blocks on such coded pictures, which consequently leads to improved coding efficiency.

Here, the picture coding method with the above configuration may further comprise a deletion step of deleting, from a memory storing motion vectors used for coding the coded pictures, a motion vector used for coding the coded picture that has been located before the current picture in display order.

Accordingly, it becomes possible to reduce the amount of memory by preventing motion vectors unnecessary for coding from being stored into the memory.

Also, the picture coding method according to the present invention is a picture coding method for coding a current picture to be coded on a block-by-block basis with reference to already coded pictures, comprising: a selection step of selecting, from among a plurality of coded pictures stored in a storage unit, a coded picture corresponding to a first reference index as a first reference picture and a coded picture corresponding to a second reference index as a second reference picture, by use of said first reference index and said second reference index assigned to said plurality of coded pictures; a predictive image generation step of generating a predictive image from a block in the first reference picture and a block in the second reference picture through pixel interpolation; and an output step of coding a prediction error which is a difference between the current picture and the predictive image, and outputting a coded picture signal that includes a signal obtained by coding said prediction error, wherein in the selection step, the coded picture which satisfies the following condition is selected as the first reference picture from among the coded pictures: a coded picture which is located before the current picture in display order and which is assigned a smallest reference index, and in the predictive image generation step, ( i ) a second motion vector of a block which refers to the first reference picture is calculated, based on a first motion vector used to code said block which is in the second reference picture and co-located with a current block to be coded in the current picture, ( ii ) a third motion vector of the current block which refers to the first reference picture is calculated and a fourth motion vector of the current block which refers to the second reference picture is calculated, both based on said second motion vector, and ( iii ) the predictive image is generated through pixel interpolation from a block in the first reference picture referred to by the third motion vector and a block in the second reference picture referred to by the fourth motion vector.

Accordingly, since the same first reference picture is commonly used for each block in the current picture to be coded regardless of which picture a first motion vector of the second reference picture refers to, it becomes unnecessary to store information for identifying the first reference picture into the memory, as in the conventional cases. This can reduce the amount of memory as well as simplifying coding processing so as to improve coding efficiency.

Moreover, the picture decoding method according to the present invention is a picture decoding method for decoding a coded picture on a block-by-block basis with reference to already decoded pictures, comprising: an obtainment step of obtaining specification information and a coded signal, the specification information being used for specifying, as a second reference picture, a decoded picture to be referred to for decoding a current picture to be decoded and the coded signal being related to said current picture; a second reference picture selection step of selecting the second reference picture from among decoded pictures that are located after the current picture in display order based on the specification information; a first reference picture specification step of specifying, as a first reference picture, any one of decoded pictures based on a motion vector used for decoding a predetermined block in the second reference picture; a predictive image generation step of specifying a block in the first reference picture and a block in the second reference picture based on the motion vector, and generating a predictive image from said two blocks through pixel interpolation; and a decoding step of decoding a current block to be decoded based on the predictive image and the coded signal.

Here, in the obtainment step, the specification information that includes a second reference index indicating the second reference picture may be obtained, and in the second reference picture selection step, the second reference picture indicated by said second reference index may be selected. Furthermore, in the obtainment step, the specification information that indicates a method for changing second reference indices may be obtained, said second reference indices being assigned to the respective decoded pictures in order to identify said decoded pictures, and in the second reference picture selection step, the decoded picture indicated by said method for changing the second reference indices may be selected as the second reference picture.

Accordingly, it becomes possible to correctly decode a picture that has been decoded using the picture coding method according to the present invention, by uniquely selecting the second reference picture based on the specification information.

In addition to the above, the picture coding method according to the present invention may be a picture coding method, comprising: a first step of selecting either at least a first or second reference frame from among a plurality of coded frames stored in a storage unit by use of a first relative index and a second relative index assigned to said coded frames, in order to select a first reference frame and a second reference frame to be referred to when obtaining a block on a current frame to be coded by means of motion compensation; a second step of generating, through pixel interpolation, a predictive image from a block on at least either the first or second reference frame obtained by means of motion compensation; and a third step of coding a prediction error which is a difference between the input current frame and the predictive image, and outputting a coded picture signal that includes a signal obtained by coding said prediction error, wherein in the first step, a reference frame which satisfies the following condition is selected as the second reference frame from among the coded frames: a reference frame which is located after the current frame in display order and which is assigned a smallest second relative index, and in the second step, ( i )a frame is regarded as the first reference frame, said frame being refereed to by a motion vector used for motion-compensating a block which is in the second reference frame and co-located with a predetermined block in the current frame, ( ii ) based on said motion vector, a motion vector to the first reference frame and a motion vector to the second reference frame are calculated using a predetermined method, and ( iii ) the predictive image is generated through pixel interpolation from a block obtained from the motion vector to the first reference frame and a block obtained from the motion vector to the second reference frame.

In addition to the above, the picture decoding method according to the present invention may be a picture decoding method, comprising: a first step of obtaining a coded picture signal that includes a signal obtained by coding a prediction error; a second step of selecting either at least a first or second reference frame from among a plurality of decoded frames stored in a storage unit by use of a first relative index and a second relative index assigned to said decoded frames, in order to select a first reference frame and a second reference frame to be referred to when obtaining a block on a current frame to be decoded by means of motion compensation; a third step of generating, through pixel interpolation, a predictive image from a block on at least either the first or second reference frame obtained by means of motion compensation; a fourth step of generating a decoded picture of a frame from the predictive image and the decoded prediction error; and a fifth step of storing, in the storage unit, a decoded picture of a frame with a possibility to be used for inter-frame prediction, wherein in the second step, a reference frame which satisfies the following condition is selected as the second reference frame from among the decoded frames: a reference frame which is located after the current frame in display order and which is assigned a smallest second relative index, and in the third step, ( i ) a frame is regarded as the first reference frame, said frame being refereed to by a motion vector used for motion-compensating a block which is in the second reference frame and co-located with a predetermined block in the current frame, ( ii ) based on said motion vector, a motion vector to the first reference frame and a motion vector to the second reference frame are calculated using a predetermined method, and ( iii ) the predictive image is generated through pixel interpolation from a block obtained from the motion vector to the first reference frame and a block obtained from the motion vector to the second reference frame.

In addition to the above, the picture coding method according to the present invention may be a picture coding method, comprising: a first step of selecting either at least a first or second reference frame from among a plurality of coded frames stored in a storage unit by use of a first relative index and a second relative index assigned to said coded frames, in order to select a first reference frame and a second reference frame to be referred to when obtaining a block on a current frame to be coded by means of motion compensation; a second step of generating, through pixel interpolation, a predictive image from a block on at least either the first or second reference frame obtained by means of motion compensation; and a third step of coding a prediction error which is a difference between the input current frame and the predictive image, and outputting a coded picture signal that includes a signal obtained by coding said prediction error, wherein in the first step, a frame which is located after the current frame in display order is selected as the second reference frame, from among the coded frames, in the second step, ( i )a frame is regarded as the first reference frame, said frame being refereed to by a motion vector used for motion-compensating a block which is in the second reference frame and co-located with a predetermined block in the current frame, ( ii ) based on said motion vector, a motion vector to the first reference frame and a motion vector to the second reference frame are calculated using a predetermined method, and ( iii ) the predictive image is generated through pixel interpolation from a block obtained from the motion vector to the first reference frame and a block obtained from the motion vector to the second reference frame, and in the third step, the second relative index indicating the second reference frame selected in the first step is incorporated into the coded picture signal.

In addition to the above, the picture decoding method according to the present invention may be a picture decoding method, comprising: a first step of obtaining a coded picture signal that includes a signal obtained by coding a prediction error; a second step of selecting either at least a first or second reference frame from among a plurality of decoded frames stored in a storage unit by use of a first relative index and a second relative index assigned to said decoded frames, in order to select a first reference frame and a second reference frame to be referred to when obtaining a block on a current frame to be decoded by means of motion compensation; third step of generating, through pixel interpolation, a predictive image from a block on at least either the first or second reference frame obtained by means of motion compensation; a fourth step of generating a decoded picture of a frame from the predictive image and the decoded prediction error; and a fifth step of storing, in the storage unit, a decoded picture of a frame with a possibility to be used for inter-frame prediction, wherein in the first step, the second relative index is obtained from the coded picture signal including second relative indices, in the second step, a frame indicated by the second relative index obtained in the first step is regarded as the second reference frame, in the third step, ( i ) a frame is regarded as the first reference frame, said frame being refereed to by a motion vector used for motion-compensating a block which is in the second reference frame and co-located with a predetermined block in the current frame, ( ii ) based on said motion vector, a motion vector to the first reference frame and a motion vector to the second reference frame are calculated using a predetermined method, and ( iii ) the predictive image is generated through pixel interpolation from a block obtained from the motion vector to the first reference frame and a block obtained from the motion vector to the second reference frame.

In addition to the above, the picture coding method according to the present invention may be a picture coding method, comprising: a first step of selecting either at least a first or second reference frame from among a plurality of coded frames stored in a storage unit by use of a first relative index and a second relative index assigned to said coded frames, in order to select a first reference frame and a second reference frame to be referred to when obtaining a block on a current frame to be coded by means of motion compensation; a second step of generating, through pixel interpolation, a predictive image from a block on at least either the first or second reference frame obtained by means of motion compensation; and a third step of coding a prediction error which is a difference between the input current frame and the predictive image, and outputting a coded picture signal that includes a signal obtained by coding said prediction error, wherein in the first step, a reference frame which satisfies the following condition is selected as the first reference frame from among the coded frames: a reference frame which is located before the current frame in display order and which is assigned a smallest first relative index, and in the second step, ( i ) from a first motion vector used for motion-compensating a first block which is in the second reference frame and co-located with a predetermined block in the current frame and from an interval between the first reference frame and the second reference frame, a second motion vector extending from the first block to a block which is in the first reference frame and co-located with a block referred to by the first motion vector is calculated, ( ii ) based on said calculated second motion vector, a motion vector to the first reference frame and a motion vector to the second reference frame are calculated using a predetermined method, and ( iii ) the predictive image is generated through pixel interpolation from a block obtained from the motion vector to the first reference frame and a block obtained from the motion vector to the second reference frame.

In addition to the above, the picture decoding method according to the present invention may be a picture decoding method, comprising: a first step of obtaining a coded picture signal that includes a signal obtained by coding a prediction error; a second step of selecting either at least a first or second reference frame from among a plurality of decoded frames stored in a storage unit by use of a first relative index and a second relative index assigned to said decoded frames, in order to select a first reference frame and a second reference frame to be referred to when obtaining a block on a current frame to be decoded by means of motion compensation; a third step of generating, through pixel interpolation, a predictive image from a block on at least either the first or second reference frame obtained by means of motion compensation; a fourth step of generating a decoded picture of a frame from the predictive image and the decoded prediction error; and a fifth step of storing, in the storage unit, a decoded picture of a frame with a possibility to be used for inter-frame prediction, wherein in the second step, a reference frame which satisfies the following condition is selected as the first reference frame from among the decoded frames: a reference frame which is located before the current frame in display order and which is assigned a smallest first relative index; and in the third step, ( i ) from a first motion vector used for motion-compensating a first block which is in the second reference frame and co-located with a predetermined block in the current frame and from a temporal interval between the first reference frame and the second reference frame, a second motion vector extending from the first block to a block which is in the first reference frame and co-located with a block referred to by the first motion vector is calculated, ( ii ) based on said calculated second motion vector, a motion vector to the first reference frame and a motion vector to the second reference frame are calculated using a predetermined method, and ( iii ) the predictive image is generated through pixel interpolation from a block obtained from the motion vector to the first reference frame and a block obtained from the motion vector to the second reference frame.

In addition to the above, the picture coding method according to the present invention may be a picture coding method, comprising: a first step of selecting either at least a first or second reference frame from among a plurality of coded frames stored in a storage unit by use of a first relative index and a second relative index assigned to said coded frames, in order to select a first reference frame and a second reference frame to be referred to when obtaining a block on a current frame to be coded by means of motion compensation; a second step of generating, through pixel interpolation, a predictive image from a block on at least either the first or second reference frame obtained by means of motion compensation; and a third step of coding a prediction error which is a' difference between the input current frame and the predictive image, and outputting a coded picture signal that includes a signal obtained by coding said prediction error, wherein in the first step, the first reference frame is selected from frames that are located before the current frame in display order, in the second step, ( i ) from a first motion vector used for motion-compensating a first block which is in the second reference frame and co-located with a predetermined block in the current frame and from a temporal interval between the first reference frame selected in the first step and the second reference frame, a second motion vector extending from the first block to a block which is in the first reference frame and co-located with a block referred to by the first motion vector is calculated, ( ii ) based on said calculated second motion vector, a motion vector to the first reference frame selected in the first step and a motion vector to the second reference frame are calculated using a predetermined method, and ( iii ) the predictive image is generated through pixel interpolation from a block obtained from the motion vector to the first reference frame selected in the first step and a block obtained from the motion vector to the second reference frame, and i n the third step, the first relative index indicating the first reference frame selected in the first step is incorporated into the coded picture signal.

In addition to the above, the picture decoding method according to the present invention may be a picture decoding method, comprising: a first step of obtaining a 'coded picture signal that includes a signal obtained by coding a prediction error; a second step of selecting either at least a first or second reference frame from among a plurality of decoded frames stored in a storage unit by use of a first relative index and a second relative index assigned to said decoded frames, in order to select a first reference frame and a second reference frame to be referred to when obtaining a block on a current frame to be decoded by means of motion compensation; a third step of generating, through pixel interpolation, a predictive image from a block on at least either the first or second reference frame obtained by means of motion compensation; a fourth step of generating a decoded picture of a frame from the predictive image and the decoded prediction error; and a fifth step of storing, in the storage unit, a decoded picture of a frame with a possibility to be used for inter-frame prediction, wherein in the first step, the first relative index is obtained from the coded picture signal including first relative indices, and in the second step, ( i ) from a first motion vector used for motion-compensating a first block which is in the second reference frame and co-located with a predetermined block in the current frame and from a temporal interval between the first reference frame selected in the first step and the second reference frame, a second motion vector extending from the first block to a block which is in the first reference frame and co-located with a block referred to by the first motion vector is calculated, ( ii ) based on said calculated second motion vector, a motion vector to the first reference frame selected in the first step and a motion vector to the second reference frame are calculated using a predetermined method, and ( iii ) the predictive image is generated through pixel interpolation from a block obtained from the motion vector to the first reference frame obtained in the first step and a block obtained from the motion vector to the second reference frame.

In addition to the above, the picture coding apparatus according to the present invention may be a picture coding apparatus, comprising: a difference calculation unit operable to obtain a picture signal, calculate a difference between said picture signal and a predictive image, and output said difference as a residual signal; an image coding unit operable to perform image coding on said differential signal, and output said coded signal as a coded residual signal; an image decoding unit operable to decode said coded residual signal, and output said decoded signal as a decoded residual signal; an addition unit operable to add the decoded residual signal and the predictive image, and output a reconstructed image; a direct mode second reference frame selection unit operable to select, as a second reference frame, a reference frame that satisfies the following condition from among coded frames stored in a storage unit: a reference frame that is located after a current frame to be coded and that is assigned a smallest second relative index; a direct mode vector/relative index generation unit operable to generate motion vectors to a first reference frame and to the second reference frame using a predetermined method, based on a motion vector used for motion-compensating a block that is in the second reference frame and co-located with a predetermined block in the current frame, said first reference frame being a frame referred to by the motion vector used for said motion compensation; a pixel interpolation unit operable to perform pixel interpolation on two reference blocks referred to by the motion vector to the first reference frame and the motion vector to the second reference frame, and output the result as the predictive image; and a variable length coding unit operable to perform variable length coding on a prediction error, and output a coded signal.

In addition to the above, the picture decoding apparatus according to the present invention may be a picture decoding apparatus, comprising: a variable length decoding unit operable to obtain a coded picture signal, perform variable length decoding on said signal, and output coded residual signals; an image decoding unit operable to decode each of said coded residual signals, and output decoded residual signals; an addition unit operable to add each of the decoded residual signals and each of predictive image signals, and output decoded pictures; a storage unit operable to store said decoded pictures; a direct mode second reference frame selection unit operable to select, as a second reference frame, a reference frame that is assigned a smallest second relative index; a direct mode vector/relative index generation unit operable to generate motion vectors to a first reference frame and to the second reference frame using a predetermined method, based on a motion vector referred to by a block that is in the second reference frame and co-located with a current block to be coded, said first reference frame being a frame referred to by the motion vector referred to by said block collocated with the current block; and a pixel interpolation unit operable to perform pixel interpolation on the first and second reference frames as well as on two reference blocks referred to by the motion vectors corresponding to the respective reference frames, and output the predictive image signal.

Furthermore, the recording medium according to the present invention is a recording medium in which a program is stored by a computer, the program being intended for performing coding or decoding processing on a moving picture described in any one of the aforementioned picture coding and picture decoding methods as well as causing the computer to execute the coding or decoding processing on a moving picture described in any one of the aforementioned picture coding and picture decoding methods.

Note that it is possible to embody the present invention as the following that use the above-described picture coding method or picture decoding method: a picture coding apparatus, a picture decoding apparatus, a program, and a recording medium storing such program.

**Brief Description of Drawings**

FIG. 1 is a conceptual diagram showing B pictures.
FIG. 2 is a diagram explaining interpolative prediction.
FIG. 3 is a diagram explaining an example case where two reference pictures of an interpolation predictive block are located before a current picture to be coded in display order that includes the interpolation predictive block.
FIG. 4 is a diagram explaining an example case where two reference pictures of an interpolation predictive block are located after a current picture to be coded in display order that includes the interpolation predictive block.
FIGS. 5A and 5B are diagrams explaining picture numbers and reference indices.
FIG. 6 is a diagram explaining direct mode employed by a conventional picture coding apparatus.
FIG. 7 is a block diagram showing a configuration of a conventional picture coding apparatus.
FIG. 8 is a conceptual diagram showing a format of a bit stream.
FIG. 9 is a block diagram showing a configuration of a conventional picture decoding apparatus.
FIG. 10 is a block diagram showing a picture coding apparatus according to a first embodiment of the present invention.
FIG. 11 is a diagram showing a partial structure of a bit stream according to the first embodiment.
FIG. 12 is a flowchart showing an operation of coding a picture in direct mode in the first embodiment.
FIGS. 13A and 13B are diagrams explaining an operation to be performed when remapping takes place in the first embodiment.
FIG. 14 is a diagram explaining an example display order of pictures in the first embodiment.
FIG. 15 is a block diagram showing a picture decoding apparatus according to a second embodiment of the present invention.
FIG. 16 is a flowchart showing an operation of decoding a picture in direct mode in the second embodiment.
FIG. 17 is a block diagram showing a picture coding apparatus according to a third embodiment of the present invention.
FIG. 18 is a diagram showing a structure of a header of a bit stream in the third embodiment.
FIG. 19 is a flowchart showing an operation of coding a picture in direct mode in the third embodiment.
FIG. 20 is a block diagram showing a picture decoding apparatus according to a fourth embodiment of the present invention.
FIG. 21 is a flowchart showing an operation of decoding a picture in direct mode in the fourth embodiment.
FIG. 22 is a block diagram showing a picture coding apparatus according to a fifth embodiment of the present invention.
FIG. 23 is a diagram explaining remapping performed by a management unit in the fifth embodiment.
FIG. 24 is a flowchart showing an operation performed in the fifth embodiment.
FIG. 25 is a diagram showing a configuration of a picture coding apparatus according to a variation of the fifth embodiment.
FIG. 26 is a block diagram showing a picture decoding apparatus according to a sixth embodiment of the present invention.
FIG. 27 is a block diagram showing a picture coding apparatus according to a seventh embodiment of the present invention.
FIG. 28 is a conceptual diagram showing direct mode according to the seventh embodiment.
FIG. 29 is a flowchart showing a process of calculating motion vectors in the seventh embodiment.
FIG. 30 is a block diagram showing a picture decoding apparatus according to an eighth embodiment of the present invention.
FIG. 31 is a block diagram showing a picture coding apparatus according to a ninth embodiment of the present invention.
FIG. 32 shows a format of a bit stream BS3 according to the ninth embodiment.
FIG. 33 is a block diagram showing a picture decoding apparatus according to a tenth embodiment of the present invention.
FIGS. 34A, 34B, and 34C are diagrams explaining a recording medium according to an eleventh embodiment of the present invention.

FIG. 35 is a block diagram showing an overall configuration of a content supply system that realizes a content distribution service according to a twelfth embodiment of the present invention.

FIG. 36 is a diagram showing a cellular phone according to the twelfth embodiment.

FIG. 37 is a block diagram showing the cellular phone according to the twelfth embodiment.

FIG. 38 is a block diagram showing an overall configuration of a digital broadcasting system according to the twelfth embodiment

## Best Mode for Carrying Out the Invention

(First Embodiment)

The following describes the picture coding apparatus according to the first embodiment of the present invention with reference to the figures.

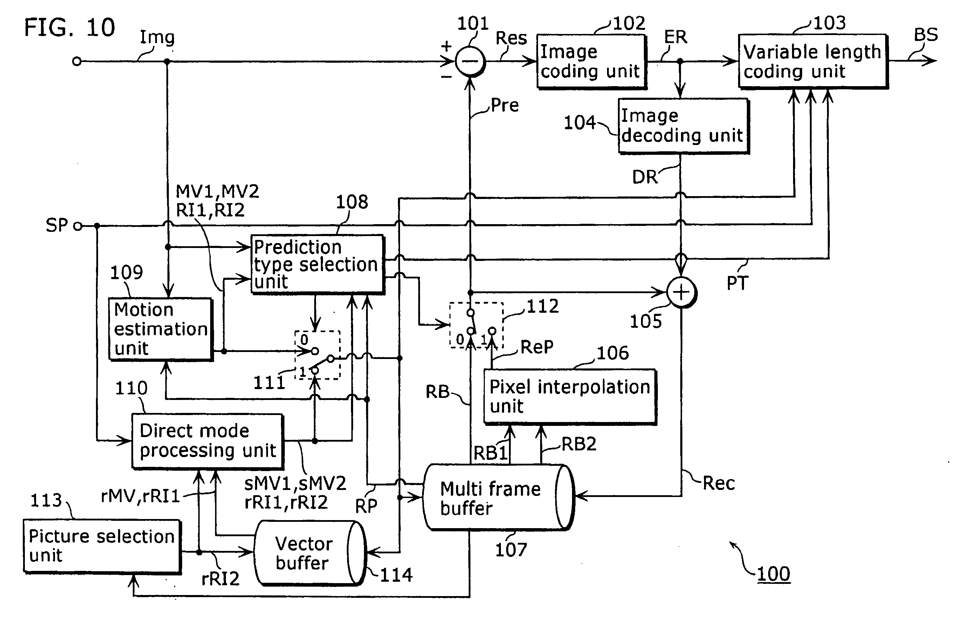

FIG. 10 is a block diagram showing the picture coding apparatus according to the first embodiment.

Such picture coding apparatus 100, which obtains a picture signal Img with the contents representing pictures and codes such picture signal Img on a block-by-block basis, is comprised of a subtracter 101, an image decoding unit 104, a variable length coding unit 103, a motion estimation unit 109, a prediction type selection unit 108, switches 111 and 112, a pixel interpolation unit 106, a direct mode processing unit 110, a vector buffer 114, a multi frame buffer 107, and a picture selection unit 113.

The subtracter 101 subtracts predictive image signals Pre from the picture signal Img, and outputs the resultant as residual signals Res.

The image coding unit 102 obtains the residual signals Res from the subtracter 101 so as to perform image coding processing such as DCT conversion and quantization on each of such residual signals Res, and outputs coded residual signals ER that include quantized DCT coefficients and the like.

The image decoding unit 1 04 obtains the coded residual signals ER from the image coding unit 102 so as to perform image decoding processing such as inverse quantization and inverse DCT conversion on each of such coded residual signals ER, and outputs decoded residual signals DR.

The adder 105 adds each of the decoded residual signals DR and each of the predictive image signals Pre, and outputs the resultant as reconstructed image signals Rec.

Upon the receipt of the reconstructed image signals Rec from the adder 105, the multi frame buffer 107 stores signals with the possibility to be referred to for inter-picture prediction of subsequent pictures, out of such received reconstructed image signals Rec. Since the multi frame buffer 107 has a limited amount of memory, the multi frame buffer 107 removes picture data which will not be used for later inter-picture prediction, out of the reconstructed image signals Rec obtained from the adder 105.

The motion estimation unit 109 obtains a picture stored in the multi frame buffer 907 as a reference picture RP so as to perform motion estimation on it, selects an optimum prediction type for such picture using a predetermined method (a prediction type to be selected depends on a picture type) from among the following prediction types: intra picture prediction, first reference picture prediction, second reference picture prediction, and interpolative prediction. Here, the motion estimation unit 109 selects, for example, a prediction type as the optimum prediction type that generates the smallest prediction error among all the prediction types.

When interpolative prediction is selected, the motion estimation unit 109 outputs the first motion vector MV1, the second motion vector MV2, the first reference index RI1, and the second reference index RI2 of the current block to be coded. When intra picture prediction is selected, the motion estimation unit 109 outputs no motion vectors and reference indices as described above. When first reference picture prediction is selected, the motion estimation unit 109 outputs only the first motion vector MV1 and the first reference index RI1. When second reference picture prediction is selected, the motion estimation unit 109 outputs only the second motion vector MV2 and the second reference index RI2.

The vector buffer 114 obtains, from the motion estimation unit 109, the first motion vector MV1, the second motion vector MV2, the first reference index RI1, and the second reference index RI2 on a block-by-block basis. Then, on the basis of such obtainment, the vector buffer 114 stores scaling vectors rMV used for direct mode as well as the picture numbers and reference indices indicating pictures referred to by the respective scaling vectors rMV.

In other words, in direct mode, since a first motion vector used to code a block in a coded picture is used as a scaling vector rMV and a picture referred to by such first motion vector serves as its first reference picture, the vector buffer 114 stores first motion vectors MV1 and first reference indices RI1 with the possibility to be used for direct mode, out of the first motion vectors MV1, the second motion vectors MV2, the first reference indices RI1, and the second reference indices RI2 outputted from the motion estimation unit 109.

Furthermore, the vector buffer 114 obtains a second reference index rRI2 from the picture selection unit 113. After obtaining the second reference index rRI2 from the picture selection unit 113, the vector buffer 114 outputs, as a scaling vector rMV, the first motion vector MV1 of a predetermined block included in a picture indicated by such second reference index rIR2, and outputs the first reference index RI1 indicating a picture referred to by such scaling vector rMV as a first reference index rRI1.

After obtaining a direct mode scaling coefficient SP, a scaling vector rMV, a first reference index rRI1, and a second reference index rRI2, the direct mode processing unit 110 performs processing based on the above-described direct mode on the current block to be coded, and outputs the resultant as a first motion vector sMV1, a second motion vector sMV2, a first reference index rRI1, and a second reference index rRI2. Here, instead of obtaining the direct mode scaling coefficient SP, the direct mode processing unit 110 may obtain display time information that indicates the display time of each of the reference pictures specified by the first reference indices rRI1 and display time information that indicates the display time of each of the reference pictures specified by the second reference indices rRI2 as well as display time information indicating the display time of the current picture to be coded. In this case, the direct mode processing unit 110 shall calculate the difference in display times between each picture from the display time of each picture indicated by such display time information, and performs scaling on the scaling vector rMV using the ratio of the display time difference between each of the pictures. Accordingly, the direct mode processing unit 110 can determine a first motion vector sMV1 and a second motion vector sMVs as in the case of using a direct mode scaling coefficient SP.

The prediction type selection unit 108 obtains ( i ) the picture signal Img, ( ii ) the reference pictures RP, and ( iii ) the first reference indices rRI1, the second reference indices rRI2, the first motion vectors sMV1, and the second motion vectors sMV2 outputted from the direct mode processing unit 110, as well as obtaining the first reference indices RI1, the second reference indices RI2, the first motion vectors MV1, and the second motion vectors MV2 outputted from the motion estimation unit 109. Then, the prediction type selection unit 108 selects a prediction type for the current block to be coded based on such obtained information. In other words, the prediction type selection unit 108 judges whether to apply direct mode or not to such current block to be coded. Furthermore, the prediction type selection unit 108 outputs, to the variable length coding unit 108, type information PT indicating the selected prediction type.

Here, in order to select a selection type, the prediction type selection unit 108 compares, for example, prediction errors at the time of applying/not applying direct mode to the current block. When judging that a prediction error is smaller when direct mode is applied, the prediction type selection unit 108 selects a prediction type that utilizes direct mode. When judging, on the other hand, that a prediction error is smaller when direct mode is not applied, the prediction type selection unit 108 selects a prediction type that does not utilize direct mode.

Furthermore, when selecting to apply direct mode as a prediction type, the prediction type selection unit 108 causes the switch 111 to change the contact from 0 to 1. Accordingly, a first reference index rRI1, a second reference index rRI2, a first motion vector sMV1, and a second motion vector sMV2 outputted from the direct mode processing unit 110 are transmitted to the multi frame buffer 107 via the switch 111 as a first reference index RI1, a second reference index RI2, a first motion vector MV1, and a second motion vector MV2.

Meanwhile, when selecting not to apply direct mode as a prediction type, the prediction type selection unit 108 causes the switch 111 to change the contact from 1 to 0. Accordingly, a first reference index RI1, a second reference index RI2, a first motion vector MV1, and a second motion vector MV2 outputted from the motion estimation unit 109 are transmitted to the variable length coding unit 103 and the multi frame buffer 107 via the switch 111.

Furthermore, when selecting a prediction type other than interpolative prediction, the prediction type selection unit 108 causes the switch 112 to change the contact from 1 to 0, whereas the prediction type selection unit 108 causes the switch 112 to change the contact from 0 to 1 when selecting interpolative prediction as a prediction type. As a result, predictive image signals Pre obtained by the subtracter 101 and the adder 105 are assorted into ones outputted from the multi frame buffer 107 and ones from the pixel interpolation unit 106, depending on the prediction type of each predictive image signal Pre.

At the time of interpolative prediction, the multi frame buffer 107 obtains a first reference index RI1 (rRI1) and a first motion vector MV1 (sMV1) based on the outputs from the motion estimation unit 109 and the direct mode processing unit 110, and outputs, to the pixel interpolation unit 106, a reference block RB1 corresponding to such first reference index RI1 and first motion vector MV1. Furthermore, the multi frame buffer 107 obtains a second reference index RI2 (rRI2) and a second motion vector MV2 (sMV2) based on the outputs from the motion estimation unit 109 and the direct mode processing unit 110, and outputs, to the pixel interpolation unit 106, a reference block RB2 corresponding to such second reference index RI2 and second motion vector MV2.

At the time of first reference picture prediction, the multi frame buffer 107 outputs a reference block RB corresponding to the first reference index RI1 and the first motion vector MV1. Meanwhile, at the time of second reference picture prediction, the multi frame buffer 107 outputs a reference block RB corresponding to the second reference index RI2 and the second motion vector MV2. Note that when intra picture prediction is selected, the multi frame buffer 107 outputs a block RB that is made up of pixels generated as a result of intra picture prediction.

After obtaining the reference blocks RB1 and RB2 from the multi frame buffer 107, the pixel interpolation unit 106 interpolates the pixel values of co-located pixels of the respective reference blocks RB1 and RB2, and outputs the resultant as an interpolated block ReP.

The contacts of the switch 112 are changed according to a prediction type indicated by the prediction type selection unit 108 as described above. Therefore, when prediction other than interpolative prediction is selected as a prediction type, a block RB from the multi frame buffer 107 is transmitted to the subtracter 101 and the adder 105 via the switch 112 as a predictive image signal Pre. When interpolative prediction is selected as a prediction type, on the other hand, an interpolated block ReP from the pixel interpolation unit 106 is transmitted to the subtracter 101 and the adder 105 via the switch 112 as a predictive image signal Pre.

The variable length coding unit 103 performs variable length coding on the coded residual signals ER, the first reference indices RI1, the second reference indices RI2, the first motion vectors MV1, the second motion vectors MV2, the direct mode scaling coefficients SP, and the type information PT, and outputs the resultant as a bit stream BS. In the case where display time information is used by the direct mode processing unit 110 instead of the direct mode scaling coefficients SP, the variable length coding unit 103 performs variable length coding on the display time information used for the above-performed scaling without variable length coding the direct mode scaling coefficients SP, and incorporates the variable length-coded display time information into the bit stream BS.

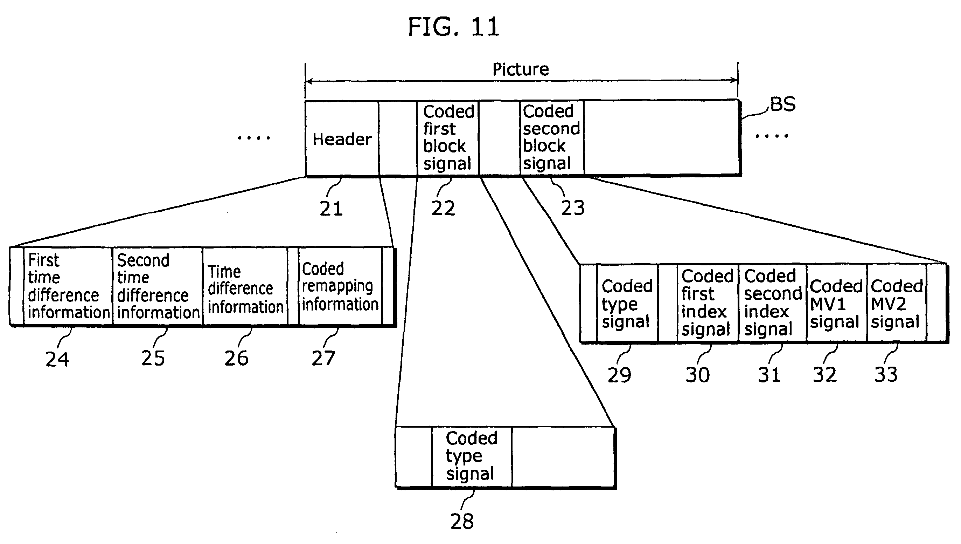

FIG. 11 is a diagram showing a partial structure of the bit stream BS.

The bit stream BS is structured on a picture-by-picture basis, where information about the header and blocks is included on a picture-by-picture basis.

The part of the bit stream BS shown in FIG. 11, which is the equivalent of a picture that includes blocks coded in direct mode, is made up of a header 21, a coded first block signal 22, and a coded second block signal 23.

The coded first block signal 22, which indicates a block coded in direct mode, includes a coded type signal 28 obtained by coding type information PT that indicates the use of direct mode.

The coded second block signal 23, which indicates a block coded in interpolative prediction other than in direct mode, includes: a coded type signal 29 obtained by coding type information PT that indicates the non-use of direct mode; a coded first index signal 30 obtained by coding a first reference index RI1; a coded second index signal 31 obtained by coding a second reference index RI2; a coded MV1 signal 32 obtained by coding a first motion vector MV1; and a coded MV2 signal 33 obtained by coding a second motion vector MV2.

The header 21 includes: coded remapping information 27 obtained by coding remapping information indicating a change in the assignment of reference indices to the picture; a coefficient TR1 included in a direct mode scaling coefficient SP shown in FIG. 6, i.e. first time difference information 24 obtained by coding the difference in display times between the current picture to be coded and the first reference picture; a coefficient TR2 included in the direct mode scaling coefficient SP, i.e. second time difference information 25 obtained by coding the difference in display times between the current picture to be coded and the second reference picture; and a coefficient TR0 included in the direct mode scaling coefficient SP, i.e. time difference information 26 obtained by coding the difference in display times between the first reference picture and the second reference picture. Note that when the direct mode processing unit 110 uses not the direct mode scaling coefficient SP but display time information, the header includes a signal obtained by coding the display time information of the picture, instead of the first time difference information 24, the second time difference information 25 and the time difference information 26.

Here, the picture selection unit 113 in the present embodiment selects, as a second reference picture, a picture to be used for direct mode from among pictures stored in the multi frame buffer 107.

Stated another way, the picture selection unit 113 selects, as the second reference picture for direct mode, a picture with the smallest second reference index among the pictures located after the current picture to be coded in display order.

Then, the picture selection unit 113 outputs, to the vector buffer 114 and the direct mode processing unit 110, the second reference index rRI2 of such selected second reference picture. Note that the picture selection unit 113 can know about the display order of each picture by using information about display order attached to each picture.

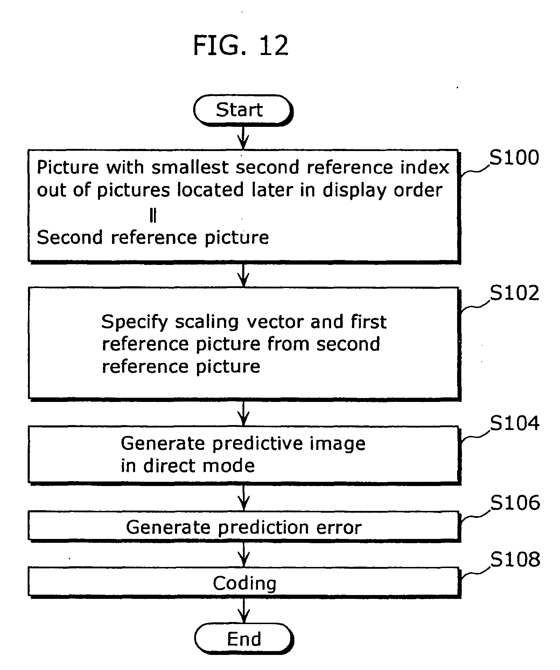

FIG. 12 is a flowchart showing the operation of coding a picture in direct mode in the present embodiment.

First, the picture coding apparatus 100 causes the picture selection unit 113 to select a picture with the smallest second reference index as the second reference picture, from among the subsequent pictures of the current picture to be coded in display order (Step S100).

Next, the picture coding apparatus 100 causes the vector buffer 114 to specify, as a scaling vector rMV, the first motion vector MV1 of a block that is co-located with the current block and included in the second reference picture selected in the above manner, and to specify, as a first reference picture, a picture referred to by such first motion vector MV1 (Step S102).

Then, the picture coding apparatus 100 generates a predictive image in direct mode through the direct mode processing unit 110, the multi frame buffer 107, and the pixel interpolation unit 106, utilizing the second reference picture selected in the above manner as well as the first reference picture and the scaling vector rMV specified in the above manner (Step S104).

After generating the predictive image, the picture coding apparatus 100 generates a prediction error from the current block to be coded and such predictive image (Step S106), and codes such generated prediction error (Step S108).

Here, a description is given of the operation to be performed in the first embodiment when a change is made in first reference indices and second reference indices to be assigned to other pictures with respect to the current picture to be coded (such operation is hereinafter refereed to as "remapping").

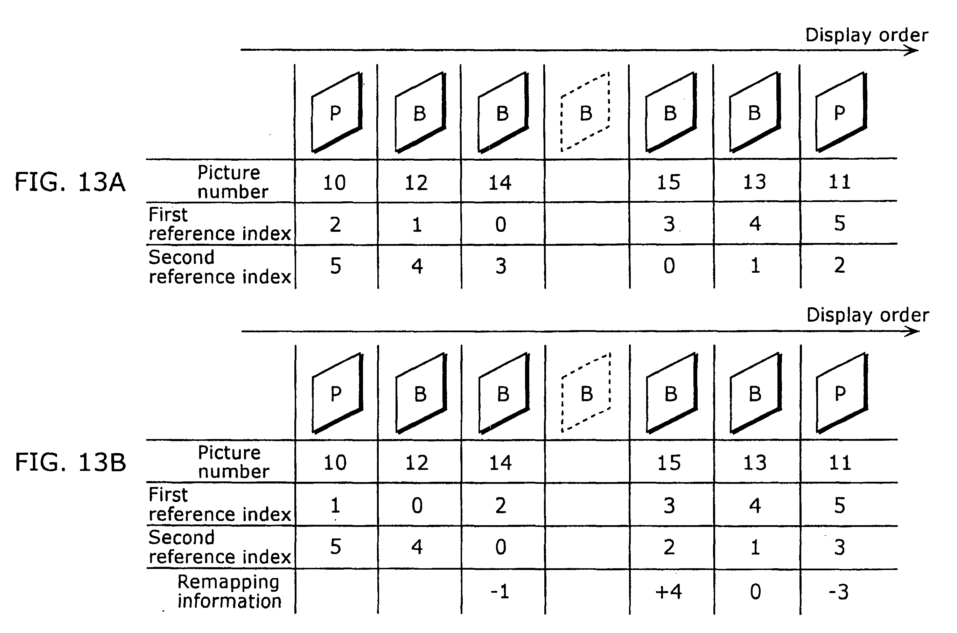

FIGS. 13A and 13B are diagrams explaining the operation to be carried out in the first embodiment when remapping takes place.

FIG. 13A shows first reference indices and second reference indices assigned to the respective pictures before remapping takes place (in the default state).

Before remapping takes place, i.e. in the default state, 0, 1, and 2 are assigned as first reference indices to all the pictures preceding the current picture in display order which is indicated by dotted lines in FIG. 13A, in order of proximity to such current picture to be coded. More specifically, 0 is assigned as a first reference index to a picture with the picture number 14, 1 is assigned as a first reference index to a picture with the picture number 12, and 2 is assigned as a first reference index to a picture with the picture number 10.

At the completion of assigning first reference indices to all the pictures preceding the current picture in display order, then, 3, 4, and 5 are assigned as first reference indices to all the pictures located after the current picture in display order, in order of proximity to such current picture to be coded. More specifically, 3 is assigned as a first reference index to a picture with the picture number 15, 4 is assigned as a first reference index to a picture with the picture number 13, and 5 is assigned as a first reference index to a picture with the picture number 11.

Subsequently, 0, 1, and 2 are assigned as second reference indices to all the pictures located after the current picture in display order, in order of proximity to such current picture to be coded. More specifically, 0 is assigned as a second reference index to a picture with the picture number 15, 1 is assigned as a second reference index to a picture with the picture number 13, and 2 is assigned as a second reference index to a picture with the picture number 11.

At the completion of assigning second reference indices to all the pictures located after the current picture in display order, then, 3, 4, and 5 are assigned as second reference indices to all the pictures preceding the current picture in display order, in order of proximity to such current picture to be coded. More specifically, 3 is assigned as a second reference index to a picture with the picture number 14, 4 is assigned as a second reference index to a picture with the picture number 12, and 5 is assigned as a second reference index to a picture with the picture number 10.

FIG. 13B shows first reference indices and second reference indices assigned to the respective pictures as well as remapping information in the case where remapping was carried out.

When remapping takes place, the first reference index assigned to a picture with the picture number "14" is changed, for example, from "0" to "2", the first reference index assigned to a picture with the picture number "12" is changed from "1" to "0", and the first reference index assigned to a picture with the picture number "10" is changed from "2" to "1". Moreover, the second reference index assigned to a picture with the picture number "14" is changed from "3" to "0", the second reference index assigned to a picture with the picture number "15" is changed from "0" to "2", and the second reference index assigned to a picture with the picture number "11" is changed from "2" to "3".

Remapping information is made up of numerical values indicating changes in reference indices of respective pictures subject to such changes. Remapping information shown in FIG. 13B is for the second reference indices. For example, when the picture which is assigned the second reference index of "0" is changed from a picture with the picture number "15" to a picture with the picture number "14", the value "-1" obtained by subtracting the picture number "15" from the picture number "14" shall be included in the remapping information in association with the picture number "14". Moreover, when the picture which is assigned the second reference index of "2" is changed from a picture with the picture number "11" to a picture with the picture number "15", the value "+4" obtained by subtracting the picture number "11" from the picture number "15" shall be included in the remapping information in association with the picture number "15". Similarly, when the picture which is assigned the second reference index of "3" is changed from a picture with the picture number "14" to a picture with the picture number "11", the value "-3" obtained by subtracting the picture number "14" from the picture number "11" shall be included in the remapping information in association with the picture number "11". Note that when remapping as shown in FIG. 13B is carried out, the picture which is assigned the second reference index of "1" shall not be changed, but the value "0" is included in the remapping information in association with the picture number "13".

Such remapping information is managed by the management unit in the picture coding apparatus 100 not illustrated in the figures, and is used by the motion estimation unit 109, the prediction type selection unit 108, the multi frame buffer 107, and the picture selection unit 113 to specify the first reference indices and second reference indices.

In the present embodiment with the above configuration, the picture selection unit 113 selects, from among the pictures located after the current picture in display order, a picture with the smallest second reference index as the second reference picture. Therefore, when no remapping takes place, a picture with the picture number "15" and with the second reference index "0" is used as a second reference picture in direct mode, whereas when remapping does take place, a picture with the picture number "13" and with the second reference index "1" is used as a second reference picture in direct mode.

Accordingly, even when remapping takes place, since a picture located after the current picture is used as a second reference picture at the time of coding in direct mode, it is not possible for forward two pictures or backward two pictures to be used as first reference pictures or second reference pictures. This allows a forward picture and a backward picture to be used respectively as a first reference picture and a second reference picture without fail, which consequently leads to an improved coding efficiency.

Here, a description is given of the memory capacity of the picture coding apparatus 100 according to the present embodiment.

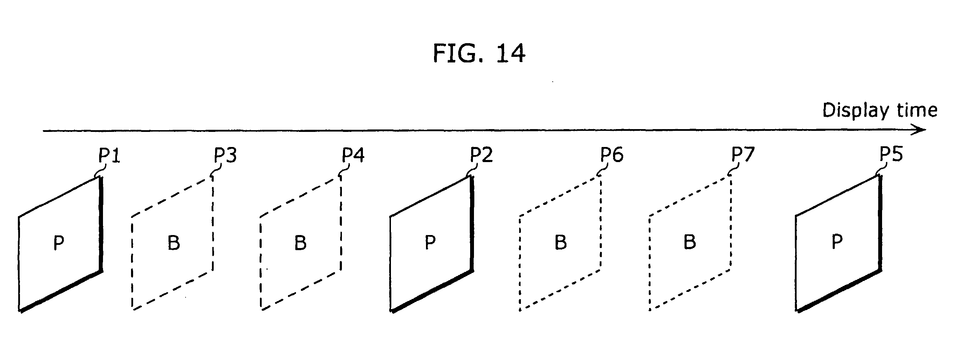

FIG. 14 is a diagram explaining an example display order of pictures.

As FIG. 14 shows, pictures P1~P7 are displayed in the order of the picture P1, the picture P3, the picture P4, the picture P2, the picture P6, the picture P7, and the picture P5, and are coded in the order of the picture P1, the picture P2, the picture P3, the picture P4, the picture P5, the picture P6, and the picture P7 to be stored into the multi frame buffer 107.

Here, B pictures shall not be used as reference pictures. Therefore, the multi frame buffer 107 stores the pictures P1, P2, and P5 which are either I picture or P picture to be handled as reference pictures, and deletes the pictures P3, P4, P6, 'and P7 which are B pictures not to be handled as reference pictures.

When the pictures P3 and P4 are coded, the reference picture P2 serves as a reference picture which is located later in display order than such current pictures to be coded. Meanwhile, when the pictures P6 and P7 are coded, the reference picture P2 serves as a reference picture which is located earlier in display order than such current pictures to be coded.

When pictures have such a relationship as shown in FIG. 14, the reference picture P2 cannot serve as a reference picture located after a current picture to be coded in display order when coding the pictures subsequent to such reference picture P2. In other words, once a reference picture comes before a current picture to be coded in display order, such reference picture shall never come after a current picture to be coded in display order again.

Stated another way, at the point of time when a picture stored in the multi frame buffer 107 comes before a current picture in display order, it becomes possible to delete such reference picture's first motion vectors and information used to identify a picture referred to by each of such first motion vectors stored in the vector buffer 114.

Therefore, when pictures have such a relationship as shown in FIG. 14, the vector buffer 114 is required to hold only the first motion vectors of the reference pictures located after the current picture in display order as well as information used to identify pictures referred to by such first motion vectors. Accordingly, when pictures have a relationship as shown in FIG. 14, it becomes possible to reduce the amount of memory required for the vector buffer 114.

Note that in the present embodiment, a picture with the smallest second reference index is selected as a second reference picture in direct mode, from among pictures that are located after the current picture to be coded in display order. However, a picture to be selected as a second reference picture does not have to be a picture with the smallest reference index, as long as such picture to be selected satisfies a condition under which a second reference picture in direct mode can be uniquely determined from among reference pictures located after the current picture in display order. In such case too, there arises no possibility to refer to only pictures preceding the current picture to be coded, which results in an increased coding efficiency. Furthermore, a second reference picture in direct mode may also be a picture which is closest to the current picture to be coded in display order among the reference pictures subsequent to such current picture in display order. This can also improve coding efficiency as in the above case.

Furthermore, it is also possible that a second reference picture for direct mode is a picture with the smallest second reference index among the pictures that are located after the current picture to be coded in display order and further that a first reference picture for direct mode is a picture with the smallest first reference index among the pictures that are located before the current picture to be coded in display order. Coding efficiency can be improved in this case too, as in the above case.

(Second Embodiment)

The following describes the picture decoding apparatus according to the second embodiment of the present invention with reference to the figures.

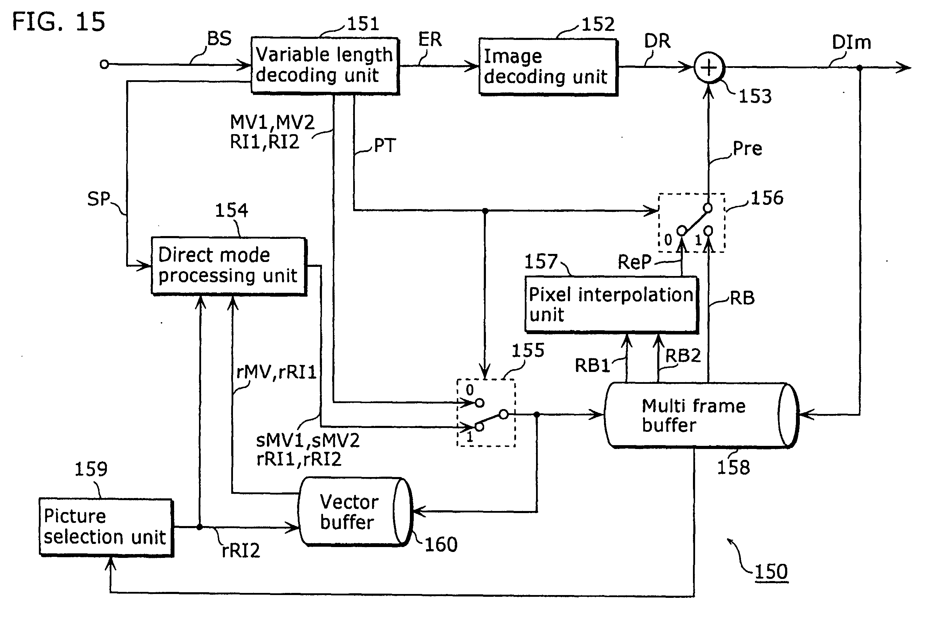

FIG. 15 is a block diagram showing the picture decoding apparatus according to the second embodiment.

Such picture decoding apparatus 150, which decodes the bit stream BS outputted from the picture coding apparatus 100 in the first embodiment, is comprised of a variable length decoding unit 151, an image decoding unit 152, an adder 153, switches 155 and 156, a direct mode processing unit 154, a pixel interpolation unit 157, a multi frame buffer 158, a vector buffer 160, and a picture selection unit 159.

The variable length decoding unit 151 obtains the bit stream BS from outside the picture decoding apparatus 150, performs variable length decoding on such bit stream BS, and outputs the coded residual signals ER, the motion vectors MV1 and MV2, the reference indices RI1 and RI2, the direct mode scaling coefficients SP, and the type information PT. Here, when the bit stream BS does not include coded direct mode scaling coefficients SP but coded display time information, the variable length decoding unit 151 outputs the display time information instead of the direct mode scaling coefficients SP.

Furthermore, the variable length decoding unit 151 changes the contacts of the switches 155 and 156 according to a prediction type indicated by each type information PT. In other words, when a prediction type is direct mode, the variable length decoding unit 151 changes the contact of the switch 155 from "0" to "1", whereas when a prediction type is other than direct mode, the variable length decoding unit 151 changes the contact of the switch 155 from "1" to "0". Meanwhile, when a prediction type is interpolative prediction, the variable length decoding unit 151 changes the contact of the switch 156 from "1" to "0", whereas when a prediction type is other than interpolative prediction, the variable length decoding unit 151 changes the contact of the switch 156 from "0" to "1".

The image decoding unit 152 obtains the coded residual signals ER from the variable length decoding unit 151 so as to perform image decoding processing such as inverse quantization and inverse DCT conversion on each of such coded residual signals ER, and outputs decoded residual signals DR.

The adder 153 adds each of the decoded residual signals DR and each of the predictive image signals Pre, and outputs the resultant as decoded image signals DIm to outside the picture decoding apparatus 150.

Upon the receipt of the decoded image signals DIm, the multi frame buffer 158 stores signals with the possibility to be referred to for inter-picture prediction of subsequent pictures, out of the decoded image signals DIm. Since the multi frame buffer 158 has a limited amount of memory, the multi frame buffer 158 removes picture data which will not be used for later inter-picture prediction, out of the above-obtained decoded image signals DIm.

The vector buffer 160 obtains, from the motion estimation unit 109, the first motion vectors MV1, the second motion vectors MV2, the first reference indices RI1, and the second reference indices RI2. Then, the vector buffer 160 stores scaling vectors used for direct mode as well as the picture numbers and reference indices indicating pictures referred to by the respective scaling vectors.

In other words, in direct mode, since a first motion vector MV1 used to decode a block in a decoded picture is used as a scaling vector and a picture referred to by such first motion vector MV1 serves as its first reference picture, the vector buffer 160 stores first motion vectors MV1 and first reference indices RI1 with the possibility to be used for direct mode, out of the first motion vectors MV1, the second motion vectors MV2, the first reference indices RI1, and the second reference indices RI2 outputted from the variable length decoding unit 151.

Furthermore, the vector buffer 160 obtains a second reference index rRI2 from the picture selection unit 159. After obtaining the second reference index rRI2 from the picture selection unit 159, the vector buffer 160 outputs, as a scaling vector rMV, the first motion vector MV1 of a predetermined block included in a picture indicated by such second reference index rIR2, and outputs the first reference index RI1 indicating a picture referred to by such scaling vector rMV as a first reference index rRI1.

After obtaining a direct mode scaling coefficient SP, a scaling vector rMV, and a first reference index rRI1, the direct mode processing unit 154 performs processing based on the above-described direct mode on the current block to be decoded, and outputs, as the resultant, a first motion vector sMV1, a second motion vector sMV2, a first reference index rRI1, and a second reference index rRI2. Here, when obtaining display time information of each picture instead of the direct mode scaling coefficient SP, the direct mode processing unit 154 shall calculate the difference in display times between each picture from the display time of each picture indicated by such display time information, performs scaling on the scaling vector rMV using the ratio of the display time difference between each of the pictures. Accordingly, the direct mode processing unit 154 can determine a first motion vector sMV1 and a second motion vector sMV2 as in the case of using a direct mode scaling coefficient SP.

At the time of interpolative prediction, the multi frame buffer 158 obtains a first reference index RI1 (rRI1) and a first motion vector MV1 (sMV1) based on the outputs from the variable length decoding unit 151 and the direct mode processing unit 154, and outputs, to the pixel interpolation unit 157, a reference block RB1 corresponding to such first reference index RI1 and first motion vector MV1. Furthermore, the multi frame buffer 158 obtains a second reference index RI2 (rRI2) and a second motion vector MV2 (sMV2) based on the outputs from the variable length decoding unit 151 and the direct mode processing unit 154, and outputs, to the pixel interpolation unit 157, a reference block RB2 corresponding to such second reference index RI2 and second motion vector MV2.

At the time of first reference picture prediction, the multi frame buffer 158 outputs a reference block RB corresponding to the first reference index RI1 and the first motion vector MV1. Meanwhile, at the time of second reference picture prediction, the multi frame buffer 158 outputs a reference block RB corresponding to the second reference index RI2 and the second motion vector MV2. Note that when intra picture prediction is selected, the multi frame buffer 158 outputs a block RB that is made up of pixels generated as a result of intra picture prediction.

After obtaining the reference blocks RB1 and RB2 from the multi frame buffer 158, the pixel interpolation unit 157 generates interpolated pixels by determining the average value of the pixel values of co-located pixels of the respective reference blocks RB1 and RB2, and outputs the resultant as an interpolated block ReP.

As described above, the contacts of the switch 156 are changed according to a prediction type. Therefore, when a prediction type other than interpolative prediction is selected, a block RB from the multi frame buffer 158 is transmitted to the adder 155 via the switch 156 as a predictive image signal Pre, whereas when interpolative prediction is selected as a prediction type, an interpolated block ReP from the pixel interpolation unit 157 is transmitted to the adder 153 via the switch 156 as a predictive image signal Pre.

Here, the picture selection unit 159 in the present embodiment selects, from among pictures stored in the multi frame buffer 158, a picture to be used for direct mode as the second reference picture.

More specifically, the picture selection unit 159 selects a picture with the smallest second reference index as the second reference picture for direct mode, from among the subsequent pictures of the current picture to be decoded in display order.

Then, the picture selection unit 159 outputs, to the vector buffer 160, the second reference index rRI2 of such selected second reference picture. Note that the picture selection unit 159 can know about the display order of each picture by using information about display order attached to each picture.

Accordingly, the picture decoding apparatus 150 according to the present embodiment can correctly decode the bit stream BS outputted by the picture coding apparatus 100 according to the first embodiment. More specifically, it is possible for the picture decoding apparatus 150 to decode the bit stream outputted by the picture coding apparatus that selects, from among pictures located after the current picture to be coded in display order, a picture with the smallest second reference index as the second reference picture to be used for direct mode.

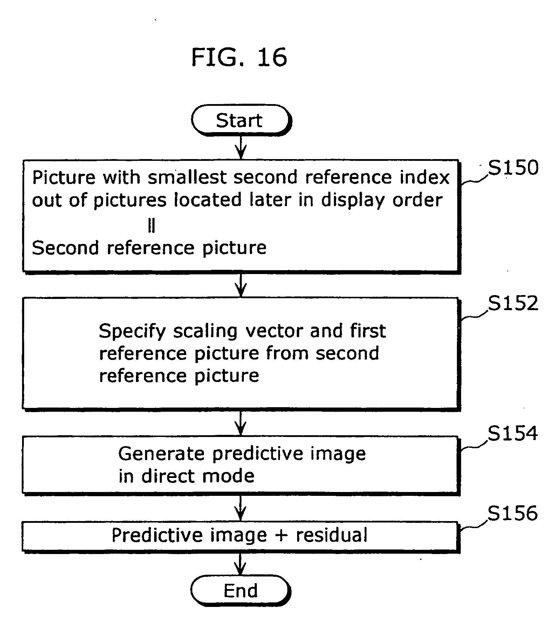

FIG. 16 is a flowchart showing the operation of decoding a picture in direct mode in the present embodiment.

First, the picture decoding apparatus 150 causes the picture selection unit 159 to select a picture with the smallest second reference index value as the second reference picture, from among the subsequent pictures of the current picture to be decoded in display order (Step S150).

Next, the picture decoding apparatus 150 causes the vector buffer 160 to specify, as a scaling vector rMV, the first motion vector of a block that is co-located with the current block to be decoded and included in the second reference picture selected in the above manner, and to specify, as a first reference picture, a picture referred to by such first motion vector MV1 (Step S152).

Then, the picture decoding apparatus 150 generates a predictive image in direct mode through the direct mode processing unit 154, the multi frame buffer 158, and the pixel interpolation unit 157, utilizing the second reference picture selected in the above manner as well as the first reference picture and the scaling vector rMV specified in the above manner (Step S154).

Then, the picture decoding apparatus 150 adds such predictive image to residual data generated by decoding the bit stream BS (Step S156).

As described above, in the present embodiment, since a picture with the smallest reference index is selected as a second reference picture from among the pictures located after the current picture to be decoded in display order, it is possible to correctly decode the bit stream which has been coded by the picture coding apparatus according to the present invention described in the first embodiment. Moreover, it is possible to obtain the same effect as is described in the first embodiment.

Note that the bit stream BS includes the coded remapping information 27 as described in the first embodiment, and the multi frame buffer 158 specifies pictures indicated by the first reference indices and second reference indices, based on remapping information obtained by decoding such coded remapping information 27.

(Third Embodiment)

The following describes the picture coding apparatus according to the third embodiment of the present invention with reference to the figures.

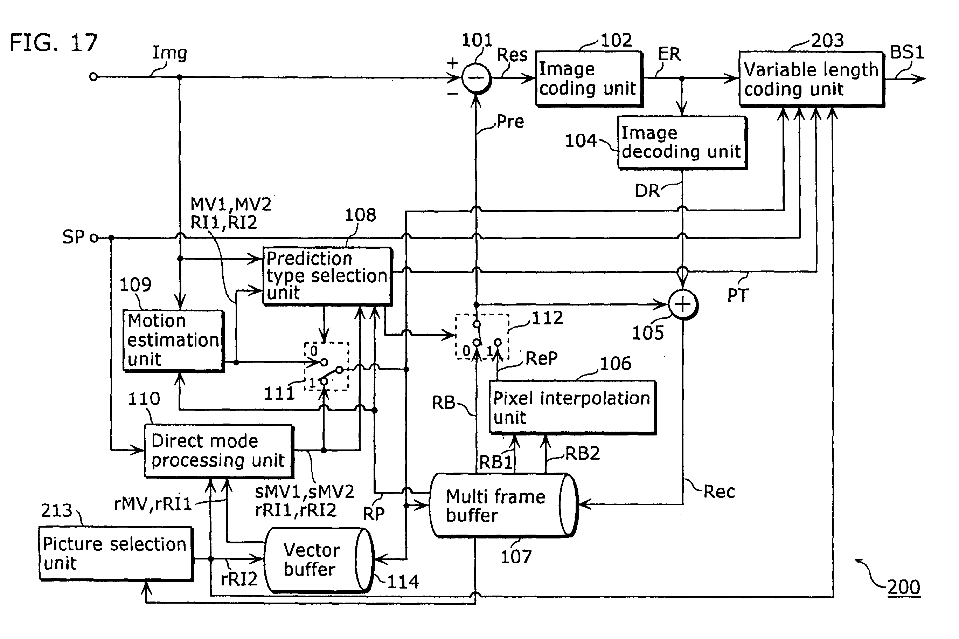

FIG. 17 is a block diagram showing the picture coding apparatus according to the third embodiment.

Such picture coding apparatus 200, which obtains a picture signal Img with the contents representing pictures and codes such picture signal Img on a block-by-block basis, is comprised of the subtracter 101, the image decoding unit 104, a variable length coding unit 203, the motion estimation unit 109, the prediction type selection unit 108, the switches 111 and 112, the pixel interpolation unit 106, the direct mode processing unit 110, the vector buffer 114, the multi frame buffer 107, and a picture selection unit 213.

Here, the subtracter 101, the image decoding unit 104, the motion estimation unit 109, the prediction type selection unit 108, the switches 111 and 112, the pixel interpolation unit 106, the direct mode processing unit 110, the multi frame buffer 107, and the vector buffer 114 in the picture coding apparatus 200 respectively have the same functions as those of the picture coding apparatus 100 according to the first embodiment.

Stated another way, the present embodiment is characterized by the functions of the picture selection unit 213 and the variable length coding unit 203.

The picture selection unit 213 selects a picture located after the current picture to be coded in display order as a second reference picture used for direct mode, from among pictures stored in the multi frame buffer 107.

Then, the picture selection unit 213 outputs the second reference index rRI2 indicating such selected second reference picture to the vector buffer 114, the direct mode processing unit 110, and the variable length coding unit 203.

Note that the picture selection unit 213 can know about the display order of each picture by using information about display order attached to each picture. Furthermore, the picture selection unit 213 selects one second reference picture used in direct mode for the current picture to be coded. In other words, the same second reference picture is selected for all the blocks included in the current picture to be coded to which direct mode shall be applied.

Here, when remapping takes place in the present embodiment, the picture selection unit 213 specifies the first reference index and the second reference index assigned to each picture in the multi frame buffer 107 based on remapping information, as in the case of the first embodiment.

For example, when remapping is not carried out, as shown in FIG. 13A, the picture selection unit 213 selects, as the second reference picture for the current picture to be coded in direct mode, any one of the subsequent pictures of the current block to be coded, i.e. any one of the picture with the picture number "15", the picture with the picture number "13", and the picture with the picture number "11". Then, the picture selection unit 213 outputs the second reference index rRI2 indicating such selected picture. For example, when selecting the picture with the picture number "15" as the second reference picture, the picture selection unit 213 outputs the second reference index rRI2 indicating 0.

Meanwhile, when remapping is carried out, as shown in FIG. 13B, the picture selection unit 213 selects, as the second reference picture for the current picture to be coded in direct mode, any one of the subsequent pictures of the current block to be coded, i.e. any one of the picture with the picture number "15", the picture with the picture number "13", and the picture with the picture number "11", as in the above case. Then, the picture selection unit 213 specifies the second reference index rRI2 indicating such selected picture based on the remapping information, and outputs it.

Accordingly, in the present embodiment, it is possible to improve coding efficiency, even when remapping takes place, since a picture that comes after the current picture to be coded in display order is used as the second reference picture at the time of coding in direct mode, as in the case of the first embodiment.

The variable length coding unit 203 performs variable length coding on the coded residual signals ER, the first reference indices RI1, the second reference indices RI2, the first motion vectors MV1, the second motion vectors MV2, the direct mode scaling coefficients SP, the type information PT, and the remapping information, as well as on each second reference index rRI2 indicating a second reference picture selected by the picture selection unit 213, and outputs the resultant as a bit stream BS1. In the case where the direct mode processing unit 110 does not use the direct mode scaling coefficients SP but display time information, the variable length coding unit 203 performs variable length coding on the display time information used for the above-performed scaling without variable length coding the direct mode scaling coefficients SP, and incorporates the variable length-coded display time information into the bit stream BS1

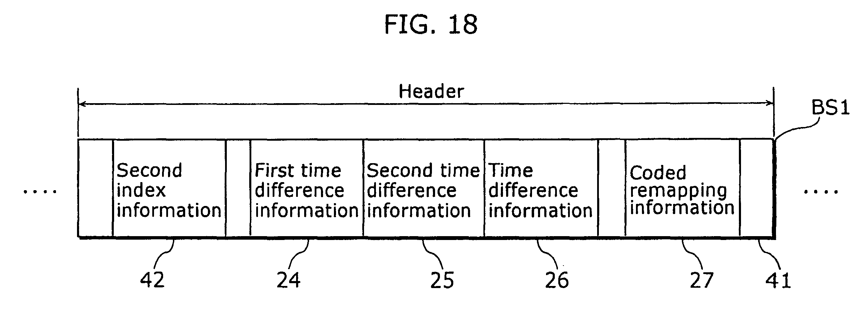

FIG. 18 is a diagram showing the structure of a header of the bit stream BS1.

The bit stream BS1 is structured on a picture-by-picture basis, where information about the header 41 and blocks is included on a picture-by-picture basis, as in the case of the bit stream BS in the first embodiment.

Here, the header 41 included in the bit stream BS1 on a picture-by-picture basis is different from the header 21 included in the bit stream BS on a picture-by-picture basis in the first embodiment.

In other words, each header 41 in the bit stream BS1 includes not only the first time difference information 24, the second time difference information 25, the time difference information 26, and the coded remapping information 27, but also second index information 42 obtained by coding the above-described second reference index rRI2 outputted from the picture selection unit 213.

Note that, as described above, the same value is used as a second reference index rRI2 for all blocks within the current picture to be coded to which direct mode shall be applied. Therefore, a second reference index rRI2 shall be coded only once per picture. Also, the picture decoding apparatus that decodes the bit stream BS1 can uniquely select such second reference picture used for direct mode, by obtaining such second reference index rRI2 and the remapping information.

Also, when not a direct mode scaling coefficient SP but display time information is used for processing performed by the direct mode processing unit 110, information obtained by coding the display time information of the picture is included in the header 41 instead of the first time difference information 24 and the second time difference information 25, as well as the time difference information 26.

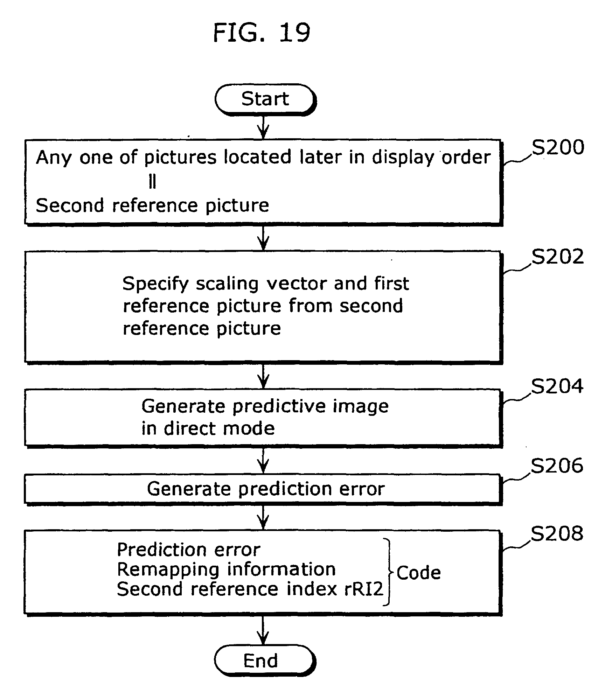

FIG. 19 is a flowchart showing the operation of coding a picture in direct mode in the present embodiment.

First, the picture coding apparatus 200 causes the picture selection unit 213 to select any one of the pictures located after the current picture to be coded in display order, as the second reference picture (Step S200).

Next, the picture coding apparatus 200 causes the vector buffer 114 to specify, as a scaling vector rMV, the first motion vector MV1 of a block that is co-located with the current block and included in the second reference picture selected in the above manner, and to specify, as a first reference picture, a picture referred to by such first motion vector MV1 (Step S202).

Then, the picture coding apparatus 200 generates a predictive image in direct mode through the direct mode processing unit 110, the multi frame buffer 107, and the pixel interpolation unit 106, utilizing the second reference picture selected in the above manner as well as the first reference picture and the scaling vector rMV specified in the above manner (Step S204).

After generating the predictive image, the picture coding apparatus 200 generates a prediction error from the current block to be coded and the predictive image (Step S206), and then codes such generated prediction error, the second reference index rRI2 indicating the second reference picture, and the remapping information (Step S208).

As described above, in the present embodiment, any one of the reference pictures located after the current picture to be coded in display order is selected as the second reference picture in direct mode, and the second reference index rRI2 of such selected reference picture is coded and stored into the bit stream BS1.

In the first embodiment, a picture with the smallest second reference index is selected as a second reference picture used for direct mode, from among the pictures located after the current picture to be coded in display order.

Stated another way, in the third embodiment, as in the case of the first embodiment, it is possible to improve coding efficiency by selecting, as the second reference picture in direct mode, a picture that comes after the current picture to be coded in display order.

The difference between the first embodiment and the third embodiment is as described below. In the first embodiment, a second reference picture in direct mode is determined mutually and uniquely between the picture coding apparatus 100 and the picture decoding apparatus 150 by having the picture coding apparatus 100 hold the procedure of determining a second reference picture in direct mode as well as by having the picture decoding apparatus 150 in the second embodiment hold the same procedure. In the third embodiment, on the other hand, a second reference picture in direct mode is determined mutually and uniquely between the picture coding apparatus 200 and the picture decoding apparatus by incorporating into a bit stream information for uniquely determining such second reference picture and by having the picture coding apparatus 200 and the picture decoding apparatus that decodes such bit stream perform processing based on such information.

As described above, according to the present embodiment, it is possible to ensure consistency between coding processing and decoding processing by coding information to identify a second reference picture selected in coding processing.

Note that in the present embodiment, any one of the pictures located after the current picture to be coded in display order is selected as a s econd reference picture, but a picture with the smallest second reference index may be selected as a second reference picture from among the subsequent pictures in display order, as in the case of the first embodiment. Furthermore, the picture selection unit 213 may select the first reference picture of a current picture to be coded used in direct mode. In this case, the first reference index rRI1 and the second reference index rRI2 shall be coded to be incorporated into the header 41 shown in FIG. 5. Moreover, the picture decoding apparatus that decodes the bit stream BS1 can identify the first reference picture and the second reference picture used in direct mode by obtaining their first reference index rRI1 and second reference index rRI2 from the bit stream BS1.

What is more, according to the format of the bit stream BS1 in the present embodiment, the second index information 42 obtained by coding a second reference index rRI2 is included in the header 41 on a picture-by-picture basis. However, the second reference information 42 may be stored, for example, in ( i ) the header of a coding unit smaller than a picture such as an MPEG slice, ( ii ) the header of a coding unit made up of plural pictures such as a GOP of MPEG, or ( iii ) the. header of the whole sequence. Moreover, in the case where a first reference picture is selected in the above-described manner, information obtained by coding a first reference index rRI1 indicating such first reference picture shall be stored in a header described above.

(Fourth Embodiment)

The following describes the picture decoding apparatus according to the fourth embodiment of the present invention with reference to the figures.

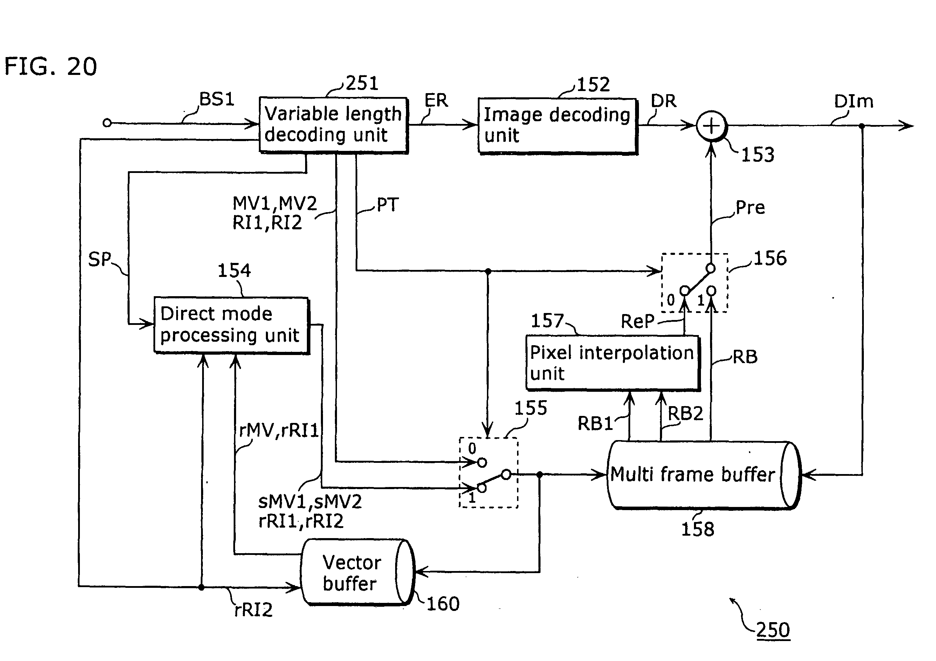

FIG. 20 is a block diagram showing the picture decoding apparatus according to the fourth embodiment.

Such picture decoding apparatus 250, which decodes the bit stream BS1 outputted from the picture coding apparatus 200 in the third embodiment, is comprised of a variable length decoding unit 251, the image decoding unit 152, the adder 153, the switches 155 and 156, the direct mode processing unit 154, the pixel interpolation unit 157, the multi frame buffer 158, and the vector buffer 160.

Here, the image decoding unit 152, the adder 153, the switches 155 and 156, the direct mode processing unit 154, the pixel interpolation unit 157, the multi frame buffer 158, and the vector buffer 160 of the image decoding unit 250 respectively have the same functions as those of the picture decoding apparatus 150 in the second embodiment.

In other words, the present embodiment is characterized by the function of the variable length decoding unit 251.

The variable length decoding unit 251 obtains the bit stream BS1 from outside the picture decoding apparatus 250, performs variable length decoding on such bit stream BS1, and outputs the coded residual signals ER, the motion vectors MV1 and MV2, the reference indices RI1 and RI2, the direct mode scaling coefficients SP, and the type information PT. Here, when the bit stream BS1 does not include coded direct mode scaling coefficients SP but coded display time information, the variable length decoding unit 251 outputs the display time information instead of the direct mode scaling coefficients SP.

Furthermore, the variable length decoding unit 251 decodes the second index information 42 included in each header 41 in the bit stream BS1, and outputs the second reference indices rRI2 to the vector buffer 160 and the direct mode processing unit 154. Moreover, when each header 41 includes coded remapping information 27, the variable length decoding unit 251 decodes the coded remapping information 27, so as to generate remapping information. Then, the variable length decoding unit 251 causes the multi frame buffer 158 to specify a picture indicated by each first reference index RI1 (rRI1) and second reference index RI2 (rRI2), based on the remapping information.

The vector buffer 160 obtains, from the variable length decoding unit 251, the second reference index rRI2, and specifies, as the second reference picture of the current picture to be decoded, a picture indicated by such second reference index rRI2. Then, the vector buffer 160 outputs, as a scaling vector rMV, the first motion vector MV1 of a predetermined block included in the second reference picture, and outputs the first reference index RI1 indicating a picture referred to by such scaling vector rMV as a first reference index rRI1.

As described above, in the present embodiment, the second reference picture used in direct mode is uniquely determined from among the pictures located after the current picture to be decoded in display mode, according to each second index information 42 and each coded remapping information 27 included in the bit stream BS1.

Here, a description is given of the operation of decoding a picture in direct mode in the present embodiment.

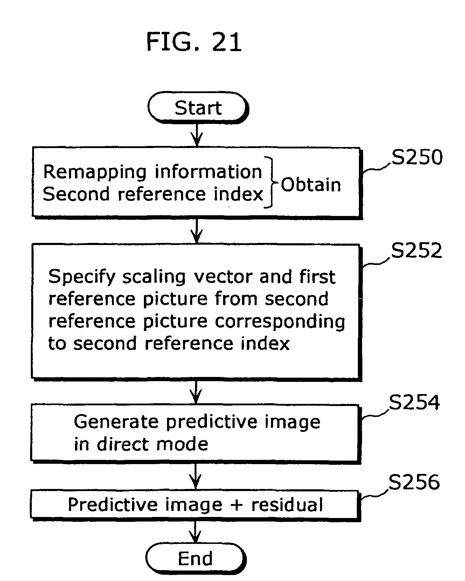

FIG. 21 is a flowchart showing the operation of decoding a picture in direct mode in the present embodiment.

First, the picture decoding apparatus 250 causes the variable length decoding unit 251 to perform variable length decoding on the bit stream BS1, so as to obtain the second reference index rRI2 (Step S250). When the bit stream BS1 includes the coded remapping information 27, the picture decoding apparatus 250 obtains remapping information by decoding such coded remapping information 27.

Next, the picture decoding apparatus 250 causes the vector buffer 160 to specify, as a scaling vector rMV of the current block to be decoded, the first motion vector of a block that is co-located with such current block and included in the second reference picture indicated by the second reference index rRI2, and to specify, as the first reference picture of the current picture to be decoded, a picture referred to by such first motion vector MV1 (Step S252).

Then, the picture decoding apparatus 250 causes the direct mode processing unit 154, the multi frame buffer 158, and the pixel interpolation unit 157 to generate a predictive image in direct mode, utilizing the second reference picture indicated by the second reference index rRI2 obtained in the above manner, as well as the first reference picture and the scaling vector rMV specified in the above manner (Step S254).

Then, the picture decoding apparatus 250 adds such predictive image to residual data generated by decoding the bit stream BS1 (Step S256).

As described above, in the present embodiment, since a second reference picture in direct mode is specified based on each second index information 42 and remapping information 41 included in the bit stream BS1, it is possible to correctly decode the bit stream BS1 transmitted from the picture coding apparatus 200 according to the third embodiment. Moreover, it is possible to obtain the same effect as is described in the third embodiment.

(Fifth Embodiment)

The following describes the picture coding apparatus according to the fifth embodiment of the present invention with reference to the figures.

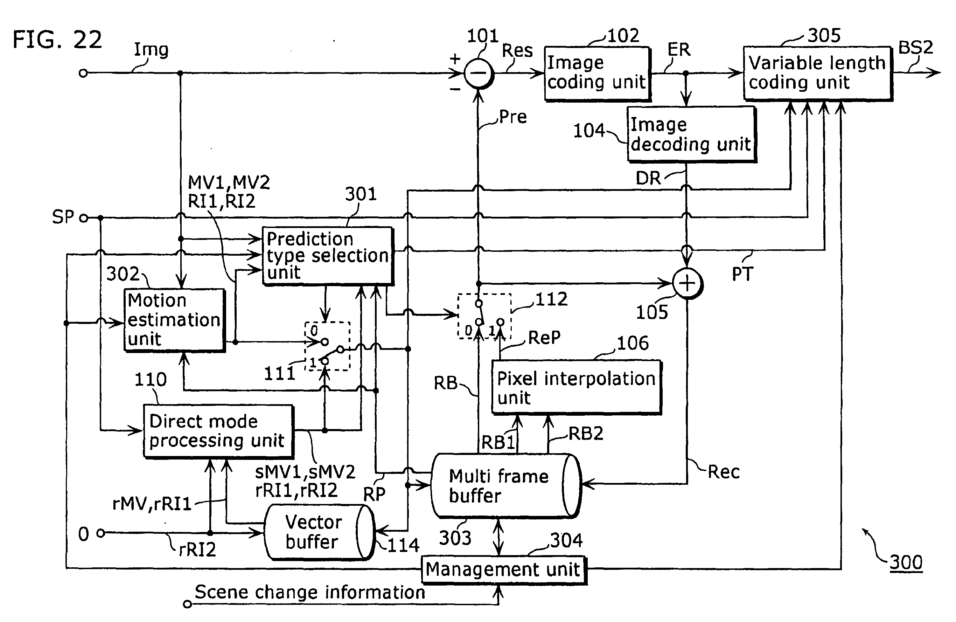

FIG. 22 is a block diagram showing the picture coding apparatus according to the fifth embodiment.

Such picture coding apparatus 300, which obtains a picture signal Img with the contents representing pictures and codes such picture signal Img on a block-by-block basis, is comprised of the subtracter 101, the image decoding unit 104, the switches 111 and 112, the pixel interpolation unit 106, the direct mode processing unit 110, the vector buffer 114, as in the case of the picture coding apparatus 100 according to the first embodiment, and further includes a management unit 304, a motion estimation unit 302, a prediction type selection unit 301, a multi frame buffer 303, and a variable length coding unit 305.

Here, the subtracter 101, the image decoding unit 104, the switches 111 and 112, the pixel interpolation unit 106, the direct mode processing unit 110, and the vector buffer 114 in the picture coding apparatus 300 respectively have the same functions as those of the picture coding apparatus 100 in the first embodiment.

Here, the vector buffer 114 obtains a second reference index rRI2 that always indicates 0, and outputs the scaling vector rMV and the first reference index rRI1 corresponding to such second reference index rRI2 "0".

Moreover, the multi frame buffer 303 in the present embodiment has the function equivalent to that of the multi frame buffer 107 in the first and third embodiments, but information which it stores is under the management of the management unit 304.

Furthermore, the multi frame buffer 303 has a short-term memory and a long-term memory, where pictures are appropriately stored into either the short-term memory or the long-term memory.

The short-term memory is a first-in-first-out (FIFO) memory. When a new signal is stored into this short-term memory, its storage contents are deleted in decreasing order of time stored in the memory, so that a certain number of the latest pictures are always stored in such short-term memory as reference pictures.

The long-term memory is a random access memory capable of storing reference pictures in an arbitrary area as well as of reading out reference pictures stored in an arbitrary area. Such long-term memory, which stores pictures to be referred to for a longer period of time (e.g. background pictures and pictures before scene changes occur), stores pictures equivalent to a longer period of time than those stored in the short-term memory. Also, pictures are stored into the long-term memory by moving pictures stored in the short-term memory into the long-term memory.

The management unit 304 manages information stored in the multi frame buffer 303 in the above manner, and causes remapping to take place when a management result indicates the need for remapping. In other words, the management unit 304 generates remapping information, and outputs such remapping information to the prediction type selection unit 301, the motion estimation unit 302, the variable length coding unit 305, and the multi frame buffer 303.

For example, when judging that there has been a change in the scene (hereinafter referred to as "scene change") based on a result of obtaining scene change information to be descried below, the management unit 304 generates remapping information.

The prediction type selection unit 301, which has the same function as that of the prediction type selection unit 101 in the first and third embodiments, specifies the first reference index and the second reference index assigned to each reference picture based on the remapping information, when obtaining such remapping information from the management unit 304.

The motion estimation unit 302, which has the same function as that of the motion estimation unit 102 in the first and third embodiments, specifies the first reference index and the second reference index assigned to each reference picture based on the remapping information, when obtaining such remapping information from the management unit 304.

Stated another way, when not obtaining remapping information from the management unit 304, the prediction type selection unit 301 and the motion estimation unit 302 assign numerical values to the respective reference pictures preceding and subsequent to the current picture to be coded, according to the default order, i.e. the order shown in FIG. 13A, so as to specify the first reference indices and the second reference indices. Meanwhile, when obtaining remapping information from the management unit 304, the prediction type selection unit 301 and the motion estimation unit 302 assign numerical values to the respective reference pictures preceding and subsequent to the current picture to be coded, according to the order to be determined by taking into account the remapping information to the default order, so as to specify the first reference indices and the second reference indices.

The variable length coding unit 305 performs variable length coding on the coded residual signals ER, the first reference indices RI1, the second reference indices RI2, the first motion vectors MV1, the second motion vectors MV2, the direct mode scaling coefficients SP, and the type information PT, so as to output the resultant as a bit stream BS2, as in the case of the variable length coding unit 105 in the first and third embodiments. Moreover, when obtaining remapping information from the management unit 304, the variable length coding unit 305 codes such remapping information, and incorporates such coded remapping information into each header of the bit stream BS2. In the case where display time information is used instead of the direct mode scaling coefficients SP for the processing performed by the direct processing unit 110, the variable length coding unit 305 performs variable length coding on the display time information used for the above-performed scaling, without variable length coding the direct mode scaling coefficients SP, and incorporates such variable length-coded display time information into the bit stream BS2.

Here, when generating remapping information, the management unit 304 according to the present embodiment generates such remapping information as makes first reference indices and second reference indices assigned to the respective reference pictures satisfy a certain condition.

In the case where there is a scene change when the current block is to be coded by means of interpolative prediction other than direct mode, the management unit 304 generates such remapping information as allows the first reference index of 0 to be assigned preferentially to a reference picture stored in the long-term memory. The judgment on whether a scene change occurs or not is made outside the picture coding apparatus 300 on the basis of the input picture signal Img, so that the result of such judgment shall be provided to the management unit 304 as scene change information. Scene change detection methods (judgment methods) include the following method: determine an absolute value difference between each of pixels co-located with each other in temporally successive pictures, so as to add absolute difference values of all the pixels in the pictures, and judge that there is a scene change when such addition value exceeds a predetermined threshold. Furthermore, it is possible to code a frame (picture) detected as a scene change as an I picture. Accordingly, it becomes possible to search out the point of a scene change by searching for an I picture.

Furthermore, when the current block is coded by means of interpolative prediction in direct mode, the management unit 304 generates such remapping information as allows the second reference index of 0 to be assigned to a reference picture located after such current picture to be coded in display order.

Here, the management unit 304 may generate remapping information that does not change the second reference index "0" of the reference picture which shall be assigned such second reference index 0 by default.

This enables the second reference index 0 to be always assigned to a reference picture that is located after the current picture to be coded in display order, even when remapping occurs.

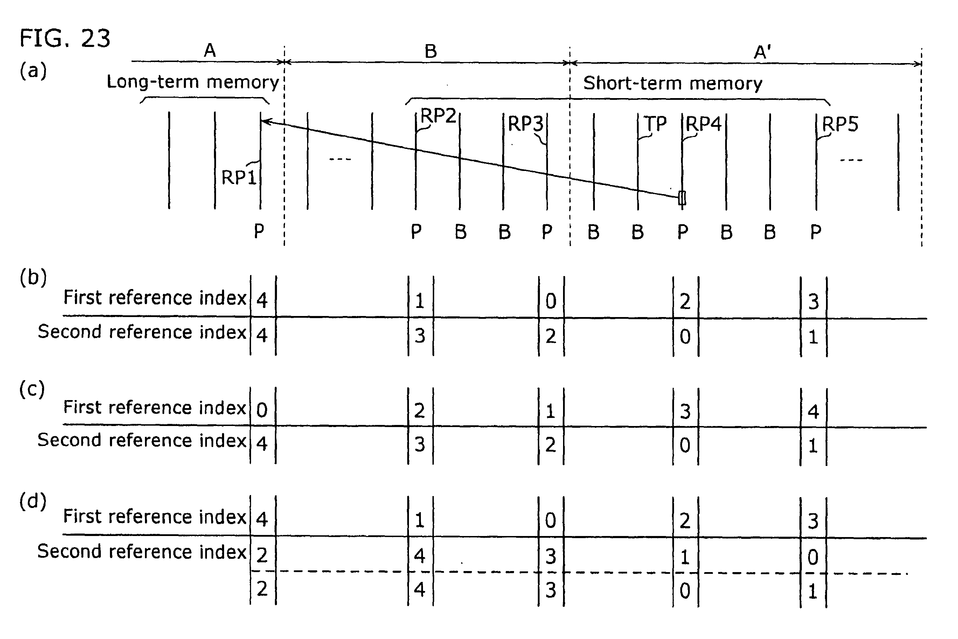

Referring to FIG. 23, a description is given of remapping performed by the management unit 304 with the above configuration.

FIG. 23 is a diagram explaining remapping performed by the management unit 304.

(a) in FIG. 23 is a diagram showing the arrangement of the current picture to be coded and reference pictures in display order.

When a current picture TP, which is a B picture, is coded, any of the P pictures preceding or subsequent to such current picture to be coded TP, e.g. reference pictures RP1, RP2, RP3, RP4 and RP5, is used. Moreover, the reference pictures RP2, RP3, RP4, and RP5, for example, which are located near the current picture TP are stored in the short-term memory in the multi frame buffer 303, whereas the reference picture RP1 located far away from the current picture TP is stored in the long-term memory in the multi frame buffer 303.

In order to identify the reference pictures RP1, RP2, RP3, RP4 and RP5, first reference indices and second reference indices are assigned to these pictures as shown in (b) in FIG. 23 by default.

As (b) in FIG. 23 shows, the reference picture RP1 is assigned the first reference index "4" and the second reference index "4", the reference picture RP2 is assigned the first reference index "1" and the second reference index "3", the reference picture RP3 is assigned the first reference index "0" and the second reference index "2", the reference picture RP4 is assigned the first reference index "2" and the second reference index "0", and the reference picture RP5 is assigned the first reference index "3" and the second reference index "1".

Here, in the case where the current picture TP is to be coded by means of interpolative prediction other than in direct mode, the management unit 304 generates remapping information that allows the first reference index 0 to be assigned from a reference picture stored in the long-term memory, when making the following judgments: the scene A similar to the scene A' that includes the current picture TP is older than the scene B which is not similar to the scene A'; and the reference picture that is located temporally and immediately before the scene A' (being the reference picture RP3 in this case) is included in the scene B which is not similar to the scene A', i.e. a scene change occurs after the reference picture that is located temporally and immediately before the scene A'.

In other words, as shown in (c) in FIG. 23, the first reference index 0 is assigned to the reference picture RP1 stored in the long-term memory.

In the present embodiment, as described above, when a scene change occurs at the time of coding the current picture by means of interpolative prediction other than in direct mode, remapping information is generated that enables the first reference index 0 to be preferentially assigned to a reference picture stored in the long-term memory. Accordingly, the first reference picture with the first reference index "0" used for interpolative prediction has picture information much similar to the current picture to be coded. This consequently contributes to the improvement of coding efficiency.

Stated another way, as shown in (b) in FIG. 23, in the case where such remapping information is not to be generated, the reference picture RP3 indicated by the first reference index "0" shall be used for coding the current picture TP. However, since the reference picture RP3 is dissimilar to the current picture to be coded TP because the reference picture RP3 is included in a different scene, coding efficiency becomes lowered.

Meanwhile, when the current picture TP is coded in direct mode, the management unit 304 generates remapping information as shown in (d) in FIG. 23 that allows the second reference index 0 to be assigned to a reference picture that comes after the current picture to be coded TP in display order, e.g. the reference picture RP5. Furthermore, the management unit 304 may generate remapping information as shown in (b) in FIG. 23 that does not allow the second reference index "0", which shall be assigned to the reference picture RP4 by default, to be assigned to another reference picture.

As described above, in the present embodiment, when the current block is coded by interpolative prediction in direct mode, the second reference index 0 is assigned to a reference picture located after the current picture to be coded in display order, so as to use such reference picture with the second reference index "0" as the second reference picture. Accordingly, it becomes possible to improve coding efficiency.

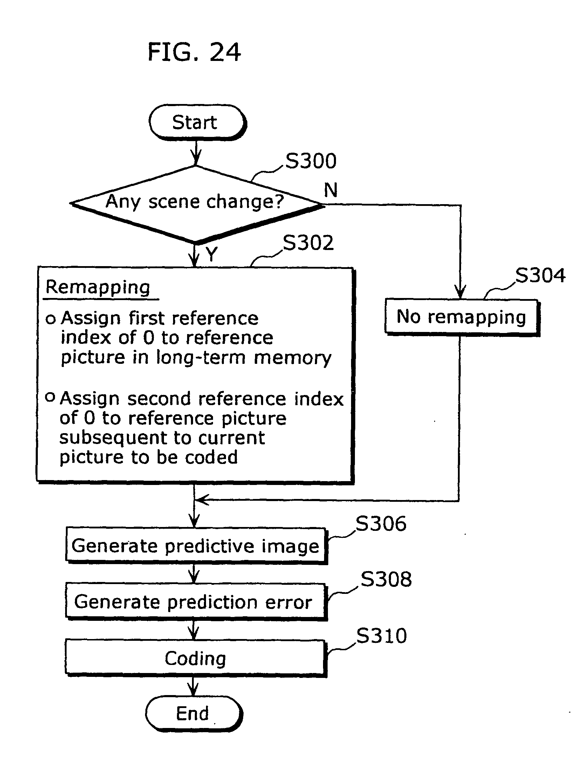

FIG. 24 is a flowchart showing an example operation performed in the present embodiment.

First, the picture coding apparatus 300 judges whether or not there is a scene change, according to whether or not the management unit 304 has obtained the above-mentioned scene change information (Step S300).

Here, when judging that there is a scene change (Y in Step S300), the picture coding apparatus 300 performs remapping in a manner in which the following conditions are satisfied (Step S302): the first reference index 0 is assigned to a reference picture stored in the long-term memory; and the second reference index 0 is assigned to any one of the reference pictures located after the current picture to be coded. Meanwhile, when judging that there is no scene change (N in Step S300), the picture coding apparatus 300 assigns first reference indices and second reference indices according to the default, without performing remapping (Step S304).

Next, the picture coding apparatus 300 specifies the first reference picture and the second reference picture based on the first reference indices and second reference indices assigned in the above manner, and generates a predictive image based on these reference pictures (Step S306).

Subsequently, the picture coding apparatus 300 generates a prediction error from the predictive image (Step S308), and codes it (Step S310).

(Variation)

Here, a description is given of a variation of the management unit according to the present embodiment.

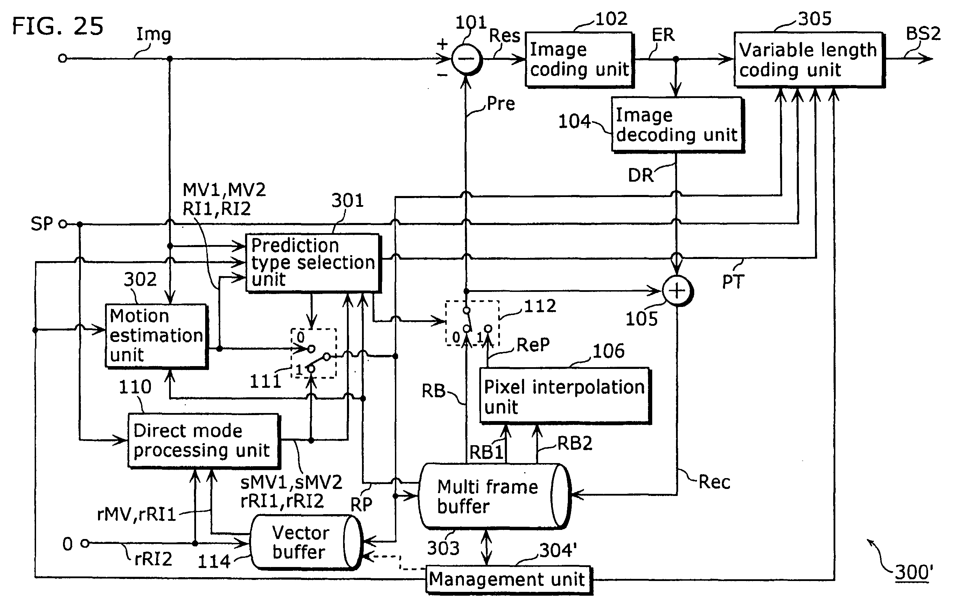

FIG. 25 is a diagram showing a configuration of a picture coding apparatus 300' according to the variation of the present embodiment.

The picture coding apparatus 300' according to the variation is comprised of the image coding unit 102, the image decoding unit 104, a management unit 304' and others, as in the case of the aforementioned picture coding apparatus 300.

Here, in the present embodiment, the second reference index 0 shall be assigned to a reference picture that is located after the current picture to be coded in display order, when such current picture is coded by means of interpolative prediction in direct mode. Stated another way, the management unit 304' prohibits the assignment of the second reference index 0 to any reference pictures that have been located before the current picture in display order. As a result, no first motion vectors used for coding blocks in a reference picture that has been located before a current picture in display order, shall be used as scaling vectors.

Thus, the present variation can improve coding efficiency by omitting processing for storing, into the vector buffer 114, the first motion vectors of blocks in a reference picture that has been located before a current picture in display order for use in the coding of such current picture. In other words, in the present variation, the management unit 304' in the picture coding apparatus 300' deletes, from the vector buffer 114, the first motion vectors of a reference picture that has been located before the current picture in display order.

This prevents motion vectors not necessary for coding from being stored in the vector buffer 114, and therefore reduces the amount of memory of the vector buffer 114.

(Sixth Embodiment)

The following describes the picture decoding apparatus according to the sixth embodiment of the present invention with reference to the figures.

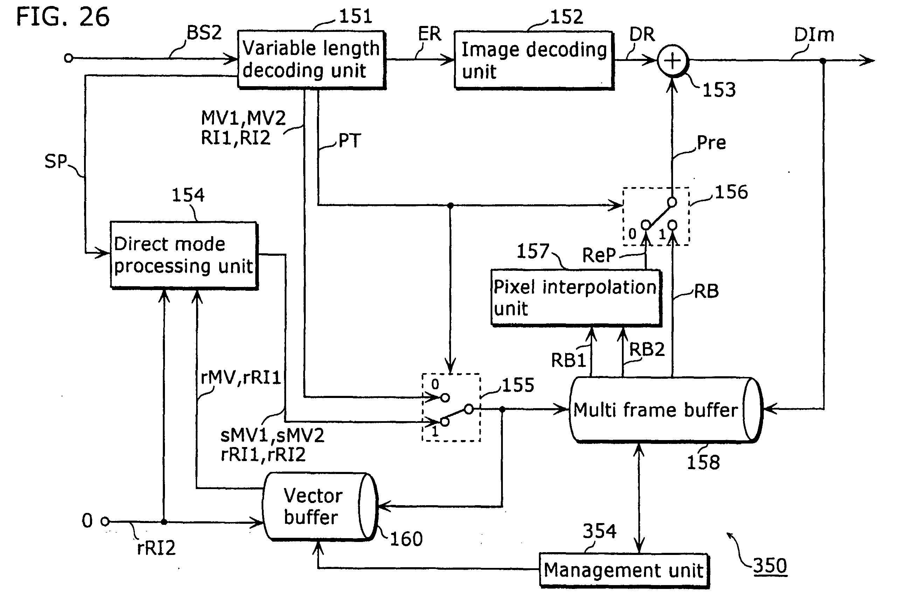

FIG. 26 is a block diagram showing the picture decoding apparatus according to the sixth embodiment.

Such picture decoding apparatus 350, which decodes the bit stream BS2 outputted from the picture coding apparatus 300' according to the variation of the fifth embodiment, is comprised of the variable length decoding unit 151, the image decoding unit 152, the adder 153, the switches 155 and 156, the direct mode processing unit 154, the pixel interpolation unit 157, the multi frame buffer 158, and the vector buffer 160, as in the case of the second embodiment, and further includes a management unit 354.

The picture decoding apparatus 350 has the same configuration as the one described in the second embodiment in which the picture selection unit 159 outputs, to the vector buffer 160, the second reference index rRI2 that always indicate 0.

Moreover, the variable length decoding unit 151 obtains the bit stream BS2, and when such bit stream BS2 include remapping information, the variable length decoding unit 151 causes the multi frame buffer 158 to specify a picture indicated by each first reference index RI1 (rRI1) and second reference index RI2 (rRI2), based on such remapping information.

Here, the management unit 354 monitors reference pictures stored in the multi frame buffer 158, so as to delete, from the vector buffer 160, the first motion vectors MV1 of a reference picture that has been located before the current picture to be decoded in display order.

This prevents motion vectors not necessary for decoding from being stored in the vector buffer 160 also in the present embodiment, as in the case of the variation of the fifth embodiment, and therefore reduces the amount of memory of the vector buffer 160.

(Seventh Embodiment)

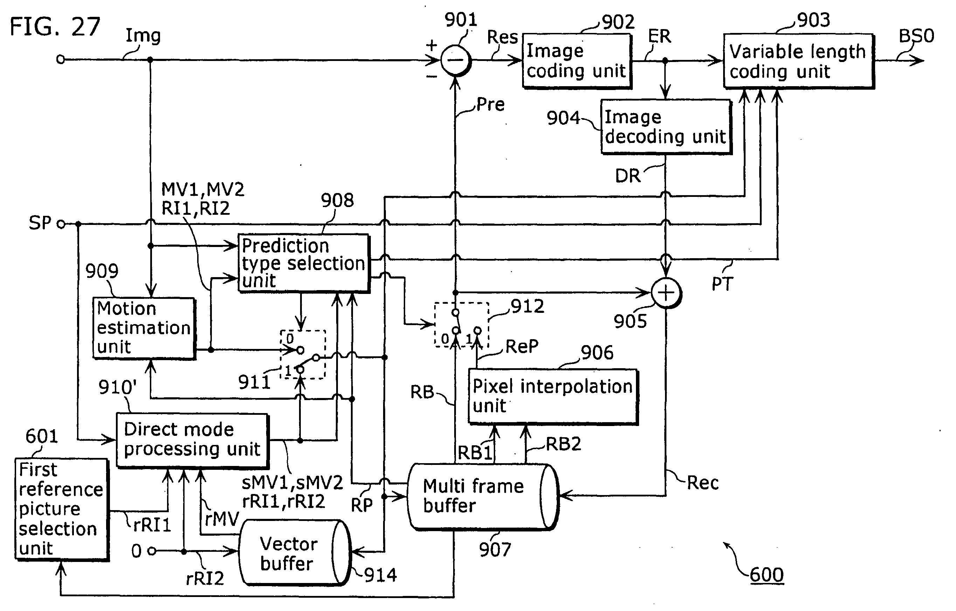

FIG. 27 is a block diagram showing a picture coding apparatus according to the seventh embodiment.

Here, units and signals shown in FIG. 27 which are the same as those of the existing picture coding apparatus 900 shown in FIG. 7 are assigned the same numbers as those assigned to the units and signals of the picture coding apparatus 900, and therefore no description is given of them.

The present embodiment is characterized by that the first reference picture selection unit 601 selects one first reference picture to be commonly used for coding the blocks in the current picture in direct mode. Accordingly, a predetermined reference picture shall be commonly used as the first reference picture to be referred to by scaling vectors in direct mode.

FIG. 28 is a conceptual diagram showing direct mode according to the seventh embodiment.

In FIG. 28, the reference picture RP1 serves as the first reference picture to be commonly used in direct mode. In other words, the first motion vector MV10 of the block B00 refers to the reference picture RPn, but the first motion vector MV01 of the block B0 to which direct mode is applied refers to the above-described reference picture RP1.

More specifically, the motion vector MV0 approximately derived from the block B1 on the common reference picture RP1 is used as a scaling vector, so as to derive the motion vectors MV01 and MV02 used for coding the block B0 in the current picture TP based on the scaling of such scaling vector. Stated another way, the motion vector MV01 of the block B0 on the current picture to be coded TP which is a motion vector derived from the block RB01 on the picture RP1 and the motion vector MV02 of the block RB02 on the picture RP3 are determined by using the motion vector MV0 as a scaling vector.

Note that in the present embodiment, the direct mode processing unit 910' performs the above-described processing in direct mode.

Meanwhile, conventionally, information for identifying the reference picture RPn to be refereed to by the motion vector MV10 is required for performing scaling and such information needs to be stored on the memory.

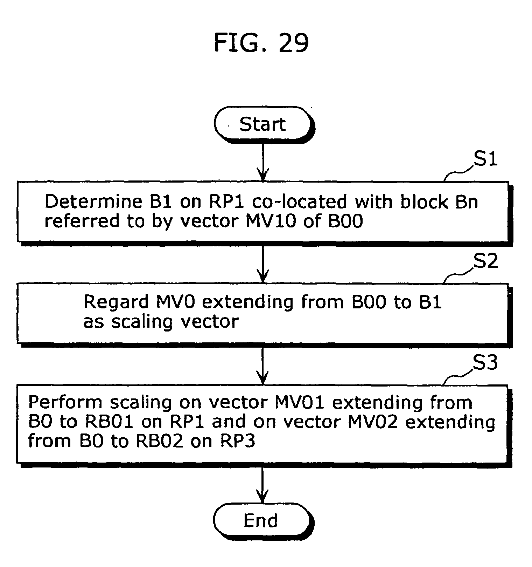

Here, referring to FIG. 29, a description is given of a method of calculating the motion vectors MV01 and MV02.

FIG. 29 is a flowchart showing the process of calculating the motion vectors MV01 and MV02.

First, the picture coding apparatus 600 determines the block B1 on the first reference picture RP1 which is co-located with the block Bn referred to by the motion vector MV10 of the block B00 (Step S1).

Next, the picture coding apparatus 600 regards the motion vector MV0 extending from the block B00 to the block B1 as a scaling vector (Step S2).

Then, the picture coding apparatus 600 determines the motion vectors MV01 and MV02 from such scaling vector MV0 (Step S3).

As described above, by using one picture as the first reference picture to be commonly used in direct mode regardless of a reference picture referred to by the motion vector MV10, it becomes not necessary for the vector buffer 914 to store the picture number of a reference picture referred to by the motion vector MV10 (being the picture number of the reference picture RPn in FIG. 28). Instead, as shown in FIG. 27, the first reference picture selection unit 601 selects a first reference picture to be commonly used in direct mode, and outputs the first reference index rRI1 of such first reference picture. Note that an example method of selecting a first reference picture to be commonly used in direct mode is to select a reference picture which comes before the current picture to be coded in display order and which is assigned the smallest first reference index value.

As described above, according to the present embodiment, by using one first reference picture as the picture to be commonly used for all the blocks in a picture to be coded in direct mode, there is no need to store in the memory information used to identify a reference picture referred to by a scaling vector. In other words, it becomes possible to reduce the amount of memory. Furthermore, by using a single first reference picture as the picture to be commonly used for all the blocks in a picture to be coded in direct mode, it becomes possible to simplify coding processing and therefore to improve coding efficiency. Note that information used to identify a picture referred to by a first motion vector is, for example, its picture number shown in FIG. 13, but any other information may serve as such identification information as long as a picture referred to by the motion vector can be uniquely determined by such information.

Note that in the present embodiment, the picture with the smallest first reference index among pictures located before the current picture to be coded is selected as the first reference picture to be commonly used in direct mode. However, the reference picture that is closest to the current picture in display order among the pictures preceding such current picture may be selected as the above first reference picture.

Also, in the present embodiment, by using a preceding picture of the current picture as at least one of the reference pictures referred to by such current picture to be coded, which is a B picture, there arises no possibility that only pictures located after the current picture to be coded will be used as reference pictures. Accordingly, it becomes possible to raise the possibility of improving coding efficiency.

Furthermore, in the present embodiment, a second reference picture may be selected in a manner equivalent to that of the first embodiment. In this case, coding efficiency will be improved as a result of combing the coding method presented in the first embodiment and the coding method presented in the present embodiment.

Moreover, in the present embodiment, the direct mode processing unit 910' performs scaling on a scaling vector rMV by use of a direct mode scaling coefficient SP. However, display time information may be used to perform scaling on the scaling vector rMV, as in the case of the other embodiments. In such case, referring to FIG. 28, not the motion vector MV0 but the motion vector MV10 shall be used as a scaling vector. Stated another way, the first motion vector MV01 of the current block B0 is determined by scaling the motion vector MV10 according to the ratio of the difference in the display times between the picture TP and the picture RPn with respect to the difference in the display times between the picture RP3 and the picture RPn, and the second motion vector MV02 of the current block B0 is determined by scaling the motion vector MV10 according to the ratio of the difference in the display times between the picture TP and the picture RP3 with respect to the difference between the display times in the picture RP3 and the picture RPn.

(Eighth Embodiment)

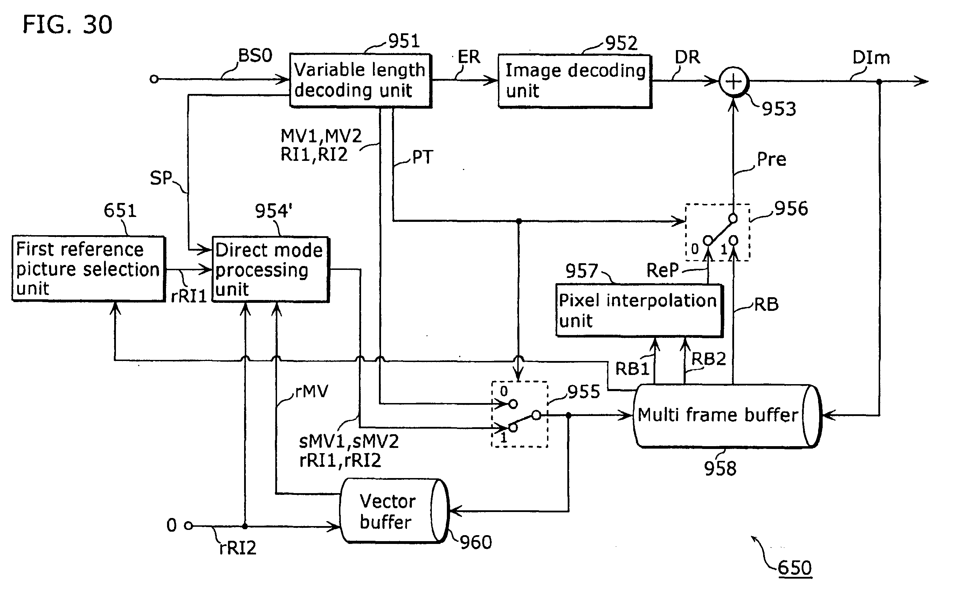

FIG. 30 is a block diagram showing a picture decoding apparatus according to the eighth embodiment.

Here, units and signals shown in FIG. 30 which are the same as those of the existing picture decoding apparatus 950 shown in FIG. 9 are assigned the same numbers as those assigned to the units and signals of the picture decoding apparatus 950, and no description is given of them.

The picture decoding apparatus 650 according to the present embodiment decodes the bit stream BS0 outputted by the picture coding apparatus 600 described in the seventh embodiment.

A first reference picture selection unit 651 selects a first reference picture in a manner which is the same as that of the first reference picture selection unit 601 shown in FIG. 27. Then, the first reference picture selection unit 651 outputs, to the direct mode processing unit 954', the first reference index rRI1 of such selected first reference picture.

Subsequently, the direct mode processing unit 954' performs the processing in direct mode shown in FIG. 28.

As described above, by using one first reference picture which shall be commonly used for all the blocks in a picture subject to direct mode coding, it becomes unnecessary to hold information used to identify reference pictures for direct mode. This also contributes to the reduction in the amount of memory of the vector buffer 960 compared to the conventional cases.

As described above, according to the present embodiment, it is possible to correctly decode the bit stream BS0 which has been coded by the picture coding apparatus 600 in the seventh embodiment. Moreover, it is possible to obtain the same effect as is described in the seventh embodiment.

(Ninth Embodiment)

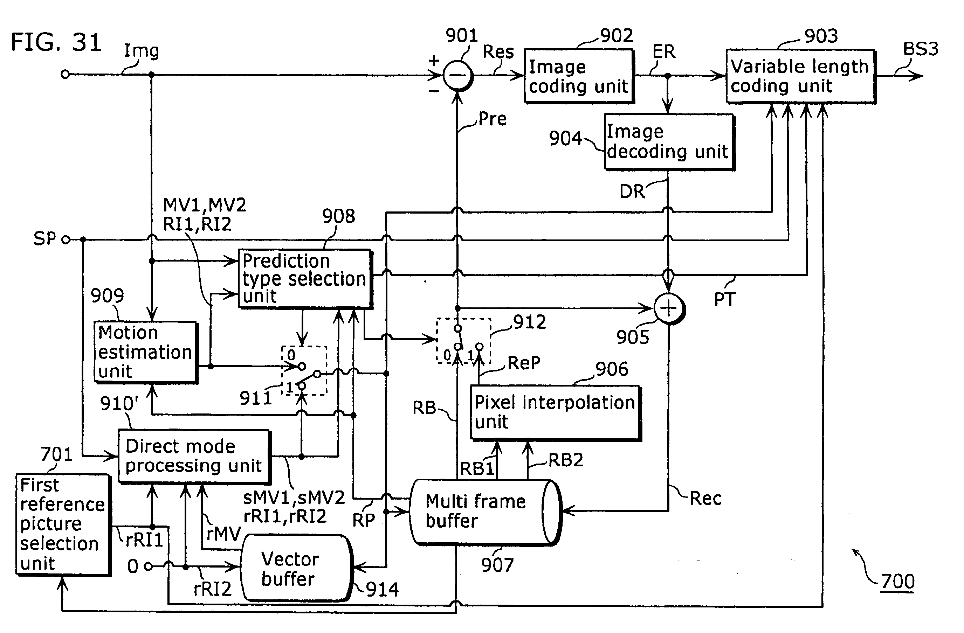

FIG. 31 is a block diagram showing a picture coding apparatus according to the ninth embodiment.

Here, units and signals shown in FIG. 31 which are the same as those of the existing picture coding apparatus 900 shown in FIG. 7 are assigned the same numbers as those assigned to the units and signals of the picture coding apparatus 900, and therefore no description is given of them.

In the seventh embodiment, the first reference picture to be commonly used in direct mode is selected by the same single method which has been predetermined by the picture coding apparatus 600 and the picture decoding apparatus 650, and information indicating such selected first reference picture shall not be stored in the bit stream BS0. In the present embodiment, however, the first reference index of the selected first reference picture shall be stored in a bit stream.

In other words, the ninth embodiment is different from the seventh embodiment in the point described below. In the seventh embodiment, the first reference picture in direct mode is uniquely determined by having the picture coding apparatus 600 hold the procedure for uniquely determining the first reference picture in direct mode as well as by having the picture decoding apparatus 650 in the eighth embodiment hold the same procedure. In the ninth embodiment, on the other hand, by incorporating, into a bit stream, information used for uniquely determining the first reference picture in direct mode, such first reference picture in direct mode is mutually and uniquely determined by the picture decoding apparatus that decodes such bit stream and by the picture coding apparatus 700.

The first reference picture selection unit 701 selects a first reference picture for direct mode from among reference pictures, and outputs the first reference index rRI1 of such selected reference picture to the direct mode processing unit 910' and the variable length coding unit 903.

The variable length coding unit 903 performs variable length coding on each coded residual signal ER, first reference index RI1, second reference index RI2, first motion vector MV1, second motion vector MV2, direct mode scaling coefficient SP, type information PT, and first reference index rRI1 which is outputted by the first reference picture selection unit 701, and outputs the resultant as a bit stream BS3. In the case where display time information is used by the direct mode processing unit 910' instead of the direct mode scaling coefficient SP, the variable length coding unit 903 performs variable length coding on the display time information used for the above-performed seating without variable length coding the direct mode scaling coefficient SP, and incorporates the variable length-coded display time information into the bit stream BS3.

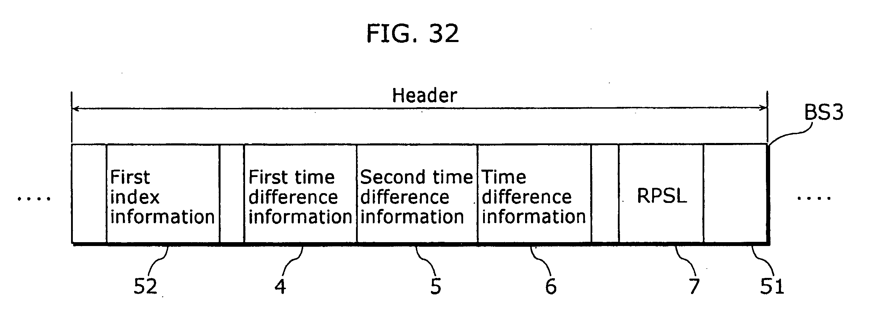

FIG. 32 shows the format of the bit stream BS3 according to the ninth embodiment.

The header is the only difference between the format of the bit stream BS3 and the format of the bit stream BS0 of the existing picture coding apparatus 900 shown in FIG. 6.

The same value is used as a first reference index rRI1 for all blocks within a picture to which direct mode shall be applied. Therefore, it is enough to code the first reference index rRI1 only once per picture. Such being the case, the variable length coding unit 903 codes the first reference index rRI1, so as to incorporate such coded first reference index rRI1 into each header 51 of the bit stream BS3 as first index information 52. Note that the header 51 may include display time information instead of the first time difference information 4 and the second time difference information 5, as well as the time difference information 6 shown in FIG. 32. The picture decoding apparatus that decodes the bit stream BS3 can specify the first reference picture for direct mode by obtaining, from the bit stream BS3, the first reference index rRI1 indicated by the first index information 52.

As described above, according to the present embodiment, by using the common first reference picture for coding all the blocks within a picture which shall be coded in direct mode, it becomes unnecessary to store information used to identify a reference picture refereed to by a scaling vector. Stated another way, it becomes possible to reduce the amount of memory of the vector buffer 914 compared with the conventional cases. Moreover, it is also possible to simplify coding processing by using the common first reference picture for coding all the blocks within a picture which shall be coded in direct mode. Also, it is possible to ensure consistency between coding processing and decoding processing by coding information indicating the first reference picture used for direct mode and by incorporating such coded information into the bit stream BS3.

Note that it is also possible to select a picture with the smallest first reference index among pictures that are located before the current picture to be coded in display order, as the first reference picture to be commonly used in direct mode.

Also, in the present embodiment, by using a preceding picture of the current picture as at least one of the reference pictures referred to by such current picture to be coded, which is a B picture, there arises no possibility that only pictures located after the current picture to be coded will be used as reference pictures. Accordingly, it becomes possible to improve coding efficiency.

Furthermore, in the present embodiment, a second reference picture may be selected in a manner equivalent to that of the third embodiment. In this case, the first index information 52 obtained by coding the first reference index rRI1 and the second index information obtained by coding the second reference index rRI2 are incorporated into the header 51 shown in FIG. 32. Moreover, the picture decoding apparatus that decodes the bit stream BS3 can specify the first reference picture and second reference picture used for direct mode by obtaining the first reference index rRI1 indicated by such first index information 52 and the second reference index rRI2 indicated by such second index information.

What is more, according to the format of the bit stream BS3 in the present embodiment, the first index information 52 obtained by coding the first reference index rRI1 is included in the header 51 on a picture-by-picture basis. However, the first index information 52 may be stored, for example, in ( i ) the header of a coding unit smaller than a picture such as an MPEG slice, ( ii ) the header of a coding unit made up of plural pictures such a GOP (Group of Picture) of MPEG, or ( iii ) the header of the whole sequence.

(Tenth Embodiment)

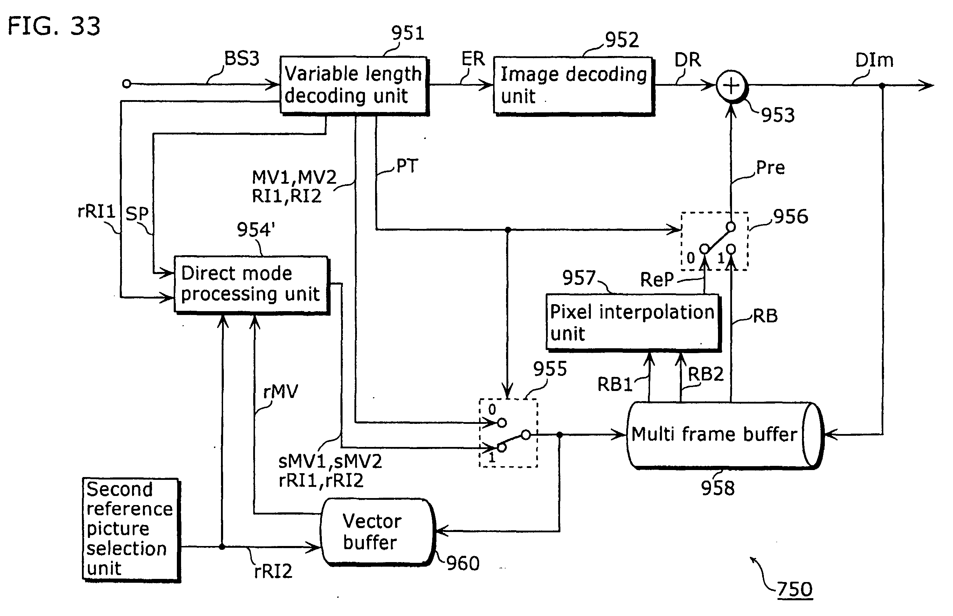

FIG. 33 is a block diagram showing a picture decoding apparatus according to the tenth embodiment.

Here, units and signals shown in FIG. 33 which are the same as those of the existing picture decoding apparatus 950 shown in FIG. 9 are assigned the same numbers as those assigned to the units and signals of the picture decoding apparatus 950, and no description is given of them.

The picture decoding apparatus 750 according to the present embodiment decodes the bit stream BS3 outputted by the picture coding apparatus 700 described in the ninth embodiment, i.e. the bit stream that includes information indicating the first reference index of the first reference picture to be commonly used for direct mode.

The variable length decoding unit 951 obtains the bit stream BS3 so as to perform variable length decoding on it, and outputs the coded residual signals ER, the first reference indices RI1, the second reference indices RI2, the first motion vectors MV1, the second motion vectors MV2, the direct mode scaling coefficients SP, the type information PT, and the first reference index rRI1 for direct mode. Here, when the bit stream BS3 includes not the coded direct mode scaling coefficients SP but coded display time information, the variable length decoding unit 951 outputs the display time information instead of the direct mode scaling coefficients SP.

The first reference index rRI1 for direct mode indicates the first reference picture to be commonly used for direct mode. Thus, there is no need for the vector buffer 960 to hold information for identifying reference pictures used for direct mode, resulting in the reduction in the amount of memory of the vector buffer 960.

As described above, according to the present embodiment, it is possible to correctly decode the bit stream BS3 outputted by the picture coding apparatus 700 in the ninth embodiment. Furthermore, by using the same reference picture for all the blocks within a picture which are coded in direct mode, it becomes unnecessary to store, on the memory, information for identifying a reference picture referred to by a scaling vector. In other words, it becomes possible to reduce the amount of memory of the vector buffer 960 compared with the conventional cases. Moreover, it is possible to obtain the same effect as described in the ninth embodiment.

(Eleventh Embodiment)

If a program for realizing the picture coding method or the picture decoding method as shown in each of the aforementioned embodiments is recorded on a recording medium such as a flexible disk, it becomes possible to easily perform the processing presented in each of the above embodiments in an independent computer system.

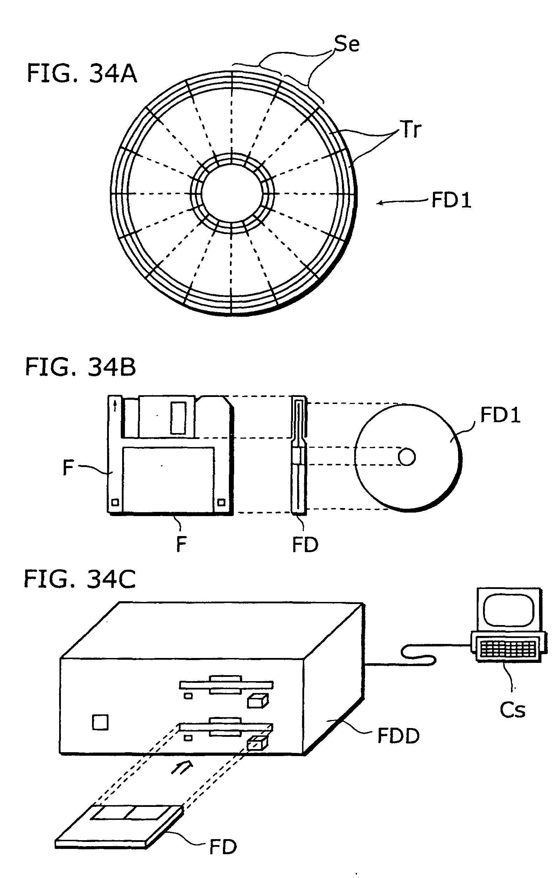

FIGS. 34A, 34B, and 34C are diagrams explaining a recording medium that stores a program for realizing the picture coding method and the picture decoding method according to the first to tenth embodiments.

FIG. 34B shows an external view of a flexible disk FD viewed from the front, a schematic cross-sectional view, and a disk body FD1, while FIG. 34A illustrates an example physical format of the disk body FD1 as a recording medium itself.

The disk body FD1 is contained in a case F, and a plurality of tracks Tr are formed concentrically on the surface of the disk body FD1 in the radius direction from the periphery, each track being divided into 16 sectors Se in the angular direction. Therefore, in the flexible disk FD storing the above-mentioned program, the picture coding method or the picture decoding method as such program is recorded in an area allocated for it on the disk body FD1.

Meanwhile, FIG. 34C shows the structure for recording and reading out the program on and from the flexible disk FD.

When the program is recorded on the flexible disk FD, the picture coding method or the picture decoding method as the above program is written by the use of the computer system Cs via a flexible disk drive FDD. Meanwhile, when the picture coding method or the picture decoding method is constructed in the computer system Cs through the program on the flexible disk FD, the program is read out from the flexible disk FD via the flexible disk drive FDD and transferred to the computer system Cs.

The above explanation is made on the assumption that a recording medium is a flexible disk FD, but an optical disc may also be used. In addition, the recording medium is not limited to this, and any other medium such as an IC card and a ROM cassette capable of recording a program can also be used.

(Twelfth Embodiment)

The following explains applications of the picture coding method and the picture decoding method as shown in the above embodiments as well as a system using them.

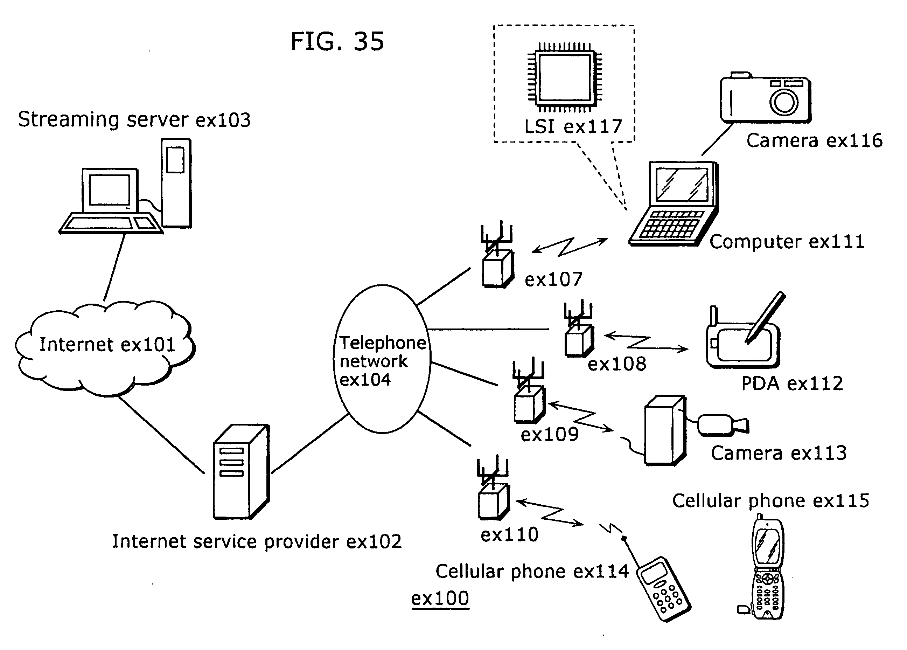

FIG. 35 is a block diagram showing an overall configuration of a content supply system ex100 for realizing a content distribution service. The area for providing a communication service is divided into cells of desired size, and base stations ex107 ~ ex110, which are fixed wireless stations, are placed in the respective cells.

In this content supply system ex100, devices such as a computer ex111, a PDA (Personal Digital Assistant) ex112, a camera ex113, a cellular phone ex114, and a camera-equipped cellular phone ex115 are respectively connected to the Internet ex101 via an Internet service provider ex102, a telephone network ex104, and the base stations ex107 ~ ex110.

However, the content supply system ex100 is not limited to the combination as shown in FIG. 35, and may be connected to a combination of any of them. Also, each of the devices may be connected directly to the telephone network ex104, not via the base stations ex107 ~ ex110, which are fixed wireless stations.

The camera ex113 is a device such as a digital video camera capable of shooting moving pictures. The cellular phone may be a cellular phone of a PDC (Personal Digital Communication) system, a CDMA (Code Division Multiple Access) system, a W-CDMA (Wideband-Code Division Multiple Access) system or a GSM (Global System for Mobile Communications) system, a PHS (Personal Handyphone system) or the like, and may be any one of these.

Furthermore, a streaming server ex103 is connected to the camera ex113 via the base station ex109 and the telephone network ex104, which enables live distribution or the like based on coded data transmitted by the user using the camera ex113. Either the camera ex113 or a server and the like capable of data transmission processing may code the shot data. Also, moving picture data shot by a camera ex116 may be transmitted to the streaming server ex103 via the computer ex111. The camera ex116 is a device such as a digital camera capable of shooting still pictures and moving pictures. In this case, either the camera ex116 or the computer ex111 may code the moving picture data. An LSI ex117 included in the computer ex111 or the camera ex116 performs coding processing. Note that software for coding and decoding pictures may be integrated into a certain type of storage medium (such as a CD-ROM, a flexible disk and a hard disk) that is a recording medium readable by the computer ex111 and the like. Furthermore, the camera-equipped cellular phone ex115 may transmit the moving picture data. This moving picture data is data coded by an LSI included in the cellular phone ex115.

In the content supply system ex100, content (e.g. a music live video) which has been shot by the user using the camera ex113, the camera ex116 or the like is coded in the same manner as the above-described embodiments and transmitted to the streaming server ex103, and the streaming server ex103 makes stream distribution of the content data to clients at their request. The clients here include the computer ex111, the PDA ex112, the camera ex113, the cellular phone ex114 and so forth capable of decoding the above coded data. The content supply system ex100 with the above configuration is a system that enables the clients to receive and reproduce the coded data and realizes personal broadcasting by allowing them to receive, decode and reproduce the data in real time.

The picture coding apparatus and the picture decoding apparatus presented in the above embodiments can be used for coding and decoding to be performed in each of the devices making up the above system.

An explanation is given of a cellular phone as an example.

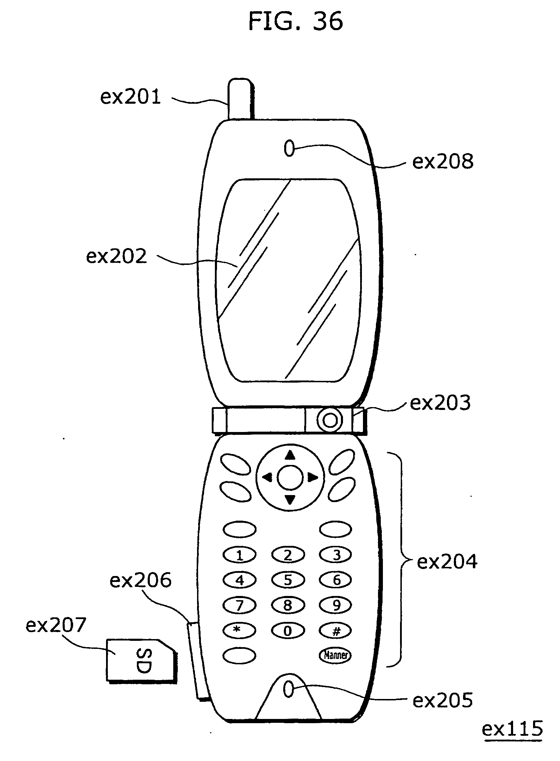

FIG. 36 is a diagram showing the cellular phone ex115 that employs the picture coding method and the picture decoding method explained in the above embodiments. The cellular phone ex115 has an antenna ex201 for transmitting/receiving radio waves to and from the base station ex110, a camera unit ex203 such as a CCD camera capable of shooting video and still pictures, a display unit ex202 such as a liquid crystal display for displaying the data obtained by decoding video and the like shot by the camera unit ex203 and video and the like received by the antenna ex201, a main body including a group of operation keys ex204, a voice output unit ex208 such as a speaker for outputting voices, a voice input unit ex205 such as a microphone for inputting voices, a recording medium ex207 for storing coded data or decoded data such as data of moving or still pictures shot by the camera, data of received e-mails and moving picture data or still picture data, and a slot unit ex206 for enabling the recording medium ex207 to be attached to the cellular phone ex115. The recording medium ex207 is embodied as a flash memory element, a kind of EEPROM (Electrically Erasable and Programmable Read Only Memory) that is an electrically erasable and rewritable nonvolatile memory, stored in a plastic case such as an SD card.

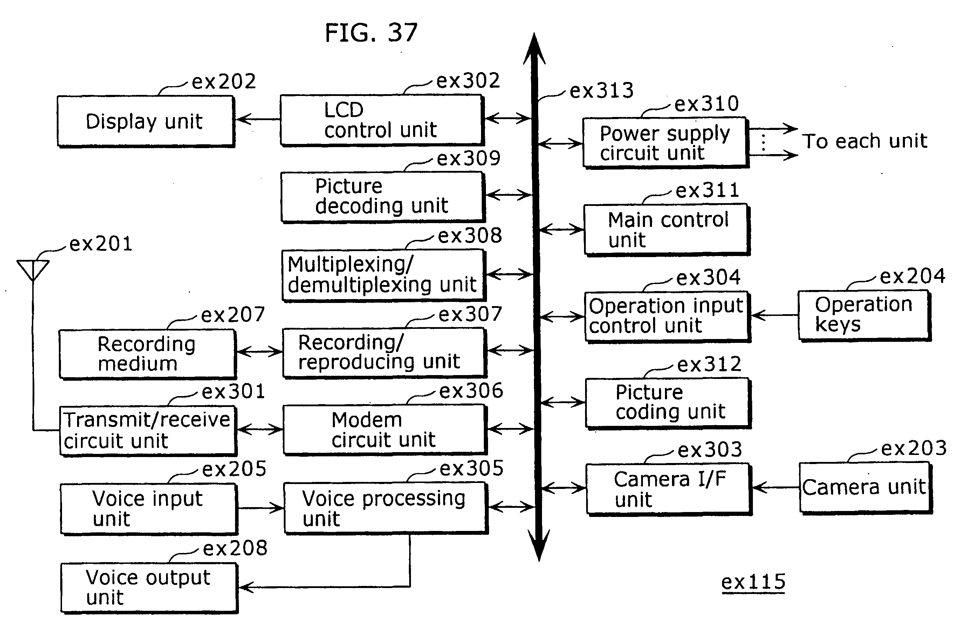

Next, referring to FIG. 37, an explanation is given of the cellular phone ex115. In the cellular phone ex115, a main control unit ex311 for centrally controlling the display unit ex202 and each unit of the main body having the operation keys ex204 is configured in a manner in which a power supply circuit unit ex310, an operation input control unit ex304, a picture coding unit ex312, a camera interface unit ex303, an LCD (Liquid Crystal Display) control unit ex302, a picture decoding unit ex309, a multiplexing/demultiplexing unit ex308, a recording/reproducing unit ex307, a modem circuit unit ex306, and a voice processing unit ex305 are interconnected via a synchronous bus ex313.

When a call-end key or a power key is turned on by the user's operation, the power supply circuit unit ex310 supplies each unit with power from a battery pack, so as to activate the camera-equipped digital cellular phone ex115 to make it into a ready state.

In the cellular phone ex115, the voice processing unit ex305 converts a voice signal received by the voice input unit ex205 in conversation mode into digital voice data under the control of the main control unit ex311 comprised of a CPU, a ROM, a RAM and others, the modem circuit unit ex306 performs spread spectrum processing on it, and a transmit/receive circuit unit ex301 performs digital-to-analog conversion processing and frequency transformation processing on the data, so as to transmit the resultant via the antenna ex201. Also, in the cellular phone ex115, data received by the antenna ex201 in conversation mode is amplified and performed of frequency transformation processing and analog-to-digital conversion processing, the modem circuit unit ex306 performs inverse spread spectrum processing on the resultant, and the voice processing unit ex305 converts it into analog voice data, so as to output it via the voice output unit ex208.

Furthermore, when sending an e-mail in data communication mode, text data of the e-mail inputted by operating the operation keys ex204 on the main body is sent out to the main control unit ex311 via the operation input control unit ex304. In the main control unit ex311, after the modem circuit unit ex306 performs spread spectrum processing on the text data and the transmit/receive circuit unit ex301 performs digital-to-analog conversion processing and frequency transformation processing on it, the resultant is transmitted to the base station ex110 via the antenna ex201.

When picture data is transmitted in data communication mode, the picture data shot by the camera unit ex203 is supplied to the picture coding unit ex312 via the camera interface unit ex303. When picture data is not to be transmitted, it is also possible to display such picture data shot by the camera unit ex203 directly on the display unit ex202 via the camera interface unit ex303 and the LCD control unit ex302.

The picture coding unit ex312, which includes the picture coding apparatus according to the present invention in its configuration, performs compression coding on the picture data supplied from the camera unit ex203 using the coding method used by the picture coding apparatus presented in the above-mentioned embodiments, so as to convert it into coded picture data, and sends it out to the multiplexing/demultiplexing unit ex308. At this time, the cellular phone ex115 sends voices received by the voice input unit ex205 while the shooting by the camera unit ex203 is taking place, to the multiplexing/demultiplexing unit ex308 as digital voice data via the voice processing unit ex305.

The multiplexing/demultiplexing unit ex308 multiplexes the coded picture data supplied from the picture coding unit ex312 and the voice data supplied from the voice processing unit ex305 using a predetermined method, the modem circuit unit ex306 performs spread spectrum processing on the resulting multiplexed data, and the transmit/receive circuit unit ex301 performs digital-to-analog conversion processing and frequency transformation processing on the resultant, so as to transmit the processed data via the antenna ex201.

When receiving, in data communication mode, data included in a moving picture file which is linked to a Web page or the like, the modem circuit unit ex306 performs inverse spread spectrum processing on the received data received from the base station ex110 via the antenna ex201, and sends out the resulting multiplexed data to the multiplexing/demultiplexing unit ex308.

In order to decode the multiplexed data received via the antenna ex201, the multiplexing/demultiplexing unit ex308 separates the multiplexed data into a bit stream of picture data and a bit stream of voice data, and supplies such coded picture data to the picture decoding unit ex309 and such voice data to the voice processing unit ex305 via the synchronous bus ex313.

Next, the picture decoding unit ex309, which includes the picture decoding apparatus according to the present invention in its configuration, decodes the bit stream of the picture data using the decoding method paired with the coding method shown in the above-mentioned embodiments 'so as to generate moving picture data for reproduction, and supplies such data to the display unit ex202 via the LCD control unit ex302. Accordingly, moving picture data included in the moving picture file linked to a Web page, for instance, is displayed. At the same time, the voice processing unit ex305 converts the voice data into analog voice data, and then supplies this to the voice output unit ex208. Accordingly, voice data included in the moving picture file linked to a Web page, for instance, is reproduced.

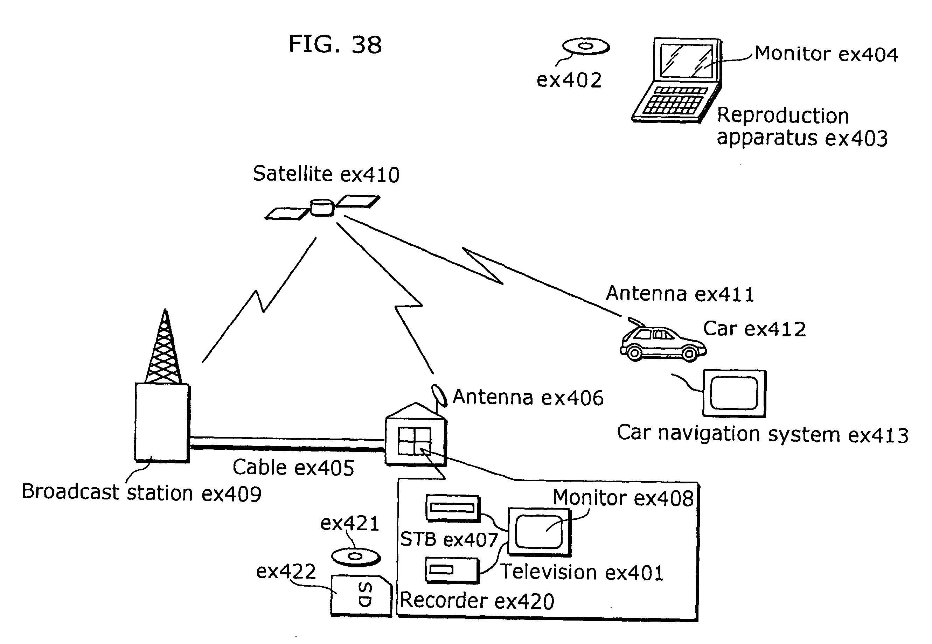

Note that the aforementioned system is not an exclusive example and therefore that at least either the picture coding apparatus or the picture decoding apparatus of the above embodiments can be incorporated into a digital broadcasting system as shown in FIG. 38, against the backdrop that satellite/terrestrial digital broadcasting has been a recent topic of conversation. To be more specific, at a broadcasting station ex409, a bit stream of video information is transmitted, by radio waves, to a satellite ex410 for communications or broadcasting. Upon receipt of it, the broadcast satellite ex410 transmits radio waves for broadcasting, an antenna ex406 of a house equipped with satellite broadcasting reception facilities receives such radio waves, and an apparatus such as a television (receiver) ex401 and a set top box (STP) ex407 decodes the bit stream and reproduces the decoded data. The picture decoding apparatus as shown in the above-mentioned embodiments can be implemented in the reproduction apparatus ex403 for reading and decoding the bit stream recorded on a storage medium ex402 that is a recording medium such as a CD and a DVD. In this case, a reproduced video signal is displayed on a monitor ex404. It is also conceived that the picture decoding apparatus is implemented in the set top box ex407 connected to a cable ex405 for cable television or the antenna ex406 for satellite/terrestrial broadcasting so as to reproduce it on a television monitor ex408. In this case, the picture decoding apparatus may be incorporated into the television, not in the set top box. Or, a car ex412 with an antenna ex411 can receive a signal from the satellite ex410, the base station ex107 or the like, so as to reproduce a moving picture on a display device such as a car navigation system ex413 mounted on the car ex412.

Furthermore, it is also possible to code a picture signal by the picture coding apparatus presented in the above embodiments and to record the resultant in a recording medium. Examples include a DVD recorder for recording a picture signal on a DVD disc ex421 and a recorder ex420 such as a disc recorder for recording a picture signal on a hard disk. Moreover, a picture signal can also be recorded in an SD card ex422. If the recorder ex420 is equipped with the picture decoding apparatus presented in the above embodiments, it is possible to reproduce a picture signal recorded on the DVD disc ex421 or in the SD card ex422, and display it on the monitor ex408.

As the configuration of the car navigation system ex413, the configuration without the camera unit ex203 and the camera interface unit ex303, out of the configuration shown in FIG. 37, is conceivable. The same is applicable to the computer ex111, the television (receiver) ex401 and the like.

Concerning the terminals such as the cellular phone ex114, a transmitting/receiving terminal having both an encoder and a decoder, as well as a transmitting terminal only with an encoder, and a receiving terminal only with a decoder are possible as forms of implementation.

As stated above, it is possible to employ the picture coding method and the picture decoding method presented in the above embodiments into any one of the above-described devices and systems. Accordingly, it becomes possible to achieve an effect described in the aforementioned embodiments.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

**Industrial Applicability**

The picture coding method and the picture decoding method according to the present invention is suited for use in a picture coding apparatus for coding a moving picture and a picture decoding apparatus for decoding the coded moving picture, as well as in a system equipped with these apparatuses such as a content supply system for supplying content like digital work and a digital broadcast system.

## Claims

1. A picture coding method for coding a current picture to be coded on a block-by-block basis with reference to already coded pictures, comprising:

   a second reference picture selection step of selecting, as a second reference picture, any one of coded pictures located after the current picture in display order;
   a first reference picture specification step of specifying, as a first reference picture, any one of coded pictures based on a motion vector used for coding a predetermined block in the second reference picture;
   a predictive image generation step of specifying a block in the first reference picture and a block in the second reference picture based on the motion vector, and generating a predictive image from said two blocks through pixel interpolation;
   a coding step of coding a difference between the predictive image and an image of a current block to be coded; and
   an output step of outputting specification information for specifying the second reference picture, together with a result of the coding performed in the coding step.

2. The picture coding method according to Claim 1, wherein in the output step, the specification information that includes a second reference index indicating the second reference picture is outputted.

3. The picture coding method according to Claim 1, wherein in the output step, information indicating a method for changing second reference indices is outputted as the specification information, said second reference indices being assigned to the respective coded pictures in order to identify said coded pictures.

4. A picture coding method for coding a current picture to be coded on a block-by-block basis with reference to already coded pictures, comprising:

   a second reference picture selection step of selecting, as a second reference picture, a coded picture from among coded pictures that are located after the current picture in display order, said coded picture being assigned a smallest second reference index of all second reference indices assigned to the respective coded pictures in order to identify said coded pictures;
   a first reference picture specification step of specifying, as a first reference picture, any one of coded pictures based on a motion vector used for coding a predetermined block in the second reference picture;
   a predictive image generation step of specifying a block in the first reference picture and a block in the second reference picture based on the motion vector, and generating a predictive image from said two blocks through pixel interpolation; and
   a coding step of coding a difference between the predictive image and an image of a current block to be coded.

5. The picture coding method according to Claim 4, wherein in the second reference picture selection step, the coded picture with the smallest second reference index is specified according to assignment information indicating how the second reference indices are assigned, and said specified coded picture is selected as the second reference picture.

6. A picture coding method for coding a current picture to be coded on a block-by-block basis with reference to already coded pictures, comprising:

   an assignment step of assigning, to respective coded pictures, second reference indices for identifying said coded pictures in a manner in which a second reference index indicating 0 is assigned to any one of coded pictures located after the current picture in display order;
   a re-assignment step, in which it is possible to re-assign the second reference indices in a manner different from the manner used in the assignment step, of assigning the second reference index indicating 0 only to any one of the coded pictures located after the current picture in display order;
   a second reference picture selection step of selecting, as a second reference picture, the coded picture assigned the second reference index indicating 0 from among the coded pictures located after the current picture in display order;
   a first reference picture specification step of specifying, as a first reference picture, any one of the coded pictures based on a motion vector used for coding a predetermined block in the second reference picture;
   a predictive image generation step of specifying a block in the first reference picture and a block in the second reference picture based on the motion vector, and generating a predictive image from said two blocks through pixel interpolation; and
   a coding step of coding a difference between the predictive image and an image of a current block to be coded.

7. The picture coding method according to Claim 6,

wherein in the re-assignment step, it is prohibited to change the second reference index of the coded picture which is assigned the second reference index indicating 0 in the assignment step.

8. A picture coding method for coding a current picture to be coded on a block-by-block basis with reference to already coded pictures, comprising:

an assignment step of assigning, to respective coded pictures, first reference indices for identifying said coded pictures;

a re-assignment step of re-assigning the first reference indices to predetermined coded pictures or slices in a manner different from the manner used in the assignment step;

a first reference picture selection step of selecting, as a first reference picture, a coded picture assigned a first reference index indicating a predetermined value, from among coded pictures located before the current picture in display order;

a predictive image generation step of generating a predictive image through pixel interpolation based on a predetermined block in the first reference picture; and

a coding step of coding a difference between the predictive image and an image of a current block to be coded,

wherein in the re-assignment step, the first reference index indicating said predetermined value is assigned preferentially to the coded picture which is referred to for a long period of time.

9. A picture coding method for coding a current picture to be coded on a block-by-block basis with reference to already coded pictures, comprising:

an assignment step of assigning, to respective coded pictures, second reference indices for identifying said coded pictures;

a second reference picture selection step of selecting, as a second reference picture, a coded picture which is assigned a second reference index indicating 0, from among coded pictures located after the current picture in display order;

a first reference picture specification step of specifying, as a first reference picture, any one of the coded pictures based on a motion vector used for coding a predetermined block in the second reference picture;

a predictive image generation step of specifying a block in the first reference picture and a block in the second reference picture based on the motion vector, and generating a predictive image from said two blocks through pixel interpolation; and

a coding step of coding a difference between the predictive image and an image of a current block to be coded,

wherein in the assignment step, the second reference index indicating 0 is prohibited from being assigned to a coded picture that has been located before the current picture in display order.

10. The picture coding method according to Claim 9, further comprising a deletion step of deleting, from a memory storing motion vectors used for coding the coded pictures, a motion vector used for coding the coded picture that has been located before the current picture in display order.

11. A picture coding method for coding a current picture to be' coded on a block-by-block basis with reference to already coded pictures, comprising:

a selection step of selecting, from among a plurality of coded pictures stored in a storage unit, a coded picture corresponding to a first reference index as a first reference picture and a coded picture corresponding to a second reference index as a second reference picture, by use of said first reference index and said second reference index assigned to said plurality of coded pictures;

a predictive image generation step of generating a predictive image from a block in the first reference picture and a block in the second reference picture through pixel interpolation; and

an output step of coding a prediction error which is a difference between the current picture and the predictive image, and outputting a coded picture signal that includes a signal obtained by coding said prediction error,

wherein in the selection step, the coded picture which satisfies the following condition is selected as the first reference picture from among the coded pictures: a coded picture which is located before the current picture in display order and which is assigned a smallest reference index, and

in the predictive image generation step, ( i ) a second motion vector of a block which refers to the first reference picture is calculated, based on a first motion vector used to code said block which is in the second reference picture and co-located with a current block to be coded in the current picture, ( ii ) a third motion vector of the current block which refers to the first reference picture is calculated and a fourth motion vector of the current block which refers to the second reference picture is calculated, both based on said second motion vector, and ( iii ) the predictive image is generated through pixel interpolation from a block in the first reference picture referred to by the third motion vector and a block in the second reference picture referred to by the fourth motion vector.

**12.** A picture coding method for coding a current picture to be coded on a block-by-block basis with reference to already coded pictures, comprising:

a selection step of selecting, from among a plurality of coded pictures stored in a storage unit, a coded picture corresponding to a first reference index as a first reference picture and a coded picture corresponding to a second reference index as a second reference picture, by use of said first reference index and said second reference index assigned to said plurality of coded pictures;

a predictive image generation step of generating a predictive image from a block in the first reference picture and a block in the second reference picture through pixel interpolation; and

an output step of coding a prediction error which is a difference between the current picture and the predictive image, and outputting a coded picture signal that includes a signal obtained by coding said prediction error,

wherein in the selection step, the coded picture located before the current picture in display order is selected as the first reference picture from among the coded pictures,

in the predictive image generation step, ( i ) a second motion vector of a block which refers to the first reference picture is calculated, based on a first motion vector used to code said block which is in the second reference picture and co-located with a current block to be coded in the current picture, ( ii ) a third motion vector of the current block which refers to the first reference picture is calculated and a fourth motion vector of the current block which refers to the second reference picture is calculated, both based on said second motion vector, and ( iii ) the predictive image is generated through pixel interpolation from a block in the first reference picture referred to by the third motion vector and a block in the second reference picture referred to by the fourth motion vector, and

in the output step, the first reference index indicating the first reference picture selected in the selection step is incorporated into the coded picture signal.

**13.** The picture coding method according to Claim 12, further comprising a step of prohibiting information from being stored into a memory, said information indicating a coded picture referred to by the first motion vector.

**14.** A picture decoding method for decoding a coded picture on a block-by-block basis with reference to already decoded pictures, comprising:

an obtainment step of obtaining specification information and a coded signal, the specification information being used for specifying, as a second reference picture, a decoded picture to be referred to for decoding a current picture to be decoded and the coded signal being related to said current picture;

a second reference picture selection step of selecting the second reference picture from among decoded pictures that are located after the current picture in display order based on the specification information;

a first reference picture specification step of specifying, as a first reference picture, any one of decoded pictures based on a motion vector used for decoding a predetermined block in the second reference picture;

a predictive image generation step of specifying a block in the first reference picture and a block in the second reference picture based on the motion vector, and generating a predictive image from said two blocks through pixel interpolation; and

a decoding step of decoding a current block to be decoded based on the predictive image and the coded signal.

**15.** The picture decoding method according to Claim 14,

wherein in the obtainment step, the specification information that includes a second reference index indicating the second reference picture is obtained, and

in the second reference picture selection step, the second reference picture indicated by said second reference index is selected.

**16.** The picture decoding method according to Claim 14,

wherein in the obtainment step, the specification information that indicates a method for changing second reference indices is obtained, said second reference indices being assigned to the respective decoded pictures in order to identify said decoded pictures, and

in the second reference picture selection step, the decoded picture indicated by said method for changing the second reference indices is selected as the second reference picture.

**17.** A picture decoding method for decoding a coded picture on a block-by-block basis with reference to already decoded pictures, comprising:

an obtainment step of obtaining a coded signal related to a current picture to be decoded;

a second reference picture selection step of selecting, as a second reference picture, a decoded picture from among decoded pictures that are located after the current picture in display order, said decoded picture being assigned a smallest second reference index of all second reference indices assigned to the respective decoded pictures in order to identify said decoded pictures,;

a first reference picture specification step of specifying, as a first reference picture, any one of the decoded pictures based on a motion vector used for decoding a predetermined block in the second reference picture;

a predictive image generation step of specifying a block in the first reference picture and a block in the second reference picture based on the motion vector, and generating a predictive image from said two blocks through pixel interpolation; and

a decoding step of decoding a current block to be decoded based on the predictive image and the coded signal.

18. The picture decoding method according to Claim 17,

wherein in the second reference picture selection step, the decoded picture with the smallest second reference index is specified according to assignment information indicating how the second reference indices are assigned, and said specified decoded picture is selected as the second reference picture.

19. A picture decoding method for decoding a coded picture on a block-by-block basis with reference to already decoded pictures, comprising:

an obtainment step of obtaining a coded signal related to a current picture to be decoded;

a second reference picture selection step of selecting, as a second reference picture, a decoded picture with a second reference index of 0, from among decoded pictures which are located after the current picture in display order and which are assigned second reference indices in order to identify said respective decoded pictures;

a first reference picture specification step of specifying, as a first reference picture, any one of decoded pictures based on a motion vector used for decoding a predetermined block in the second reference picture;

a predictive image generation step of specifying a block in the first reference picture and a block in the second reference picture based on the motion vector, and generating a predictive image from said two blocks through pixel interpolation;

a decoding step of decoding a current block to be decoded based on the predictive image and the coded signal, and

a deletion step of deleting, from a memory storing motion vectors used for decoding the decoded pictures, a motion vector used for decoding a decoded picture that has been located before the current picture in display order.

20. A picture decoding method for decoding a coded picture on a block-by-block basis with reference to already decoded pictures, comprising:

an obtainment step of obtaining a coded signal indicating a prediction error;

a selection step of selecting, from among a plurality of decoded pictures stored in a storage unit, a decoded picture corresponding to a first reference index as a first reference picture and a decoded picture corresponding to a second reference index as a second reference picture, by use of said first reference index and said second reference index assigned to said plurality of decoded pictures;

a predictive image generation step of generating a predictive image from a block in the first reference picture and a block in the second reference picture through pixel interpolation;

a decoding step of decoding the current picture to be decoded according to the predictive image and the prediction error; and

a storage step of storing, in the storage unit, a decoded picture with a possibility to be used as a reference picture,

wherein in the selection step, the decoded picture which satisfies the following condition is selected as the first reference picture from among the decoded pictures: a decoded picture which is located before the current picture in display order and which is assigned a smallest first reference index, and

in the predictive image generation step, ( i ) a second motion vector of a block which refers to the first reference picture is calculated, based on a first motion vector used to decode said block which is in the second reference picture and co-located with a current block to be decoded in the current picture, ( ii ) a third motion vector of the current block which refers to the first reference picture is calculated and a fourth motion vector of the current block which refers to the second reference picture is calculated, both based on said second motion vector, and (iii) the predictive image is generated through pixel interpolation from a block in the first reference picture referred to by the third motion vector and a block in the second reference picture referred to by the fourth motion vector.

**21.** A picture decoding method for decoding a coded picture on a block-by-block basis with reference to already decoded pictures, comprising:

an obtainment step of obtaining a coded picture signal that includes a coded picture signal indicating a prediction error;

a selection step of selecting, from among a plurality of decoded pictures stored in a storage unit, a decoded picture corresponding to a first reference index as a first reference picture and a decoded picture corresponding to a second reference index as a second reference picture, by use of said first reference index and said second reference index assigned to said plurality of decoded pictures;

a predictive image generation step of generating a predictive image from a block in the first reference picture and a block in the second reference picture through pixel interpolation;

a decoding step of decoding the current picture to be decoded according to the predictive image and the prediction error; and

a storage step of storing, in the storage unit, a decoded picture with a possibility to be used as a reference picture,

wherein in the selection step, the decoded picture indicated by the first reference index included in the coded picture signal is selected as the first reference picture from among the decoded pictures:, and

in the predictive image generation step, ( i ) a second motion vector of a block which refers to the first reference picture is calculated, based on a first motion vector used to decode said block which is in the second reference picture and co-located with a current block to be decoded in the current picture, ( ii ) a third motion vector of the current block which refers to the first reference picture is calculated and a fourth motion vector of the current block which refers to the second reference picture is calculated, both based on said second motion vector, and ( iii ) the predictive image is generated through pixel interpolation from a block in the first reference picture referred to by the third motion vector and a block in the second reference picture referred to by the fourth motion vector.

**22.** A picture coding apparatus for coding a current picture to be coded on a block-by-block basis with reference to already coded pictures, comprising:

a second reference picture selection unit operable to select, as a second reference picture, any one of coded pictures located after the current picture in display order;

a first reference picture specification unit operable to specify, as a first reference picture, any one of coded pictures based on a motion vector used for coding a predetermined block in the second reference picture;

a predictive image generation unit operable to specify a block in the first reference picture and a block in the second reference picture based on the motion vector, and generate a predictive image from said two blocks through pixel interpolation;

a coding unit operable to code a difference between the predictive image and an image of a current block to be coded; and

an output unit operable to output specification information for specifying the second reference picture, together with a result of the coding performed by the coding unit.

**23.** A picture decoding apparatus for decoding a coded picture on a block-by-block basis with reference to already decoded pictures, comprising:

an obtainment unit operable to obtain specification information and a coded signal, the specification information being used for specifying, as a second reference picture, a decoded picture to be referred to for decoding a current picture to be decoded and the coded signal being related to said current picture;

a second reference picture selection unit operable to select the second reference picture from among decoded pictures that are located after the current picture in display order based on the specification information;

a first reference picture specification unit operable to specify, as a first reference picture, any one of decoded pictures based on a motion vector used for decoding a predetermined block in the second reference picture;

a predictive image generation unit operable to specify.a block in the first reference picture and a block in the second reference picture based on the motion vector, and generate a predictive image from said two blocks through pixel interpolation; and

a decoding unit operable to decode a current block to be decoded based on the predictive image and the coded signal.

**24.** A program for causing a computer to execute a picture coding method for coding a current picture to be coded on a block-by-block basis with reference to already coded pictures, comprising:

a second reference picture selection step of selecting, as a second reference picture, any one of coded pictures located after the current picture in display order;

a first reference picture specification step of specifying, as a first reference picture, any one of coded pictures based on a motion vector used for coding a predetermined block in the second reference picture;

a predictive image generation step of specifying a block in the first reference picture and a block in the second reference picture based on the motion vector, and generating a predictive image from said two blocks through pixel interpolation;

a coding step of coding a difference between the predictive image and an image of a current block to be coded; and

an output step of outputting specification information for specifying the second reference picture, together with a result of the coding performed in the coding step.

**25.** A program for causing a computer to execute a picture decoding method for decoding a coded picture on a block-by-block basis with reference to already decoded pictures, comprising:

an obtainment step of obtaining specification information and a coded signal, the specification information being used for specifying, as a second reference picture, a decoded picture to be referred to for decoding a current picture to be decoded and the coded signal being related to said current picture;

a second reference picture selection step of selecting the second reference picture from among decoded pictures that are located after the current picture in display order based on the specification information;

a first reference picture specification step of specifying, as a first reference picture, any one of decoded pictures based on a motion vector used for decoding a predetermined block in the second reference picture;

a predictive image generation step of specifying a block in the first reference picture and a block in the second reference picture based on the motion vector, and generating a predictive image from said two blocks through pixel interpolation; and

a decoding step of decoding a current block to be decoded based on the predictive image and the coded signal.

FIG. 1

# FIG. 2

RB1

| X1(0) | X1(1) | X1(2) | X1(3) |
|-------|-------|-------|-------|
| X1(4) | X1(5) | X1(6) | X1(7) |
| X1(8) | X1(9) | X1(10) | X1(11) |
| X1(12) | X1(13) | X1(14) | X1(15) |

RB2

| X2(0) | X2(1) | X2(2) | X2(3) |
|-------|-------|-------|-------|
| X2(4) | X2(5) | X2(6) | X2(7) |
| X2(8) | X2(9) | X2(10) | X2(11) |
| X2(12) | X2(13) | X2(14) | X2(15) |

Interpolation processing

PB

| P(0) | P(1) | P(2) | P(3) |
|------|------|------|------|
| P(4) | P(5) | P(6) | P(7) |
| P(8) | P(9) | P(10) | P(11) |
| P(12) | P(13) | P(14) | P(15) |

$$P(i) = A \cdot X1(i) + B \cdot X2(i) + C$$

# FIG. 3

EP 1 427 216 A1

# FIG. 4

Display time

P1     P4     P3     P5     P2

P     B     B     B     P

Display order →

FIG. 5A

| | P | B | B | B | B | B | P |
|---|---|---|---|---|---|---|---|
| Picture number | 10 | 12 | 14 | | 15 | 13 | 11 |
| First reference index | 2 | 1 | 0 | | 3 | 4 | 5 |
| Second reference index | 5 | 4 | 3 | | 0 | 1 | 2 |

Display order →

FIG. 5B

| | P | B | B | B | B | B | P |
|---|---|---|---|---|---|---|---|
| Picture number | 10 | 12 | 14 | | 15 | 13 | 11 |
| First reference index | 1 | 0 | 2 | | 3 | 4 | 5 |
| Second reference index | 5 | 4 | 0 | | 1 | 2 | 3 |

EP 1 427 216 A1

# FIG. 6

EP 1 427 216 A1

FIG. 7

## FIG. 8

Picture

BSO

.... | Header | | Coded first block signal | | Coded second block signal | | ....

1   2   3

| First time difference information | Second time difference information | Time difference information | RPSL |

4   5   6   7

| Coded type signal | | Coded first index signal | Coded second index signal | Coded MV1 signal | Coded MV2 signal | |

9   10   11   12   13

| Coded type signal | |

8

EP 1 427 216 A1

FIG. 9

# FIG. 10

EP 1 427 216 A1

## FIG. 11

Picture

| | Header | | Coded first block signal | | Coded second block signal | | | BS
|---|---|---|---|---|---|---|---|---|

. . . .   21   22   23   . . . .

| First time difference information | Second time difference information | Time difference information | Coded remapping information |
|---|---|---|---|

24   25   26   27

| Coded type signal | Coded first index signal | Coded second index signal | Coded MV1 signal | Coded MV2 signal | |
|---|---|---|---|---|---|

29   30   31   32   33

| | Coded type signal | |
|---|---|---|

28

EP 1 427 216 A1

# FIG. 12

Start

Picture with smallest second reference index out of pictures located later in display order

‖

Second reference picture ⟋S100

Specify scaling vector and first reference picture from second reference picture ⟋S102

Generate predictive image in direct mode ⟋S104

Generate prediction error ⟋S106

Coding ⟋S108

End

EP 1 427 216 A1

**FIG. 13A**

| | Picture number | 10 | 12 | 14 | | 15 | 13 | 11 |
|---|---|---|---|---|---|---|---|---|
| | First reference index | 2 | 1 | 0 | | 3 | 4 | 5 |
| | Second reference index | 5 | 4 | 3 | | 0 | 1 | 2 |

Display order →

(P B B B B B P)

**FIG. 13B**

Display order →

(P B B B B B P)

| | Picture number | 10 | 12 | 14 | | 15 | 13 | 11 |
|---|---|---|---|---|---|---|---|---|
| | First reference index | 1 | 0 | 2 | | 3 | 4 | 5 |
| | Second reference index | 5 | 4 | 0 | | 2 | 1 | 3 |
| | Remapping information | | | -1 | | +4 | 0 | -3 |

EP 1 427 216 A1

# FIG. 14

Display time

P1　　　P3　　　P4　　　P2　　　P6　　　P7　　　P5

| P | B | B | P | B | B | P |

FIG. 15

EP 1 427 216 A1

# FIG. 16

Start

Picture with smallest second reference index out of pictures located later in display order
‖
Second reference picture
S150

Specify scaling vector and first reference picture from second reference picture
S152

Generate predictive image in direct mode
S154

Predictive image + residual
S156

End

FIG. 17

EP 1 427 216 A1

FIG. 18

Header

BS1

| Second index information | First time difference information | Second time difference information | Time difference information | Coded remapping information |
|---|---|---|---|---|
| 42 | 24 | 25 | 26 | 27 |

41

# FIG. 19

```
        ( Start )
            │
            ▼
```

| Any one of pictures located later in display order<br>‖<br>Second reference picture | S200 |

```
            │
            ▼
```

| Specify scaling vector and first<br>reference picture from second<br>reference picture | S202 |

```
            │
            ▼
```

| Generate predictive image<br>in direct mode | S204 |

```
            │
            ▼
```

| Generate prediction error | S206 |

```
            │
            ▼
```

| Prediction error<br>Remapping information ⎫<br>Second reference index rRI2 ⎬ Code | S208 |

```
            │
            ▼
        ( End )
```

FIG. 20

EP 1 427 216 A1

# FIG. 21

Start

Remapping information
Second reference index } Obtain — S250

Specify scaling vector and first
reference picture from second
reference picture corresponding
to second reference index — S252

Generate predictive image
in direct mode — S254

Predictive image + residual — S256

End

FIG. 22

# FIG. 23

(a) Long-term memory | Short-term memory — with labels A, B, A', RP1, RP2, RP3, TP, RP4, RP5, and P/B picture sequence.

(b)

| | | | | | |
|---|---|---|---|---|---|
| First reference index | 4 | 1 | 0 | 2 | 3 |
| Second reference index | 4 | 3 | 2 | 0 | 1 |

(c)

| | | | | | |
|---|---|---|---|---|---|
| First reference index | 0 | 2 | 1 | 3 | 4 |
| Second reference index | 4 | 3 | 2 | 0 | 1 |

(d)

| | | | | | |
|---|---|---|---|---|---|
| First reference index | 4 | 1 | 0 | 2 | 3 |
| Second reference index | 2 | 4 | 3 | 1 | 0 |
| | 2 | 4 | 3 | 0 | 1 |

EP 1 427 216 A1

## FIG. 24

Start

S300

Any scene change?    N

Y    S302

Remapping

o Assign first reference index of 0 to reference picture in long-term memory

o Assign second reference index of 0 to reference picture subsequent to current picture to be coded

S304

No remapping

Generate predictive image    S306

Generate prediction error    S308

Coding    S310

End

FIG. 25

FIG. 26

EP 1 427 216 A1

FIG. 27

EP 1 427 216 A1

FIG. 28

# FIG. 29

Start

S1
Determine B1 on RP1 co-located with block Bn referred to by vector MV10 of B00

S2
Regard MV0 extending from B00 to B1 as scaling vector

S3
Perform scaling on vector MV01 extending from B0 to RB01 on RP1 and on vector MV02 extending from B0 to RB02 on RP3

End

FIG. 30

FIG. 31

FIG. 32

Header

BS3

.... | | First index information | | First time difference information | Second time difference information | Time difference information | | RPSL | | .... |

52    4    5    6    7    51

EP 1 427 216 A1

# FIG. 33

EP 1 427 216 A1

FIG. 34A

Se

Tr

FD1

FIG. 34B

F

F

FD

FD1

FIG. 34C

FDD

Cs

FD

# FIG. 35

Streaming server ex103

LSI ex117

Camera ex116

Computer ex111

ex107

Internet ex101

Telephone network ex104

ex108

PDA ex112

ex109

Camera ex113

Internet service provider ex102

ex110

Cellular phone ex115

Cellular phone ex114

ex100

EP 1 427 216 A1

# FIG. 36

ex115

## FIG. 37

**Display unit** — ex202

**LCD control unit** — ex302

ex313

**Power supply circuit unit** — ex310 → To each unit

**Picture decoding unit** — ex309

**Main control unit** — ex311

ex201

**Multiplexing/ demultiplexing unit** — ex308

**Operation input control unit** — ex304 ← **Operation keys** — ex204

**Recording medium** — ex207

**Recording/ reproducing unit** — ex307

**Transmit/receive circuit unit** — ex301

**Modem circuit unit** — ex306

**Picture coding unit** — ex312

**Voice input unit** — ex205

**Voice processing unit** — ex305

**Camera I/F unit** — ex303 ← **Camera unit** — ex203

**Voice output unit** — ex208

ex115

EP 1 427 216 A1

## FIG. 38

Monitor ex404

ex402

Reproduction apparatus ex403

Satellite ex410

Antenna ex411

Car ex412

Antenna ex406

Car navigation system ex413

Cable ex405

Broadcast station ex409

ex421

Monitor ex408

STB ex407

ex422

Television ex401

Recorder ex420

EP 1 427 216 A1

**INTERNATIONAL SEARCH REPORT**

| | International application No. |
|---|---|
| | PCT/JP03/07242 |

| A. CLASSIFICATION OF SUBJECT MATTER |
|---|
| Int.Cl⁷ H04N7/32, H03M7/36 |

According to International Patent Classification (IPC) or to both national classification and IPC

| B. FIELDS SEARCHED |
|---|
| Minimum documentation searched (classification system followed by classification symbols)<br>Int.Cl⁷ H04N7/12, H04N7/24-7/68 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2003 |
| Kokai Jitsuyo Shinan Koho | 1971-2003 | Toroku Jitsuyo Shinan Koho | 1994-2003 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br><br>A | Video Coding Experts Group(VCEG), H.26L Test Model Long Term Number 6(TML-6) draft0. [online]. 2001, pages 28 to 33, [retrieved on 2003-05-28], Retrieved from the Internet: <URL:http://kbs.cs. tu-berlin.de/~stewe/vceg/archive.htm#TML6>. | 1-3,14-16, 22-25<br>4-7,9-13, 17-21 |
| X | JP 7-184206 A (Mitsubishi Electric Corp.), 21 July, 1995 (21.07.95), Par. Nos. [0020] to [0023]; Fig. 1 (Family: none) | 8 |
| X | JP 4-127689 A (Hitachi, Ltd.), 28 April, 1992 (28.04.92), Full text; Figs. 1 to 3 (Family: none) | 8 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 August, 2003 (01.08.03) | 19 August, 2003 (19.08.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

| International application No. |
| --- |
| PCT/JP03/07242 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 3-265392 A  (Nippon Telegraph And Telephone Corp.), <br> 26 November, 1991 (26.11.91), <br> Full text; Figs. 1 to 6 <br> (Family: none) | 8 |

Form PCT/ISA/210 (continuation of second sheet) (July 1998)

## INTERNATIONAL SEARCH REPORT

International application No.

PCT/JP03/07242

**Box I    Observations where certain claims were found unsearchable (Continuation of item 2 of first sheet)**

This international search report has not been established in respect of certain claims under Article 17(2)(a) for the following reasons:

1. ☐ Claims Nos.:

   because they relate to subject matter not required to be searched by this Authority, namely:

2. ☐ Claims Nos.:

   because they relate to parts of the international application that do not comply with the prescribed requirements to such an extent that no meaningful international search can be carried out, specifically:

3. ☐ Claims Nos.:

   because they are dependent claims and are not drafted in accordance with the second and third sentences of Rule 6.4(a).

**Box II    Observations where unity of invention is lacking (Continuation of item 3 of first sheet)**

This International Searching Authority found multiple inventions in this international application, as follows:

    Claims 1-7, 9, 10, 14-19, 22-25 intend to avoid selecting two encoded pictures
ahead in display sequence a picture to be encoded by selecting as a second
reference picture an encoded picture behind in display sequence the picture
to be encoded, and claims 8, 11-13, 20, 21 select as a first reference picture
an encoded picture ahead in display sequence a picture to be encoded, therefore
no special technical feature common to claims 1-7, 9, 10, 14-19, 22-25 and
claims 8, 11-13, 20, 21 exists within the meaning of PCT Rule 13.2, second
sentence.  Selecting as a first reference picture an encoded picture ahead
in display sequence a picture to be encoded is publicly known, and therefore
(continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐    The additional search fees were accompanied by the applicant's protest.

    ☒    No protest accompanied the payment of additional search fees.

Form PCT/ISA/210 (continuation of first sheet (1)) (July 1998)

**INTERNATIONAL SEARCH REPORT**

| International application No. |
|---|
| PCT/JP03/07242 |

Continuation of Box No.II of continuation of first sheet(1)

there is no special technical feature common to claim 8 and claims 11-13, 20, 21. Accordingly, it is clear that claims (1-7, 9, 10, 14-19, 22-25), 8, (11-13, 20, 21) do not fulfill the requirement of unity of invention.

Form PCT/ISA/210 (extra sheet) (July 1998)